(19) Europäisches Patentamt / European Patent Office / Office européen des brevets

(11) **EP 4 664 725 A1**

(12) **EUROPEAN PATENT APPLICATION**
published in accordance with Art. 153(4) EPC

(43) Date of publication:
**17.12.2025   Bulletin 2025/51**

(21) Application number: **24753169.2**

(22) Date of filing: **29.01.2024**

(51) International Patent Classification (IPC):
*H02J 50/80* (2016.01)   *H02J 7/00* (2006.01)
*H02J 50/10* (2016.01)   *H02J 50/60* (2016.01)
*H02J 50/90* (2016.01)

(52) Cooperative Patent Classification (CPC):
**H02J 7/00; H02J 50/10; H02J 50/60; H02J 50/80; H02J 50/90**

(86) International application number:
**PCT/JP2024/002620**

(87) International publication number:
**WO 2024/166725 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **10.02.2023   JP 2023019402**
**25.07.2023   JP 2023120683**

(71) Applicant: **CANON KABUSHIKI KAISHA**
**Ohta-ku**
**Tokyo 146-8501 (JP)**

(72) Inventor: **SHIMURA, Hajime**
**Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **POWER RECEIVING DEVICE, POWER TRANSMITTING DEVICE, COMMUNICATION METHOD, AND PROGRAM**

(57)     A power receiving apparatus (200) transmits an identification data packet and an extended identification data packet to a power transmission apparatus (100). The identification data packet contains information that identifies the power receiving apparatus (200). The extended identification data packet contains information that indicates a power profile.

EP 4 664 725 A1

FIG. 15

**Description**

Technical Field

The present disclosure relates to a wireless power transfer technology.

Background Art

In a wireless power transfer system, a power transmission apparatus transmits electric power to a power receiving apparatus placed on a charging base or the like. There is a need for faster charging in wireless charging. PTL 1 describes control in fast wireless charging.

Citation List

Patent Literature

PTL 1: Japanese Patent Laid-Open No. 2018-108014

Summary of Invention

Technical Problem

High-power transmission is performed in fast wireless charging; however, with the existing technology, there is a possibility that high power transmission cannot be appropriately performed depending on the states of the power transmission apparatus and the power receiving apparatus. The present disclosure aims to provide a technology that enables appropriate fast wireless charging.

Solution to Problem

A power receiving apparatus of the present disclosure includes a power receiving unit configured to wirelessly receive electric power from a power transmission apparatus, and a transmission unit configured to transmit an identification data packet and an extended identification data packet to a power transmission apparatus, the identification data packet containing information that identifies the power receiving apparatus, the extended identification data packet containing information that indicates a power profile.

According to the present disclosure, it is possible to perform appropriate fast wireless charging.

Brief Description of Drawings

[Fig. 1] Fig. 1 is a diagram that shows a configuration example of a wireless power transfer system.
[Fig. 2] Fig. 2 is a diagram that shows a configuration example of a power transmission apparatus.
[Fig. 3] Fig. 3 is a diagram that shows a configuration example of a power receiving apparatus.
[Fig. 4] Fig. 4 is a graph that illustrates a threshold setting method in state detection using a power loss method.
[Fig. 5A] Fig. 5A is a diagram that illustrates a quality factor measurement method.
[Fig. 5B] Fig. 5B is a graph that illustrates the quality factor measurement method.
[Fig. 6] Fig. 6 is a block diagram that shows a functional configuration example of a control unit of the power transmission apparatus.
[Fig. 7] Fig. 7 is a flowchart that illustrates the process of the power transmission apparatus.
[Fig. 8] Fig. 8 is a flowchart that illustrates the process of the power receiving apparatus.
[Fig. 9] Fig. 9 is a diagram that illustrates state detection using a waveform attenuation method.
[Fig. 10] Fig. 10 is a diagram that shows a process example for performing wireless power transfer.
[Fig. 11] Fig. 11 is a graph that illustrates a threshold setting method in state detection using the waveform attenuation method.
[Fig. 12A] Fig. 12A is a diagram that illustrates a coupling state index measurement method for a power transmission antenna and a power receiving antenna.
[Fig. 12B] Fig. 12B is a diagram that illustrates a coupling state index measurement method for a power transmission antenna and a power receiving antenna.

[Fig. 13] Fig. 13 is a graph that illustrates a threshold setting method in state detection using the coupling state index measurement method.

[Fig. 14] Fig. 14 is a flowchart that illustrates the process of the power transmission apparatus of a first embodiment.

[Fig. 15] Fig. 15 is a flowchart that illustrates the process of the power receiving apparatus of the first embodiment.

[Fig. 16] Fig. 16 is a sequence diagram that illustrates the process of the power transmission apparatus and power receiving apparatus of the first embodiment.

[Fig. 17] Fig. 17 is a flowchart that illustrates the process of the power transmission apparatus of a third embodiment.

[Fig. 18] Fig. 18 is a flowchart that illustrates the process of the power receiving apparatus of the third embodiment.

[Fig. 19] Fig. 19 is a sequence diagram that illustrates the process of the power transmission apparatus and power receiving apparatus of the third embodiment.

Description of Embodiments

Hereinafter, embodiments of the present disclosure will be described in detail with reference to the accompanying drawings. A plurality of features is described in each embodiment; however, not all the plurality of features is indispensable to the invention, and the plurality of features may be used in any combination. In addition, like reference numerals denote the identical or similar components in the attached drawings. Each embodiment shows a wireless charging system that applies a wireless power transfer system. In an example, wireless power transfer based on the standard formulated by the wireless charging standardization organization, that is, the Wireless Power Consortium (hereinafter, referred to as WPC standard) will be described.

[First Embodiment]

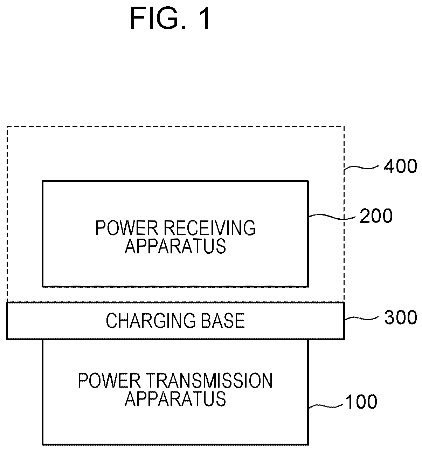

The present embodiment will be described with reference to the drawings. Fig. 1 is a diagram that shows a configuration example of a wireless charging system. The system includes a power transmission apparatus 100, a power receiving apparatus 200, and a charging base 300.

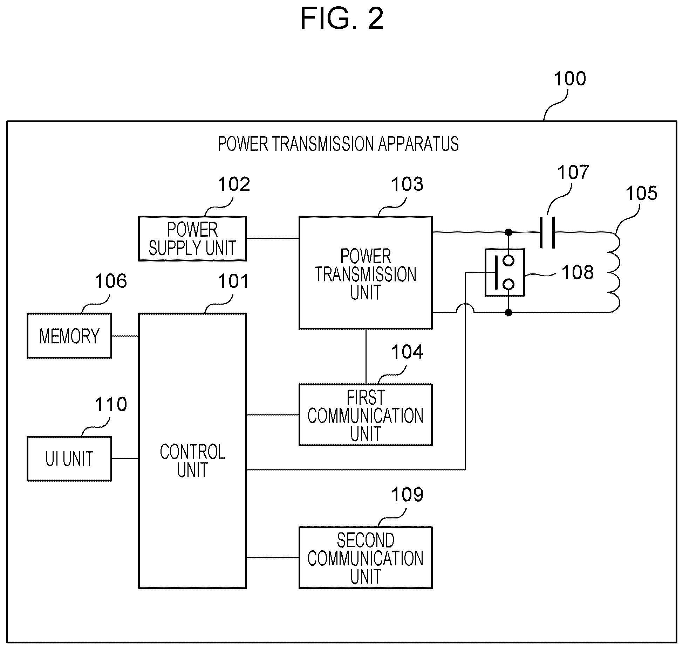

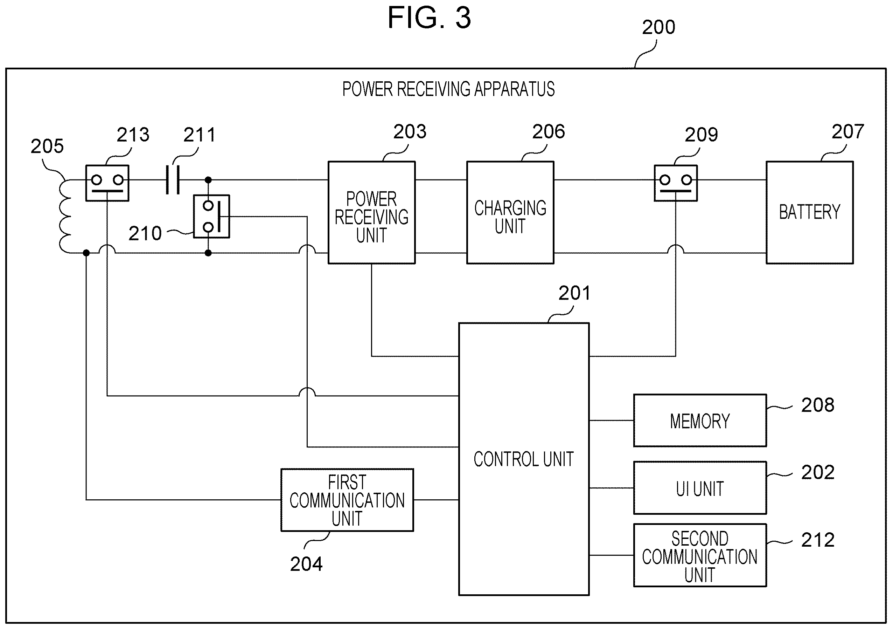

Hereinafter, for the sake of brevity, the power receiving apparatus 200 may be referred to as RX 200, and the power transmission apparatus 100 may be referred to as TX 100. The detailed configuration of the TX 100 and the RX 200 will be described later with reference to Figs. 2 and 3.

The RX 200 is an electronic device that charges a built-in battery by receiving electric power from the TX 100 in a state of being placed on the charging base 300. The TX 100 is an electronic device that wirelessly transmits electric power to the RX 200 placed on the charging base 300. Since the charging base 300 constitutes a part of the TX 100, the sentence that the RX 200 is "placed on the charging base 300" may be replaced with the sentence that the RX 200 is "placed on the TX 100". The spatial range in which the RX 200 can receive electric power from the TX 100 is schematically shown in Fig. 1 by the range indicated by the dotted frame 400. Each of the RX 200 and the TX 100 can have a function of executing an application other than a wireless charging function. For example, the RX 200 is a smartphone, and the TX 100 is an accessory device for charging the battery of the RX 200. However, the configuration is not limited to this example.

Next, a configuration example of the power transmission apparatus 100 will be described with reference to Fig. 2. Fig. 2 is a functional block diagram that shows a configuration example of the power transmission apparatus 100. The TX 100 includes a control unit 101, a power supply unit 102, a power transmission unit 103, a first communication unit 104, a power transmission antenna (power transmission coil) 105, a memory 106, a resonant capacitor 107, a switch unit 108, a second communication unit 109, and a user interface unit 110. Hereinafter, user interface is abbreviated as UI. In Fig. 2, each functional block element is illustrated as a separate unit; however, selected multiple functional block elements may be implemented in the same chip.

The control unit 101 controls the entire TX 100 by running a control program stored in the memory 106. The control unit 101 executes power transmission control including communication for device authentication in the TX 100. Furthermore, the control unit 101 can execute control for running an application other than wireless power transfer. The control unit 101 is configured to include one or more processors, such as central processing units (CPUs) and microprocessor units (MPUs). Alternatively, the control unit 101 may be made up of hardware, such as an application specific integrated circuit (ASIC). The control unit 101 may also be configured to include an array circuit, such as a field programmable gate array (FPGA), compiled so as to execute a predetermined process. The control unit 101 can execute a process of storing information to be stored during the execution of various processes in the memory 106, and a clock process using a timer (not shown).

The power supply unit 102 supplies electric power to each functional block element. The power supply unit 102 includes, for example, a power connection circuit to a commercial power supply, and a battery. The battery is charged with electric power supplied from a commercial power supply.

The power transmission unit 103 converts direct-current power or alternating-current power input from the power supply unit 102 to alternating-current power in a frequency band used for wireless power transfer and inputs the alternating-current power to the power transmission antenna 105, thus generating electromagnetic waves for causing the RX 200 to receive electric power. For example, the power transmission unit 103 includes an inverter that converts direct-current voltage supplied from the power supply unit 102 to alternating-current voltage with a switching circuit having a half-bridge configuration or a full-bridge configuration. The power transmission unit 103 includes a plurality of field effect transistors (FETs) that make up a bridge, and a gate driver that controls the on/off states of the plurality of FETs.

The power transmission unit 103 controls the intensity of electromagnetic waves (transmission power) to be output, by adjusting voltage (transmission voltage) or current (transmission current) or both, input to the power transmission antenna 105. The intensity of electromagnetic waves (the intensity of transmission power) is controlled by the magnitude of transmission voltage or transmission current. Alternatively, the power transmission unit 103 controls the intensity of electromagnetic waves (transmission power) to be output, by adjusting voltage (inverter input voltage) or current (inverter input current) or both, input to the inverter of the power transmission unit 103. The voltage input to the inverter is referred to as inverter input voltage. The current input to the inverter is referred to as inverter input current. The intensity of electromagnetic waves (the intensity of transmission power) is controlled by the magnitude of inverter input voltage or inverter input current.

Alternatively, the power transmission unit 103 controls the intensity of electromagnetic waves (transmission power) to be output, by adjusting voltage (inverter output voltage) or current (inverter output current) or both, output from the inverter of the power transmission unit 103. The voltage output from the inverter is referred to as inverter output voltage. The current output from the inverter is referred to as inverter output current. The intensity of electromagnetic waves (the intensity of transmission power) is controlled by the magnitude of inverter output voltage or inverter output current.

The power transmission unit 103 controls the output electric power of electromagnetic waves with an alternating-current frequency such that the start or stop of power transmission by the power transmission antenna 105 or the intensity of electromagnetic waves to be output is controlled based on an instruction signal from the control unit 101. The power transmission unit 103 is assumed to have a power supply capacity to output an electric power of 50 watts (W) to a charging unit of the power receiving apparatus 200 that supports the WPC standard.

The first communication unit 104 is connected to the control unit 101 and the power transmission unit 103. The first communication unit 104 performs communication for power transmission control based on the WPC standard with the RX 200. The first communication unit 104 performs frequency shift keying of electromagnetic waves output from the power transmission antenna 105 and transfers information to the RX 200 for communication. The first communication unit 104 demodulates electromagnetic waves modulated by the RX 200 and transmitted from the power transmission antenna 105 to acquire information transmitted from the RX 200. Communication using the first communication unit 104 is performed by superimposing a communication signal on electromagnetic waves to be transmitted from the power transmission antenna 105. The first communication unit 104 performs so-called in-band communication.

The memory 106 can store information related to the states of the TX 100 and RX 200, in addition to the control program. The information related to the states of the TX 100 and RX 200 includes a transmission power value, a receiving power value, and the like. The information related to the state of the TX 100 is acquired by the control unit 101. The information related to the state of the RX 200 can be acquired by a control unit of the RX 200 and received by the first communication unit 104 or the second communication unit 109 (described later).

The switch unit 108 is connected in parallel to a series circuit of the resonant capacitor 107 and the power transmission antenna 105. The control unit 101 transmits a control signal to the switch unit 108 to control the on and off states. The power transmission antenna 105 is connected to the resonant capacitor 107. When the switch unit 108 enters the on state and short-circuited by the control signal from the control unit 101, the power transmission antenna 105 and the resonant capacitor 107 form a series resonant circuit and resonate at a specific frequency fA. At this time, current flows through a closed circuit formed by the power transmission antenna 105, the resonant capacitor 107, and the switch unit 108. On the other hand, when the switch unit 108 enters the off state by the control signal from the control unit 101 and the circuit is opened, the power transmission antenna 105 and the resonant capacitor 107 are supplied with electric power from the power transmission unit 103.

The second communication unit 109 is connected to the control unit 101 and performs communication with the RX 200 based on a standard different from the WPC standard. For example, the second communication unit 109 communicates with the RX 200 by using an antenna (not shown) different from the power transmission antenna 105. The communication methods used by the second communication unit 109 include wireless local area network (LAN), Bluetooth (registered trademark) low energy (BLE), and near field communication (NFC). BLE is a communication method that supports Bluetooth standard version 4.0 and later. The frequency band used at the time of transmitting electric power from the power transmission antenna 105 is different from the frequency band used for communication by the second communication unit 109. The second communication unit 109 performs so-called out-band communication.

Regarding communication between the TX 100 and the RX 200, the TX 100 may selectively use any of a plurality of communication standards to communicate with the RX 200. A communication mode in which a plurality of communications described below is selectively used is possible.

· Communication based on a first standard (WPC standard), performed between the first communication unit 104 of the TX 100 and a first communication unit 204 (see Fig. 3) of the RX 200.
· Communication based on a second standard (a standard other than the WPC standard), performed between the second communication unit 109 of the TX 100 and a second communication unit 212 (see Fig. 3) of the RX 200.

The UI unit 110 is connected to the control unit 101 and performs various outputs for a user. Various outputs include screen display, blink and color change of a light emitting diode (LED), voice output through a speaker, and motions, such as vibrations of the main body of the TX 100. The UI unit 110 is implemented by a liquid crystal panel, a speaker, a vibration motor, or the like.

Next, a configuration example of the power receiving apparatus 200 will be described with reference to Fig. 3. Fig. 3 is a block diagram that shows a configuration example of the power receiving apparatus 200. The RX 200 includes a control unit 201, a user interface (UI) unit 202, a power receiving unit 203, the first communication unit 204, a power receiving antenna 205, a charging unit 206, a battery 207, and a memory 208. The RX 200 further includes a first switch unit 209, a second switch unit 210, a resonant capacitor 211, the second communication unit 212, and a third switch unit 213. The present embodiment describes an example in which the functional block elements in Fig. 3 are individual elements; however, a plurality of functional block elements may be implemented by a single hardware module.

The control unit 201 controls each functional block element of the RX 200 by running a control program stored in the memory 208. Furthermore, the control unit 201 can execute control for running an application other than wireless power transfer. The control unit 201 is configured to include one or more processors, such as CPUs and MPUs. The entire RX 200 (for example, the entire smartphone) can be controlled by cooperation with an operating system (OS) being executed by the control unit 201. Alternatively, the control unit 201 is made up of hardware, such as an ASIC, or may be configured to include an array circuit, such as an FPGA, compiled so as to execute a predetermined process. The control unit 201 can store information to be stored during the execution of various processes in the memory 208 and also execute a clock process using a timer (not shown).

The UI unit 202 is connected to the control unit 201 and performs various outputs for a user. Various outputs include screen display, blink and color change of a light emitting diode (LED), voice output through a speaker, and motions, such as vibrations of the main body of the RX 200. The UI unit 202 is implemented by a liquid crystal panel, a speaker, a vibration motor, or the like.

The power receiving unit 203 receives, via the power receiving antenna (power receiving coil) 205, alternating-current power (alternating-current voltage and alternating current) generated by electromagnetic induction based on electromagnetic waves radiated from the power transmission antenna 105 of the TX 100. Then, the power receiving unit 203 converts alternating-current power to direct-current power or alternating-current power with a predetermined frequency and supplies the electric power to the charging unit 206. The charging unit 206 charges the battery 207. The power receiving unit 203 includes a rectifier section (rectifier, rectifying circuit) and a voltage control section necessary for supplying electric power to a load in the RX 200. The rectifier section converts alternating-current voltage and alternating current received via the power receiving antenna 205 from the power transmission antenna to direct-current voltage and direct current. The direct-current voltage is referred to as rectifier section output voltage. The direct current is referred to as rectifier section output current. The voltage control section converts the level of direct-current voltage (rectifier section output voltage) output by the rectifier section to a predetermined level. The predetermined level is the level of direct-current voltage at which the control unit 201, the charging unit 206, and the like, can operate. The power receiving unit 203 supplies electric power for charging the battery 207 from the charging unit 206. The power receiving unit 203 is assumed to have a power supply capacity to output an electric power of 50 watts to the charging unit 206.

The first communication unit 204 performs communication for power receiving control based on the WPC standard with the first communication unit 104 of the TX 100. The first communication unit 204 is connected to the power receiving antenna 205 and the control unit 201. The first communication unit 204 demodulates electromagnetic waves input from the power receiving antenna 205 to acquire information transmitted from the TX 100. The first communication unit 204 communicates with the TX 100 by superimposing a signal related to information to be transmitted to the TX 100 over electromagnetic waves through load modulation, amplitude modulation, or backscatter modulation of the input electromagnetic waves.

The memory 208 stores, for example, information related to the states of the TX 100 and RX 200, in addition to the control program. The information related to the state of the RX 200 is acquired by the control unit 201. The information related to the state of the TX 100 can be acquired by the control unit 101 of the TX 100 and received by the first communication unit 204 or the second communication unit 212 (described later).

The second communication unit 212 is connected to the control unit 201 and performs communication with the TX 100 based on a standard different from the WPC standard. For example, the second communication unit 212 communicates with the TX 100 by using an antenna different from the power receiving antenna 205. The communication methods used by the second communication unit 212 include wireless LAN, BLE, and NFC. BLE is a communication method that supports Bluetooth standard version 4.0 and later. The frequency band used at the time of receiving electric power with the power receiving antenna 205 is different from the frequency band used for communication by the second communication unit 212.

Regarding communication between the TX 100 and the RX 200, the RX 200 may selectively use any of a plurality of communication standards to communicate with the TX 100. A communication mode in which a plurality of communications described below is selectively used is possible.

· Communication based on a first standard (WPC standard), performed between the first communication unit 104 of the TX 100 and the first communication unit 204 of the RX 200.
· Communication based on a second standard (a standard other than the WPC standard), performed between the second communication unit 109 of the TX 100 and the second communication unit 212 of the RX 200.

The first switch unit 209 is provided between the charging unit 206 and the battery 207 and is controlled by the control unit 201. The first switch unit 209 has a function of controlling whether to supply electric power received by the power receiving unit 203 to the battery 207 and a function of controlling the magnitude of the load. When the first switch unit 209 is set to an off state to be opened by the control unit 201, electric power received by the power receiving unit 203 is not supplied to the battery 207. When the first switch unit 209 is set to an on state to be short-circuited by the control unit 201, electric power received by the power receiving unit 203 is supplied to the battery 207.

In Fig. 3, the first switch unit 209 is disposed between the charging unit 206 and the battery 207. Alternatively, the first switch unit 209 may be disposed between the power receiving unit 203 and the charging unit 206.

Alternatively, the first switch unit 209 may be disposed between the power receiving unit 203 and a closed circuit formed by the power receiving antenna 205, the resonant capacitor 211, and the second switch unit 210. In this case, the first switch unit 209 has a function of controlling whether to supply electric power received by the power receiving antenna 205 to the power receiving unit 203.

In the example of Fig. 3, the first switch unit 209 is shown as a single functional block element; however, the first switch unit 209 can be implemented as a part of the charging unit 206 or the power receiving unit 203. Not limited to the configuration that the first switch unit 209 is inserted in series between the charging unit 206 and the battery 207, the first switch unit 209 may also be inserted in parallel between the charging unit 206 and the battery 207. In this case, when the first switch unit 209 is set to the off state to be opened by the control unit 201, electric power received by the power receiving unit 203 is supplied to the battery 207. When the first switch unit 209 is set to the on state to be short-circuited by the control unit 201, electric power received by the power receiving unit 203 is not supplied to the battery 207.

The second switch unit 210 is connected in parallel with the resonant capacitor 211 on the input side of the power receiving unit 203. The resonant capacitor 211 is connected to the power receiving antenna 205 via the third switch unit 213. The second switch unit 210 and the third switch unit 213 are controlled by the control unit 201. The third switch unit 213 has a function of controlling whether to open the terminal of the power receiving antenna 205. When the third switch unit 213 enters an off state by the control unit 201, the terminal of the power receiving antenna 205 becomes an open state. When the third switch unit 213 is set to an on state by the control unit 201, the power receiving antenna 205 is connected to the power receiving unit 203 via the resonant capacitor 211.

When the third switch unit 213 is set to the on state and the second switch unit 210 is set to an on state to be short-circuited by the control unit 201, the power receiving antenna 205 and the resonant capacitor 211 form a series resonant circuit and resonate at a specific frequency fB. Current flows through a closed circuit formed by the power receiving antenna 205, the resonant capacitor 211, and the second switch unit 210, and no current flows through the power receiving unit 203. When the second switch unit 210 is set to an off state to open the circuit, electric power received by the power receiving antenna 205 and the resonant capacitor 211 is supplied to the power receiving unit 203. Not limited to the example in Fig. 3, the second switch unit 210 may be disposed between the power receiving antenna 205 and the resonant capacitor 211. When the third switch unit 213 is in the on state and the second switch unit 210 is in the on state, the terminal of the power receiving antenna 205 is short-circuited. The third switch unit 213 may be disposed between the resonant capacitor 211 and the power receiving unit 203.

In this system, the TX 100 and the RX 200 perform wireless power transfer based on the WPC standard between the power transmission antenna 105 and the power receiving antenna 205. In the WPC standard, the level of load power agreed upon between the RX 200 and the TX 100 is predefined by a value called guaranteed load power (hereinafter, referred to as "GP"). Load power is electric power consumed by the load. For example, GP indicates an electric power value guaranteed to be output to the load of the RX 200 even when the positional relationship between the RX 200 and the TX 100 fluctuates to weaken the coupling state between the power receiving antenna 205 and the power transmission antenna 105 and, as a result, the power transfer efficiency decreases. The load of the RX 200 includes the charging unit 206, the battery 207, and the like. The value of GP corresponds to electric power guaranteed to be output from the power receiving unit 203. Alternatively, the value of GP corresponds to electric power guaranteed to be output from the rectifier section of the power receiving unit 203. For example, a case where the value of GP is set to five watts and the positional relationship between the power receiving antenna 205 and the power transmission antenna 105 has fluctuated is assumed. In this case, even when the power transfer efficiency decreases, the TX 100 executes power transmission control so that five watts can be output to the load of the RX 200. GP is determined by negotiation between the TX 100 and the RX 200. Not limited to GP, the present embodiment can be applied in a configuration where transmission and reception are performed at electric power determined by negotiation between the TX 100 and the RX 200.

A case where an object is present near the TX 100 when electric power is transmitted from the TX 100 to the RX 200 is assumed. In this case, the object is an object (foreign object) that can affect power transmission from the TX 100 to the RX 200 and that is different from the RX 200. Electromagnetic waves for power transmission can affect the foreign object, and there is a possibility that the temperature of the foreign object increases or a breakage of the foreign object occurs. A foreign object in the present disclosure refers to an object that is neither the power receiving apparatus and a part of a product to which the power receiving apparatus is assembled nor the power transmission apparatus and a part of a product to which the power transmission apparatus is assembled, and an object that heats up when exposed to an electric power signal. Examples of the foreign object include a clip and an IC card. Among objects of indispensable parts for the power receiving apparatus and a product to which the power receiving apparatus is assembled or the power transmission apparatus and a product to which the power transmission apparatus is assembled, objects that may possibly unintentionally generate heat when exposed to wireless power transmitted by the power transmission antenna are not foreign objects.

In the WPC standard, a method of suppressing an increase in the temperature of foreign object and a breakage of foreign object by stopping the power transmission when a foreign object is present is predefined. Specifically, the power transmission apparatus 100 can detect the presence of a foreign object on the charging base 300. A power loss method is a method of detecting a foreign object based on the difference between transmission power in the TX 100 and receiving power in the RX 200. A quality factor measurement method is a method of detecting a foreign object based on a change in the quality factor (Q-factor) of the power transmission antenna 105 (power transmission coil) in the TX 100. Alternatively, the quality factor measurement method is a method of detecting a foreign object based on a change in the quality factor (Q-factor) of the resonant circuit that includes the power transmission antenna 105 and the resonant capacitor 107 in the TX 100. In the present disclosure, the quality factor of the power transmission antenna 105 and the quality factor of the resonant circuit that includes the power transmission antenna 105 and the resonant capacitor 107 are referred to as quality factor concerned with the power transmission antenna 105. However, a foreign object to be detected by the TX 100 is not limited to an object present on the charging base 300. The TX 100 can detect a foreign object positioned near the TX 100. For example, the TX 100 can detect a foreign object positioned in a range in which the TX 100 can transmit electric power.

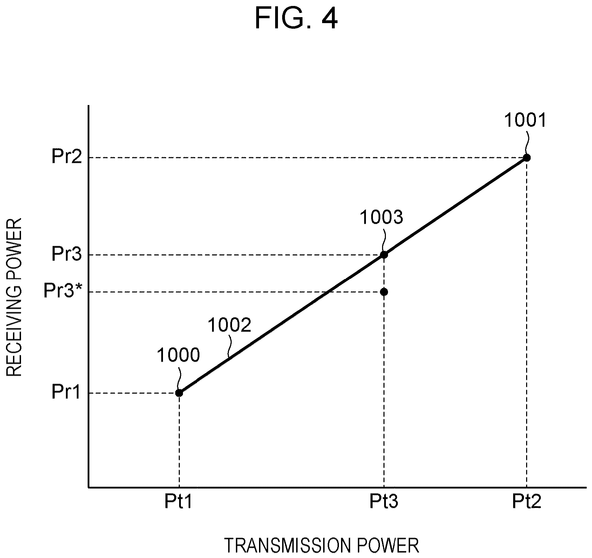

Foreign object detection based on the power loss method predefined in the WPC standard will be described with reference to Fig. 4. In Fig. 4, the abscissa axis represents the transmission power of the TX 100, and the ordinate axis represents the receiving power of the RX 200. On the graph line represented by the straight line segment 1002, point 1000 corresponds to a first transmission power value Pt1 and a first receiving power value pr1, and point 1001 corresponds to a second transmission power value Pt2 and a second receiving power value Pr2. On the graph line, point 1003 corresponds to a third transmission power value Pt3 and a third receiving power value Pr3. Foreign objects to be detected include a metal piece and the like having electrical conductivity.

Initially, the TX 100 transmits electric power to the RX 200 at the first transmission power value Pt1, and the RX 200 receives electric power at the first receiving power value Pr1. Hereinafter, this state is referred to as a light load state. Then, the TX 100 stores the first transmission power value Pt1. At this time, the RX 200 executes load control such that electric power to be received is a minimum electric power. Alternatively, the RX 200 executes load control such that electric power to be received is an electric power within a predetermined range or an electric power lower than or equal to a predetermined threshold. Here, in "electric power within a predetermined range" or "electric power lower than or equal to a predetermined threshold", "electric power" refers to electric power that is a value of approximately 10% of reference power (described later). The RX 200 may interrupt the load (such as the charging unit 206 and the battery 207 in Fig. 3) from the power receiving antenna 205 so that the received electric power is not supplied to the load. Alternatively, the RX 200 may control the load such that a predetermined electric power is supplied to the load. These can be achieved by controlling the first switch unit 209. Subsequently, the RX 200 notifies the TX 100 of the first receiving power value Pr1. When the TX 100 receives a signal related to the first receiving power value Pr1 from the RX 200, the TX 100 calculates a power loss between the TX 100 and the RX 200. A power loss at this time is Pt1 - Pr1 (= Ploss1). It is possible to generate a calibration point (hereinafter abbreviated as CP) 1000 indicating a correspondence between Pt1 and Pr1.

Subsequently, the TX 100 changes the transmission power value to the second transmission power value Pt2 and transmits electric power to the RX 200, and the RX 200 receives electric power at the second receiving power value Pr2. Hereinafter, this state is referred to as a connected load state. Then, the TX 100 stores the second transmission power value Pt2. At this time, the RX 200 executes load control such that electric power to be received is a maximum electric power. Here, "maximum electric power" refers to electric power with a value close to the reference power (described later). Alternatively, the RX 200 executes load control such that electric power to be received is an electric power within a predetermined range or an electric power higher than or equal to a predetermined threshold. For example, the RX 200 connects the power receiving antenna 205 with the load such that the received electric power is supplied to the load. These can be achieved by controlling the first switch unit 209. Subsequently, the RX 200 notifies the TX 100 of the second receiving power value Pr2. When the TX 100 receives a signal related to the second receiving power value Pr2 from the RX 200, the TX 100 calculates a power loss between the TX 100 and the RX 200. The power loss at this time is Pt2 - Pr2 (= Ploss2). It is possible to generate CP 1001 indicating a correspondence between Pt2 and Pr2.

The TX 100 executes a straight line interpolation process between CP 1000 and CP 1001 to generate the line segment 1002. The line segment 1002 represents the relationship between transmission power and receiving power in a state (hereinafter, referred to as first detection state) where no foreign object is present near the TX 100 and the RX 200. The TX 100 can estimate a power value that the RX 200 receives when the TX 100 transmits electric power at a predetermined transmission power in the first detection state based on the line segment 1002. For example, a case where the TX 100 transmits electric power at the third transmission power value Pt3 is assumed. In this case, the TX 100 can estimate the third receiving power value Pr3 that the RX 200 receives, from point 1003 corresponding to Pt3 on the line segment 1002.

As described above, a power loss between the TX 100 and the RX 200 according to the load can be obtained based on a plurality of combinations of the transmission power value of the TX 100 and the receiving power value of the RX 200, measured while the load is changed. Through an interpolation process from the plurality of combinations of the transmission power value and the receiving power value, power losses between the TX 100 and the RX 200 according to all the loads can be estimated. In this way, the calibration process that the TX 100 and the RX 200 execute for the TX 100 to acquire combinations of the transmission power value and the receiving power value is referred to as "calibration process using the power loss method". The calibration process is abbreviated as CAL process. Executing the calibration process again to update or add calibration points after the calibration process has been executed once is referred to as recalibration process and is abbreviated as ReCAL process.

A case where, after the CAL process using the power loss method, the TX 100 actually transmits electric power to the RX 200 at the third transmission power value Pt3 and the TX 100 receives a signal related to a receiving power value Pr3* from the RX 200 is assumed. The signal related to the receiving power value Pr3* is a received power data packet (mode0) predefined in the WPC standard. Alternatively, another message may be used. Hereinafter, the received power data packet (mode0) is denoted by RP0. RP0 contains the value of receiving power value Pr3*. The TX 100 calculates Pr3 - Pr3* (= Ploss_FO) by subtracting the receiving power value Pr3* actually received from the RX 200 from the receiving power value Pr3 in the first detection state. Ploss_FO can be estimated as electric power consumed by a foreign object when the foreign object is present near the TX 100 and the RX 200, that is, a power loss. Hereinafter, the state where the presence of a foreign object near the TX 100 and the RX 200 is detected is referred to as a second detection state.

In the second detection state, the TX 100 compares the power loss Ploss_FO, likely to be consumed by a foreign object, with a predetermined threshold. When the value of electric power loss Ploss_FO exceeds the threshold, the TX 100 can determine that a foreign object is present. Alternatively, the TX 100 acquires the third receiving power value Pr3 in the first detection state from the RX 200 and obtains the power loss Pt3 - Pr3 (= Ploss3) between the TX 100 and the RX 200 in advance.

Subsequently, the TX 100 acquires the receiving power value Pr3* from the RX 200 in the second detection state, and calculates the power loss Pt3 - Pr3* (= Ploss3*) between the TX 100 and the RX 200 in the second detection state. Then, the TX 100 can estimate the power loss Ploss_FO by using Ploss3* - Ploss3.

As described above, there are two methods of calculating Ploss_FO in the second detection state.

· The first method is to calculate Ploss_FO from Pr3 - Pr3*.
·The second method is to calculate Ploss_FO from Ploss3* - Ploss3.

In this present embodiment, the second method will basically be described; however, the contents of the present embodiment are also applicable to the first method.

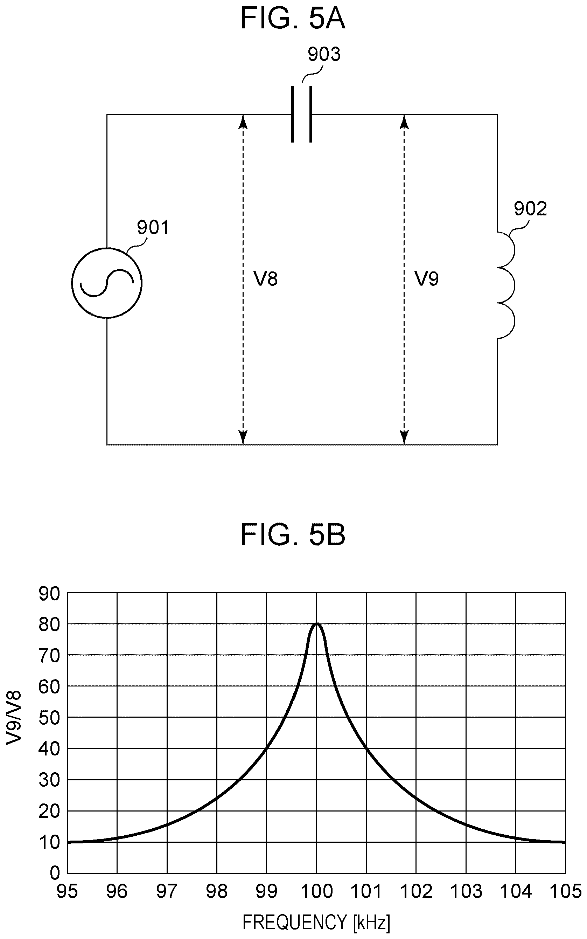

Next, foreign object detection based on the quality factor measurement method predefined in the WPC standard will be described with reference to Figs. 5A and 5B. Fig. 5A is a schematic circuit diagram for illustrating a method of measuring a quality factor (Q-factor) by using the quality factor measurement method. An alternating-current power supply 901 is a power supply that outputs alternating-current power generated by the power transmission unit 103 of the TX 100. A power transmission antenna 902 corresponds to the power transmission antenna 105, and a capacitor 903 corresponds to the resonant capacitor 107. The power transmission antenna 902 and the capacitor 903 are connected in series. A voltage value V8 is a voltage value having a predetermined frequency for operating the wireless power transfer system and generated by the power transmission unit 103. A voltage value V9 is a voltage value applied to the power transmission antenna 902. Here, the TX 100 is assumed to be able to change the frequency related to the voltage value. The voltage values V8 and V9 are voltage values that the TX 100 measures when the TX 100 transmits an analog ping (hereinafter, referred to as "AP") or a digital ping (hereinafter, referred to as "DP") to the RX 200. Since the voltage values V8 and V9 are alternating-current voltage values, their effective values (RMS's) may be used.

Fig. 5B shows characteristics having a peak at 100 kHz as an example of the measurement results of V9/V8 against frequency. The abscissa axis represents frequency, and the ordinate axis represents voltage ratio "V9/V8". V9/V8 represents the quality factor concerned with the power transmission antenna 902, so, when an object is placed near the power transmission antenna 902, the value of V9/V8 changes. The change in the quality factor varies among a case where no object is placed on the TX 100, a case where the RX 200 is placed on the TX 100, a case where a foreign object (such as a metal piece) is placed on the TX 100, and a case where both the RX 200 and a foreign object are placed on the TX 100.

During a negotiation phase (described later) predefined in the WPC standard, the TX 100 receives a signal of FOD status data packet from the RX 200. The FOD status data packet includes a reference quality factor value and a reference resonance frequency value. The reference quality factor value is a quality factor that can be measured at the terminal of the power transmission antenna of a test TX 100 when the RX 200 is placed on the test TX 100 and no foreign object is present nearby. The reference resonance frequency value is as follows. It is the resonance frequency calculated from an inductance value that can be measured at the terminal of the power transmission antenna of the test TX 100 when the RX 200 is placed on the test TX 100 and no foreign object is present nearby. The threshold is set with reference to the reference quality factor value by using the quality factor measurement method. By comparing the threshold with the quality factor obtained from the actually measured V9/V8, foreign object detection is performed. Alternatively, the threshold is set with reference to the reference resonance frequency value. By comparing the threshold with the resonance frequency obtained by actually measuring V9/V8, foreign object detection is performed.

The RX 200 and TX 100 of the present embodiment perform communication for power transmission and reception controls based on the WPC standard. In the WPC standard, a plurality of phases including a power transfer phase in which power transfer is performed and one or more phases before actual power transfer is predefined. Communication for power transmission and reception controls necessary in each phase is performed. For example, foreign object detection using the power loss method is performed during the power transfer phase based on data base obtained during the calibration phase. Foreign object detection using the quality factor measurement method is performed before power transfer (before transmission of a digital ping and during the negotiation phase or renegotiation phase).

The phases before power transfer in the WPC standard include a selection phase, a ping phase, and a configuration phase. Other than the above, the negotiation phase and the calibration phase are provided. Hereinafter, the process in each phase will be described.

During the selection phase, the TX 100 intermittently transmits an analog ping to detect whether an object is placed on the charging base of the TX 100. The analog ping is a short-duration electric power signal applied to detect the presence of an object. However, this electric power signal does not activate the control unit of the power receiving apparatus. For example, the fact that the RX 200, a conductive piece, or the like is placed on the charging base is detected. The TX 100 detects one or both of the voltage value and current value of the power transmission antenna 105 when an analog ping is transmitted. The TX 100 determines that an object is present when the voltage value is lower than a threshold or when the current value exceeds a threshold, and transitions into the ping phase. Alternatively, when the quality factor calculated from the voltage value satisfies a predetermined condition, or when the quality factor calculated from the current value satisfies a predetermined condition, the TX 100 determines that an object is present, and transitions to the ping phase.

During the ping phase, the TX 100 transmits a digital ping higher in electric power than the analog ping. The digital ping is an electric power signal for the activation of the control unit of the RX 200 placed on the TX 100. The RX 200 notifies the TX 100 of the receiving voltage value. In this way, the TX 100 receives a response from the RX 200 having received the digital ping to recognize that the object detected during the selection phase is the RX 200. When the TX 100 receives notification of the receiving voltage value from the RX 200, the TX 100 transitions into the configuration phase. Before the TX 100 transmits the digital ping, the TX 100 measures the quality factor concerned with the power transmission antenna 105 by using, for example, the analog ping. The measurement result is used when a foreign object detection process using the quality factor measurement method is executed. Depending on the version of the WPC standard, the above-described selection phase may be included as part of the above-described ping phase and may be referred to as the ping phase.

During the configuration phase, the TX 100 identifies the RX 200 and acquires device configuration information (capability information) from the RX 200. The RX 200 transmits the signals of ID data packet and configuration data packet. The ID data packet contains the identifier information of the RX 200, and the configuration data packet contains the device configuration information (capability information) of the RX 200. The TX 100 having received the signals of ID data packet and configuration data packet returns an acknowledge (ACK). Then, the configuration phase ends.

During the negotiation phase, the value of GP is determined based on the value of GP requested by the RX 200, the power transmission capability of the TX 100, and the like. The TX 100 receives an FOD status data packet containing the reference quality factor value and the reference resonance frequency value from the RX 200. In the quality factor measurement method, the presence or absence of a foreign object is determined based on a threshold set with reference to the reference quality factor value and the reference resonance frequency value. The TX 100 executes a foreign object detection process using the quality factor measurement method in accordance with a request from the RX 200. In the WPC standard, a method of, after once transitioning to the power transfer phase, executing a process similar to the process during the negotiation phase again in response to a request from the RX 200 is predefined. A phase during which these processes are executed after transitioning from the power transfer phase is referred to as a renegotiation phase.

During the calibration phase, the calibration process of the power loss method is executed based on the WPC standard. The RX 200 notifies the TX 100 of a predetermined receiving power value, and the TX 100 performs adjustment for efficiently transmitting electric power. The predetermined receiving power value is, for example, the receiving power value in a light load state or a maximum load state (connected load state). The receiving power value notified to the TX 100 is used for a foreign object detection process using the power loss method.

During the power transfer phase, the TX 100 and the RX 200 execute control for the start and continuation of power transmission, error handling, and stop of power transmission due to full charge, and the like. The TX 100 and the RX 200 execute a communication process for these power transmission and reception controls. For example, communication is performed by superimposing a signal on electromagnetic waves transmitted from the power transmission antenna 105 or the power receiving antenna 205 by using the power transmission antenna 105 and the power receiving antenna 205 that are used when wireless power transfer is performed based on the WPC standard. A range in which communication based on the WPC standard is possible between the TX 100 and the RX 200 is similar to a power transmittable range of the TX 100. Depending on the version of the WPC standard, the above-described calibration phase may also be referred to as a power transfer phase as part of the above-described power transfer phase.

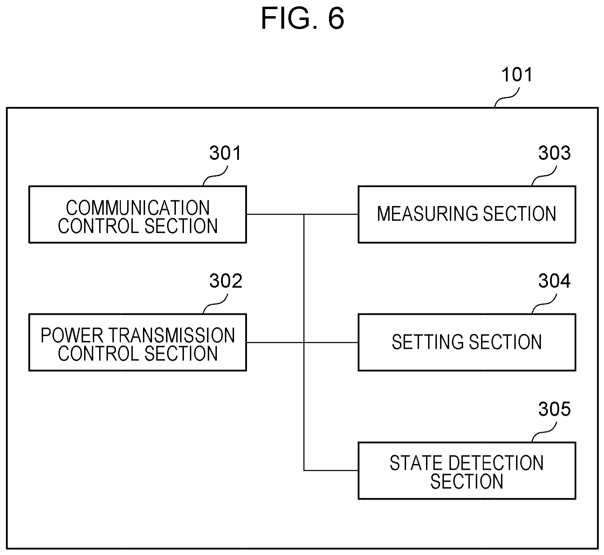

Next, the functions of the control unit of the TX 100 will be described with reference to Fig. 6. Fig. 6 is a block diagram that shows a functional configuration example of the control unit 101 of the power transmission apparatus 100 (TX 100). The control unit 101 includes a communication control section 301, a power transmission control section 302, a measuring section 303, a setting section 304, and a state detection section 305. The communication control section 301 executes communication control with the RX 200 based on the WPC standard via the first communication unit 104, or executes communication control with the RX 200 via the second communication unit 109.

The power transmission control section 302 controls the power transmission unit 103, to control power transmission to the RX 200. The measuring section 303 measures a waveform attenuation index (described later). The measuring section 303 measures electric power to be transmitted to the RX 200 via the power transmission unit 103 and measures an average transmission power for each unit time. The measuring section 303 also measures a quality factor concerned with the power transmission antenna 105. The measuring section 303 measures temperatures by using temperature sensors disposed at multiple positions of the TX 100. The measuring section 303 also measures a quantity that represents the electromagnetic coupling state (for example, the coupling coefficient) between the power transmission antenna 105 and the power receiving antenna 205.

The setting section 304 calculates and sets a threshold for foreign object detection in the quality factor measurement method and a threshold for foreign object detection in the power loss method by using the above-described method. The setting section 304 also sets a threshold for foreign object detection in the waveform attenuation method (described later). The setting section 304 calculates and sets a threshold for foreign object detection or a threshold for detecting a misalignment between the TX 100 and the RX 200 based on, for example, the coupling coefficient between the power transmission antenna 105 and the power receiving antenna 205, measured by the measuring section 303. The setting section 304 also calculates and sets a threshold for foreign object detection or a threshold for detecting a misalignment between the TX 100 and the RX 200 based on, for example, the temperature of the power transmission apparatus, measured by the measuring section 303.

The state detection section 305 detects the states of the TX 100 and RX 200. For example, the state detection section 305 detects a foreign object present between the TX 100 and the RX 200, and also detects a misalignment between the power transmission antenna 105 and the power receiving antenna 205. More specifically, it is possible to execute state detection processes based on the power loss method, the quality factor measurement method, the waveform attenuation method, the temperature measured in the TX 100, and the electromagnetic coupling state (for example, the coupling coefficient) between the power transmission antenna 105 and the power receiving antenna 205. The state detection section 305 can perform foreign object detection and a process of detecting a misalignment between the power transmission antenna 105 and the power receiving antenna 205 by using another method. For example, in the TX 100 including an NFC communication capability, the state detection section 305 executes a state detection process by using an opposing device detecting function compliant with an NFC standard. The state detection section 305 can detect changes in state on the TX 100, in addition to detecting the presence or absence of a foreign object and the electromagnetic coupling state between the power transmission antenna and the power receiving antenna. For example, the state detection section 305 can detect fluctuations in the number of RXs 200 on the TX 100.

The setting section 304 sets a threshold that is a reference for determining the presence or absence of a foreign object when the TX 100 performs state detection. State detection refers to, for example, state detection based on the power loss method, the quality factor measurement method, the waveform attenuation method, state detection based on the temperature measured in the TX 100, or state detection based on the coupling coefficient or the like between the power transmission antenna 105 and the power receiving antenna 205. The setting section 304 can set a determination threshold that is necessary for a state detection process using another method. The state detection section 305 can execute a foreign object detection process and a process of detecting a misalignment between the power transmission antenna 105 and the power receiving antenna 205 based on the threshold set by the setting section 304 and the measurement results from the measuring section 303. For example, the state detection section 305 can acquire data, such as waveform attenuation index, transmission power, quality factor, temperature measured in the TX 100, and the coupling coefficient between the power transmission antenna 105 and the power receiving antenna 205, as measurement results of the measuring section 303.

The processes executed by the communication control section 301, the power transmission control section 302, the measuring section 303, the setting section 304, and the state detection section 305 shown in Fig. 6 can be implemented by using programs executed by the CPU and the like of the control unit 101. Each process is executed in accordance with a corresponding one of independent programs in parallel while the programs are synchronized through event handling or the like. However, two or more of these processes may be incorporated in the process caused by one program.

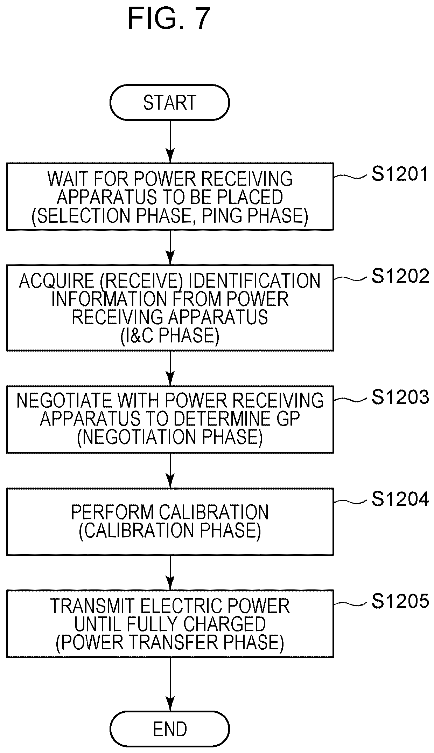

Next, an example of the flow of processes concerned with power transmission and reception controls executed by the TX 100 and the RX 200 will be described. Fig. 7 is a flowchart showing an example of power transmission control process executed by the TX 100. The process is implemented by, for example, the control unit 101 of the TX 100 running a program read from the memory 106. The process can be executed in response to turning on of the power supply of the TX 100, in response to the user of the TX 100 inputting instructions to start a wireless power transfer application, or the TX 100 being connected to a commercial power supply and receiving supply of electric power. The process may also be started at another opportunity.

In S1201 of Fig. 7, the TX 100 executes a process predefined as the selection phase and a process predefined as the ping phase in the WPC standard and waits for placement of the RX 200. Specifically, the TX 100 repeatedly intermittently transmits an analog ping of the WPC standard to detect an object present in the power transmittable range. For example, the TX 100 can detect that the RX 200, a conductive piece, or the like, is placed on the charging base 300. When the TX 100 detects that an object is present in the power transmittable range, the TX 100 transmits a digital ping.

When there is a predetermined response to the digital ping, the TX 100 determines that the detected object is the RX 200 and the RX 200 is placed on the charging base 300. Here, "predetermined response" refers to a singnal strength (SIG) data packet that the RX 200 transmits. This packet contains a singnal strength value that represents the signal strength of a signal, that the RX 200 receives. The singnal strength value is calculated from the following parameter. The parameter is the voltage (rectifier section output voltage) output by the rectifier section (rectifier) of the power receiving unit 203, measured by the RX 200, the voltage (open circuit voltage) of the open circuit including the power receiving antenna 205, measured by the RX 200, the receiving power value measured by the RX 200, or the like.

Before the TX 100 transmits a digital ping, the TX 100 measures the quality factor concerned with the power transmission antenna 105. The measurement result is used when a foreign object detection process using the quality factor measurement method is executed.

After placement of the RX 200 is detected, the TX 100 acquires identification information from the RX 200 through communication during the configuration phase predefined in the WPC standard in S1202. During the configuration phase, the RX 200 transmits an identification packet (ID packet) to the TX 100. An ID packet stores information elements that can identify the supported versions of the WPC standard, in addition to a manufacturer code and a basic device ID that are the identification information of each individual RX 200.

Furthermore, the RX 200 transmits the configuration data packet to the TX 100. A configuration data packet contains the capability information of the RX 200 as follows.

· A maximum power value or reference power that is a value that specifies the maximum electric power that the RX 200 can supply to the load
· Information indicating whether the RX 200 has a negotiation function of the WPC standard
· Parameters used in frequency shift keying that is a communication modulation method used when the TX 100 transmits information to the RX 200
· Information indicating whether the RX 200 supports out-of-band communication capability.

When the TX 100 receives the above packet from the RX 200, the TX 100 transmits an acknowledge ACK to the RX 200, and the configuration phase ends. The TX 100 may acquire identification information of the RX 200 by using a method other than communication during the configuration phase in the WPC standard. Identification information of each individual RX 200 may be a wireless power ID. Alternatively, the identification information may be any other identification information with which the individual RX 200 can be identified, such as the Bluetooth address (hereinafter, referred to as "BD_ADDR") unique to the second communication unit 212 of the RX 200. BD_ADDR is an 8-byte address used in BLE. BD_ADDR is, for example, a public address predefined in the BLE standard and indicating the manufacturer of the RX 200 and the individual identification information of the communication capability (second communication unit 212) of BLE. BD_ADDR may be a random address.

Subsequently, in S1203, the TX 100 determines GP through negotiation with the RX 200 based on a request from the RX 200 and its own power transmission capability. In S1203, communication during the negotiation phase of the WPC standard is performed. For example, the RX 200 transmits a specific request to the TX 100 to notify the TX 100 of the requested electric power value. The TX 100 determines whether to accept the request based on its own power transmission capability and other conditions. The TX 100 transmits an acknowledge ACK to the RX 200 when the TX 100 accepts the request; whereas, when the TX 100 does not accept the request, the TX 100 transmits NACK or NAK that is a negative acknowledge to the RX 200. The value of GP determined through negotiation with the RX 200 is set to the value requested by the RX 200 when the TX 100 accepts the request from the RX 200. When the TX 100 does not accept the request from the RX 200, the value of GP may be set to a predetermined value (for example, five watts) determined in the WPC standard. When the TX 100 acquires information indicating that the RX 200 does not support the negotiation phase (for example, S1302 (described later)), the TX 100 does not perform communication during the negotiation phase and determines the GP value to a predetermined value. The predetermined value is, for example, a value (for example, five watts) that is predefined in advance in the WPC standard.

The TX 100 executes a foreign object detection process using the quality factor measurement method in accordance with a request from the RX 200. The TX 100 receives an FOD status data packet from the RX 200. The packet contains the above-described reference quality factor value and reference resonance frequency value. Then, the TX 100 performs foreign object detection using the quality factor measurement method. The foreign object detection is performed based on the following pieces of information.

· The quality factor and resonance frequency of the power transmission antenna 105, measured before the TX 100 transmits a digital ping
· A threshold with reference to the reference quality factor value and reference resonance frequency value received by the TX 100 from the RX 200

Subsequently, in S1204, the TX 100 and the RX 200 execute a process during the calibration phase (CAL process) in the WPC standard. The TX 100 executes the CAL process in the power loss method based on the determined value of reference power or the determined value of GP during the calibration phase. Initially, the RX 200 transmits a signal having information related to receiving power in a light load state (hereinafter, referred to as first reference receiving power information) to the TX 100. The light load state is, for example, a load interrupted state, a load state where the receiving power value of the RX 200 is lower than or equal to a first threshold, or a load state where the receiving power value of the RX 200 falls within a predetermined range (hereinafter, referred to as "first range"). In the present embodiment, it is assumed that the first reference receiving power information is 500 milliwatts. The first reference receiving power information is information contained in the received power data packet (model) predefined in the WPC standard. Alternatively, another message may be used. Hereinafter, the received power data packet (model) is denoted by RP1. The TX 100 determines whether to accept the first reference receiving power information based on a control error value contained in a control error (CE) data packet received from the RX 200. When the TX accepts the first reference receiving power information, the TX 100 transmits an acknowledge ACK to the RX 200. When the TX 100 does not accept the first reference receiving power information, the TX 100 transmits a negative acknowledge NAK to the RX 200.

Subsequently, the RX 200 executes a process for transmitting a signal having information related to receiving power in a connected load state (hereinafter referred to as second reference receiving power information) to the TX 100. The connected load state is, for example, a maximum load state, a load state where the transmission power value is higher than or equal to a second threshold, or a load state where the electric power received by the RX 200 is the maximum electric power. Here, "maximum electric power" refers to electric power with a value close to the reference power. Alternatively, the connected load state is a load state where the receiving power value of the RX 200 falls within a predetermined range (hereinafter, referred to as "second range"). Here, the second range is a range of electric power values that are higher than the first range. In the present embodiment, it is assumed that the second reference receiving power information is 15 watts. The second reference receiving power information is information contained in the received power data packet (mode2) predefined in the WPC standard. Alternatively, another message may be used.

Hereinafter, the received power data packet (mode2) is denoted by RP2. The TX 100 determines whether to accept the second reference receiving power information based on a control error value contained in a control error (CE) data packet received from the RX 200. When the TX accepts the second reference receiving power information, the TX 100 transmits an acknowledge ACK to the RX 200. When the TX 100 does not accept the second reference receiving power information, the TX 100 transmits a negative acknowledge NAK to the RX 200. The TX 100 transmits an acknowledge ACK for the second reference receiving power information from the RX 200 and completes the CAL process.

As a result of the above CAL process, the TX 100 is allowed to calculate the amount of power loss between the TX 100 and the RX 200 in the light load state and the connected load state based on the transmission power value of the TX 100 and the receiving power values included in the first reference receiving power information and the second reference receiving power information. Through an interpolation process between a plurality of the amounts of power loss, the TX 100 can calculate the amount of power loss between the TX 100 and the RX 200 for all the transmission powers that the TX 100 can take. All the transmission powers that the TX 100 can take, for example, refer to any electric powers within the range from 500 milliwatts to 15 watts, within which the receiving power received by the RX 200 falls in the present embodiment.

After that, in S1205, the TX 100 transmits electric power until the battery 207 of the RX 200 is fully charged. In S1205, communication during the power transfer phase in the WPC standard is performed. The RX 200 repeatedly transmits a control error data packet (hereinafter, referred to as "CE packet") to the TX 100 at time intervals of t_interval. The t_interval is a value defined in the WPC standard and is, for example, 250 milliseconds. The CE packet contains a request for how much the transmission power is increased or decreased. The TX 100 adjusts the transmission power by controlling the current or voltage of the power transmission antenna 105 based on the received CE packet. In other words, the CE packet contains data on parameters for adjusting the transmission power. By repeating the process, the power transmission at an appropriate level according to the request from the RX 200 is performed in almost real time.

When the battery 207 is fully charged, the RX 200 transmits an end power transfer data packet (hereinafter referred to as "EPT packet") to end the power transfer phase. The RX 200 can transmit an EPT packet for reasons other than being fully charged. When the power transfer phase ends, the TX 100 stops the power transmission for charging the RX 200.

When the TX 100 has not received the next CE packet after a lapse of a period of time t_timeout since the last CE packet was received, the TX 100 determines that the RX 200 has been removed from the charging base 300. In this case, the power transfer phase is ended. The t_timeout is a value defined in the WPC standard and is, for example, 1500 milliseconds.

The RX 200 may transmit packets other than CE packets to the TX 100 during the power transfer phase. For example, there is a charge status data packet with which the TX 100 is notified of the state of the battery 207 of the RX 200. The packet stores the charge status value that represents what percentage of the battery 207 is charged. When the TX 100 receives the charge status data packet, the TX 100 notifies the user of the state of charge by displaying characters or graphics based on the charge status value, for example, through the UI unit 110. The TX 100 may receive the charge status data packet at any time and can notify the user at any timing.

During the power transfer phase, the TX 100 transmits electric power to the RX 200 while executing a foreign object detection process using the power loss method. For example, through the CAL process, the amount of power loss between the TX 100 and the RX 200 in the first detection state during the power transmission process is calculated from the difference between the transmission power value and the receiving power value. The calculated amount of power loss corresponds to a reference amount of power loss in a state where no foreign object is present. Then, the TX 100 determines that the difference between the amount of power loss between the TX 100 and the RX 200 and the reference amount of power loss, measured during power transmission after the CAL process is greater than or equal to a threshold, the TX 100 determines the detection state as the second detection state.

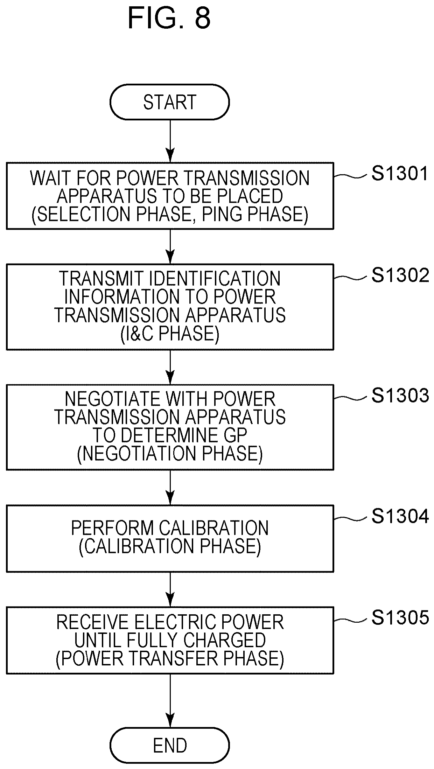

An example of the flow of the process concerned with power receiving control executed by the RX 200 will be described with reference to Fig. 8. The process is implemented by, for example, the control unit 201 of the RX 200 running a program read from the memory 208. In S1301, the RX 200 executes a process predefined as the selection phase and a process predefined as the ping phase in the WPC standard and waits for placement of its own apparatus on the TX 100. The RX 200, for example, detects that the RX 200 is placed on the TX 100 by detecting a digital ping from the TX 100.

When the RX 200 detects that its own apparatus is placed on the TX 100, the RX 200 transmits a signal including the identification information of the own apparatus to the TX 100 by using an ID packet and a configuration data packet in S1302. The identification information of the RX 200 may be transmitted by using a method other than communication during the configuration phase in the WPC standard. Any other identification information, such as BD_ADDR, may be used as long as the identification information can identify each individual RX 200. The RX 200 can transmit information other than identification information to the TX 100 in S1302.

Subsequently, in S1303, the RX 200 transmits a signal including information about an electric power value requested of the TX 100, and negotiates with the TX 100 to determine GP. In S1303, communication during the negotiation phase in the WPC standard is performed. The RX 200 transmits an FOD status data packet to the TX 100. The packet contains a reference quality factor value and a reference resonance frequency value.

Subsequently, in S1304, the RX 200 and the TX 100 execute a process during the calibration phase (CAL process) in the WPC standard. The process that the RX 200 executes during the phase is as follows. After that, in S1305, the RX 200 receives electric power until the battery 207 is fully charged. The process that the RX 200 executes during the phase is as follows. During the power transfer phase, the RX 200 and the TX 100 execute a foreign object detection process using the power loss method. In S1305, the RX 200 repeatedly transmits CE packets at intervals of t_interval, and finally transmits an EPT packet to the TX 100 to end the process.

As described above, the power loss method is a method of performing foreign object detection based on the measurement result of the amount of power loss during power transmission from the TX 100 to the RX 200. The method has the drawback of a reduction in the accuracy of foreign object detection when the TX 100 is transmitting high power, while having the advantage of being able to execute a foreign object detection process while continuing power transmission, thus maintaining high power transmission efficiency.

Incidentally, with only foreign object detection using the power loss method during the power transfer phase, there are a possibility of erroneous detection of a foreign object and a possibility of erroneous determination that no foreign object is present despite the presence of a foreign object. For example, a case where a foreign object is present near the TX 100 and the RX 200 during power transmission during the power transfer phase is assumed. In this case, there is a possibility that heat generation or the like from a foreign object may increase, so it is desired to improve foreign object detection accuracy during the power transfer phase. Therefore, a foreign object detection method using the waveform attenuation method will be described. With this method, the TX 100 can perform foreign object detection based on the attenuation state of the power transmission waveform (voltage waveform or current waveform) concerned with power transmission to the RX 200. In other words, foreign object detection is possible without using a newly predefined foreign object detection signal or the like.

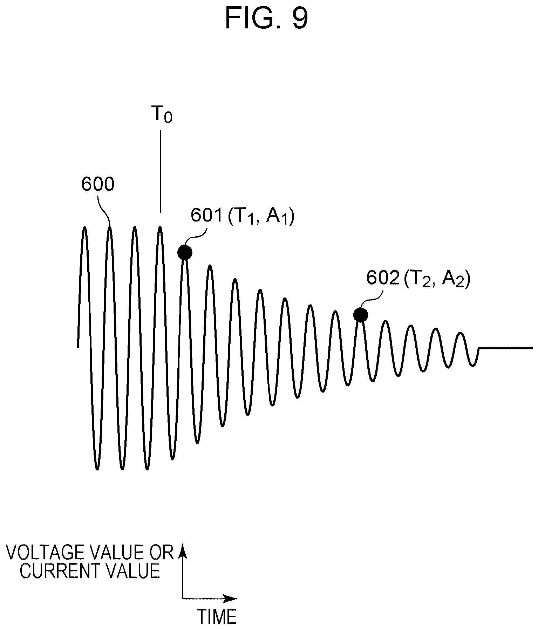

Fig. 9 is a view that illustrates the principle of foreign object detection using the waveform attenuation method. An example of foreign object detection using a power transmission waveform concerned with power transmission from the power transmission apparatus 100 to the power receiving apparatus 200 is shown. In Fig. 9, the abscissa axis represents time, and the ordinate axis represents voltage value or current value. The waveform 600 shown in Fig. 9 shows, for example, a change in the voltage value of high-frequency voltage applied to the power transmission antenna 105 of the TX 100 with a lapse of time. The TX 100 that is transmitting electric power to the RX 200 via the power transmission antenna 105 stops power transmission at time $T_0$. At time $T_0$, the supply of electric power for power transmission from the power supply unit 102 is stopped, and the supply of electric power for power transmission to the power transmission antenna 105 is stopped. The frequency $f_1$ of the power transmission waveform before power transmission is stopped at time $T_0$ is a fixed frequency, for example, between 87 kHz and 205 kHz used in the WPC standard. A point 601 on the waveform 600 is a point on an envelope of high-frequency voltage and corresponds to a voltage value $A_1$ at time $T_1$. At the point 601, $(T_1, A_1)$ indicates that the voltage value at time $T_1$ is $A_1$. A point 602 on the waveform 600 is a point on an envelope of high-frequency voltage and corresponds to a voltage value $A_2$ at time $T_2$. At the point 602, $(T_2, A_2)$ indicates that the voltage value at time $T_2$ is $A_2$.

The quality factor (Q-factor) concerned with the power transmission antenna 105 can be obtained based on a temporal change in voltage value from time $T_0$. The TX 100 calculates a quality factor by using expression 1 based on, for example, the time and voltage value at the point 601 and the point 602 on the envelope of the high-frequency voltage, and the frequency $f_2$ of high-frequency voltage after power transmission is stopped at time $T_0$.

$$Q = \pi \cdot f_2 \cdot (T_2 - T_1) / \ln(A_1/A_2) \qquad \text{(Expression 1)}$$

In expression 1, ln denotes the natural logarithmic function.

The frequency ($f_1$) of the power transmission waveform when the TX 100 is transmitting electric power to the RX 200 and the frequency ($f_2$) of the power transmission waveform when the TX 100 has stopped power transmission to the RX 200 may be different from each other.

The value of quality factor decreases when a foreign object is present near the TX 100 and the RX 200. This is because a loss of energy occurs due to the foreign object. Thus, focusing on the slope of attenuation of the voltage value, the slope of a straight line connecting the point 601 and the point 602 is greater when a foreign object is present than when no foreign object is present. When a loss of energy occurs due to a foreign object, the attenuation factor of the amplitude of waveform 600 increases. For example, the waveform attenuation method can determine the presence or absence of a foreign object based on the attenuation state of the voltage value between the point 601 and the point 602. In actually determining the presence or absence of a foreign object, it is possible to perform determination by comparing numeric values indicating the attenuation state. For example, when a determination is performed by using a quality factor, a decrease in the value of quality factor that is lower than a reference value means that the waveform attenuation factor (the degree of reduction in the amplitude of waveform per unit time) increases.

In another example, there is a method of performing a determination using the slope of a straight line connecting the point 601 and the point 602, which is calculated from $(A_1 - A_2)/(T_2 - T_1)$. When time ($T_1$ and $T_2$) at which the attenuation state of the voltage value is measured is fixed, determination of the presence or absence of a foreign object can be performed by using the difference in voltage value ($A_1 - A_2$) or the ratio of voltage values ($A_1/A_2$). Alternatively, when the voltage value $A_1$ just after the stop of power transmission is constant, determination of the presence or absence of a foreign object can be performed by using the voltage $A_2$ after a lapse of a predetermined time. Alternatively, determination of the presence or absence of a foreign object can be performed by using elapsed time ($T_2 - T_1$) until the voltage value $A_1$ becomes the predetermined voltage value $A_2$.

In the waveform attenuation method, it is possible to determine the presence or absence of a foreign object based on the attenuation state of the waveform during a power transmission stop period. The indices, such as a quality factor, that represent the attenuation state are collectively referred to as "waveform attenuation indices" in the present embodiment. The ordinate axis of Fig. 9 has been described as the axis of the voltage value of high-frequency voltage applied to the power transmission antenna 105 of the TX 100; however, the ordinate axis of Fig. 9 may also represent the current value flowing through the power transmission antenna 105. As in the case of the voltage value, the attenuation state of the current value during a power transmission stop period changes depending on the presence or absence of a foreign object. The waveform attenuation factor when a foreign object is present is higher than the waveform attenuation factor when no foreign object is present. Thus, it is possible to detect a foreign object by applying a similar method in relation to a temporal change in current value flowing through the power transmission antenna 105. In other words, it is possible to perform foreign object detection by determining the presence or absence of a foreign object using a quality factor calculated from a current waveform, the slope of attenuation of current value, a difference in current value, the ratio of current values, the absolute value of current value, a period of time taken until a current value reaches a predetermined value, or the like as a waveform attenuation index.

There is a method based on both the attenuation state of voltage value and the attenuation state of current value. With this method, the presence or absence of a foreign object can be determined by using an evaluation value calculated from the waveform attenuation index of voltage value and the waveform attenuation index of current value. The configuration is not limited to an example of measuring the waveform attenuation index during a period in which the TX 100 temporarily stops power transmission. The waveform attenuation index during a period in which the TX 100 temporarily decreases electric power supplied from the power supply unit 102 from a predetermined power level to a power level lower than the predetermined power level may be measured. In other words, the waveform attenuation index during a period in which the supply of electric power for power transmission to the power transmission antenna 105 is temporarily decreased from a predetermined power level to a power level lower than the predetermined power level may be measured. The above-described limitation or stop of the supply of electric power for power transmission to the power transmission antenna 105 may be performed by the power transmission unit 103 based on an instruction signal from the control unit 101. In the above-described example, the voltage value or current value is measured at two time points in a period during which the TX 100 limits power transmission. Alternatively, the voltage value or current value may be measured at three or more time points.

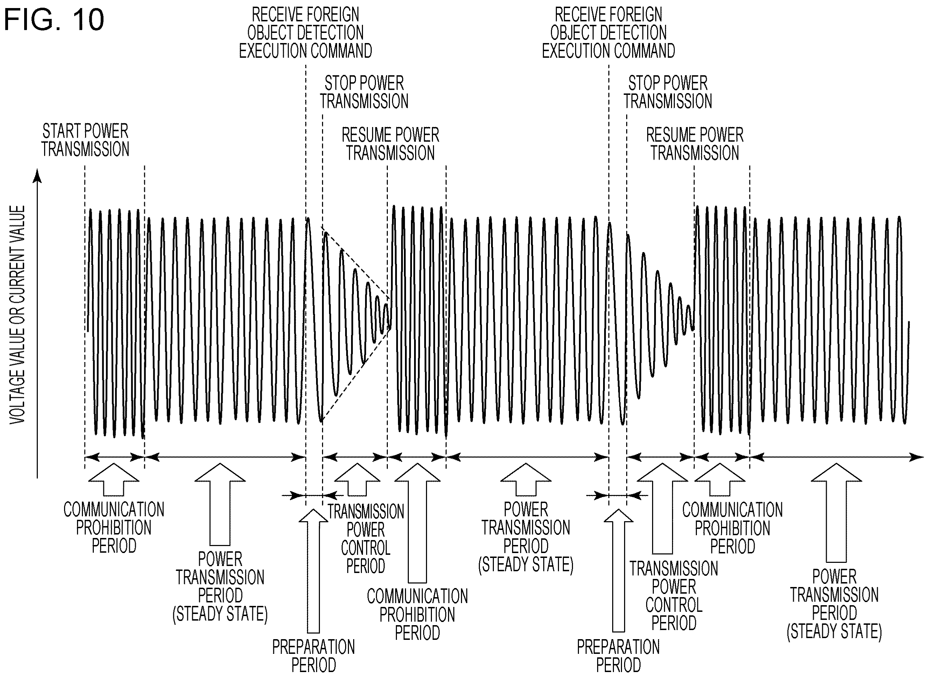

A foreign object detection method based on the power transmission waveform using the waveform attenuation method will be described with reference to Fig. 10. The power transmission waveform shown in Fig. 10 is the power transmission waveform when foreign object detection using the waveform attenuation method is performed. The abscissa axis represents time, and the ordinate axis represents the voltage value or current value of the power transmission antenna 105.

The power transmission waveform is not stable in a transitional response period just after the TX 100 starts power transmission. Thus, during the transitional response period, the RX 200 is controlled so as not to perform communication (communication by amplitude modulation or load modulation) with the TX 100. The TX 100 is controlled so as not to perform communication (communication by frequency shift keying) with the RX 200. Hereinafter, the period is referred to as communication prohibition period. However, during the communication prohibition period, the TX 100 transmits electric power to the RX 200. Then, after a lapse of the communication prohibition period, the TX 100 transmits electric power to the RX 200. Hereinafter, this period is referred to as power transmission period. When the TX 100 has received a foreign object detection execution request (packet, command) from the RX 200, the TX 100 temporarily stops power transmission or temporarily decreases transmission power after a lapse of a predetermined period of time. Hereinafter, the predetermined period of time is referred to as preparation period. During the preparation period, the RX 200 is controlled so as not to perform communication (communication by amplitude modulation, load modulation, or backscatter modulation) with the TX 100. The TX 100 is controlled so as not to perform communication by frequency shift keying with the RX 200. By controlling communication not to be performed during the preparation period, disruption in the power transmission waveform is suppressed, so the TX 100 can calculate the waveform attenuation index of the power transmission waveform (described later) with higher accuracy.

The above-described foreign object detection execution request (packet, command) may be RP0, RP1, or RP2. When the TX 100 receives a foreign object detection execution request, the power transmission unit 103 of the TX 100 temporarily stops power transmission or temporarily decreases transmission power, with the result that the amplitude of the power transmission waveform attenuates. The period from the time point when the TX 100 temporarily stops power transmission or the time point when the TX 100 temporarily decreases transmission power to the time point when the TX 100 resumes power transmission or the time point when the TX 100 starts the restoration of transmission power is referred to as transmission power control period.

Here, "resuming power transmission" refers to that the TX 100 increases transmission power to a predetermined value. Alternatively, the period from the time point when the TX 100 temporarily sets the value of inverter input voltage input to the inverter of the power transmission unit 103 to zero volts or temporarily decreases the value of inverter input voltage to the time point when the TX 100 returns the value of input voltage to a predetermined value is hereinafter referred to as transmission power control period. Alternatively, the period from the time point when the TX 100 temporarily sets the value of inverter output voltage output by the inverter of the power transmission unit 103 to zero volts or temporarily decreases the value of inverter output voltage to the time point when the TX 100 returns the value of output voltage to a predetermined value is hereinafter referred to as transmission power control period. The control by the TX 100 to temporarily stop or temporarily decrease transmission power is referred to as transmission power control. The TX 100 calculates the waveform attenuation index based on the attenuation waveform and compares the calculated waveform attenuation index with a predetermined threshold, to determine the presence or absence of a foreign object or a possibility that a foreign object is present (presence probability) (hereinafter, referred to as foreign object determination). During the transmission power control period, the RX 200 is controlled so as not to perform communication by amplitude modulation, load modulation, or backscatter modulation with the TX 100. The TX 100 is controlled so as not to perform communication by frequency shift keying with the RX 200. By controlling communication not to be performed during the transmission power control period, disruption of the power transmission waveform is suppressed, so the TX 100 can calculate the waveform attenuation index of the power transmission waveform with higher accuracy. Foreign object determination can be performed during the transmission power control period, the communication prohibition period, or the power transmission period.

After a lapse of the transmission power control period, when no foreign object is detected, the TX 100 controls the resumption of power transmission or the restoration of transmission power. Because the power transmission waveform is not stable during a transitional response period just after the control is started, the period becomes a communication prohibition period. After that, the period transitions into the power transmission period in which the TX 100 stably transmits electric power to the RX 200.

As described above, the TX 100 repeatedly executes control at or during the start of power transmission, the communication prohibition period, the power transmission period, the preparation period, and the transmission power control period. The TX 100 calculates the waveform attenuation index based on the attenuation waveform at predetermined timing and performs foreign object determination based on the comparison result between the calculated waveform attenuation index and a predetermined threshold. In other words, it is possible to perform foreign object determination based on the voltage value or current value at two or more time points during a predetermined period of time in which power transmission is limited (including the stop of power transmission). During the preparation period, the transmission power control period, and the communication prohibition period, the RX 200 is controlled so as not to perform communication by amplitude modulation, load modulation, or backscatter modulation with the TX 100. The TX 100 is controlled so as not to perform communication by frequency shift keying with the RX 200. In other words, the TX 100 is controlled so as not to communicate with the RX 200 for a predetermined first period after receiving an execution request (packet, command) from the RX 200. In the WPC standard, a period during which the TX 100 cannot transmit packets to the RX 200 after receiving a packet other than an execution request (packet, command) from the RX 200 during the power transfer phase is predefined. The first period is longer than that period.

The RX 200 is controlled so as not to perform communication with the TX 100 for a predetermined second period after transmitting an execution request (packet, command) to the TX 100. In the WPC standard, a period during which the RX 200 cannot transmit packets to the TX 100 after transmitting a packet other than an execution request (packet, command) to the TX 100 during the power transfer phase is predefined. The second period is longer than that period.

Incidentally, during the transmission power control period, when elements such as the power receiving unit 203, the charging unit 206, and the battery 207 are connected to the power receiving antenna 205 and the resonant capacitor 211 of the RX 200, the waveform attenuation index is influenced by the load due to these elements. In other words, the value of waveform attenuation index changes depending on the states of the power receiving unit 203, the charging unit 206, and the battery 207. As a result, even when, for example, the value of the waveform attenuation index is large, it is difficult to differentiate between the influence of a foreign object and the influence of a change in the state of the power receiving unit 203, the charging unit 206, the battery 207, and the like. Therefore, when foreign object detection is performed by measuring the waveform attenuation index, the control unit 201 of the RX 200 turns off the first switch unit 209 during the preparation period. The RX 200 transmits an execution request (packet, command) to the TX 100 and executes the above-described process during the preparation period. Alternatively, the RX 200 transmits an execution request (packet, command) to the TX 100 and simultaneously executes the above-described process. Thus, it is possible to reduce the influence of the battery 207. A similar advantageous effect can be obtained by establishing the light load state instead of establishing the state where the first switch unit 209 is interrupted. A similar advantageous effect can be obtained by the RX 200 executing load control such that electric power to be received is a minimum electric power, instead of establishing a state where the first switch unit 209 is interrupted. Alternatively, a similar advantageous effect can be obtained by the RX 200 executing load control such that electric power to be received is electric power that falls within a predetermined range or electric power lower than or equal to a predetermined threshold, instead of establishing a state where the first switch unit 209 is interrupted. Here, in "electric power that falls within a predetermined range" or "electric power lower than or equal to a predetermined threshold", "electric power" refers to electric power that is a value of approximately 10% of reference power. Alternatively, the RX 200 may control the load such that a predetermined electric power is supplied to the load, instead of establishing a state where the first switch unit 209 is interrupted. These can be achieved by controlling the first switch unit 209. The RX 200 maintains the above-described control also during the transmission power control period. Then, at timing after the resumption of power transmission, the above-described control is cancelled, and the state is controlled so as to return to the original state.

Alternatively, the control unit 201 turns on the second switch unit 210 to short-circuit and establishes a state where current flows through a closed loop made up of the power receiving antenna 205, the resonant capacitor 211, and the second switch unit 210. Thus, it is possible to reduce the influence of the power receiving unit 203, the charging unit 206, and the battery 207. The RX 200 transmits a foreign object detection execution request (command) to the TX 100, and the above-described process is executed during the preparation period. Alternatively, the RX 200 transmits an execution request (packet, command) to the TX 100 and simultaneously executes the above-described process. The RX 200 maintains the above-described control also during the transmission power control period. Then, at timing after the resumption of power transmission, the above-described control is cancelled, and the state is controlled so as to return to the original state. Foreign object detection with higher accuracy is possible by acquiring the waveform attenuation index based on the power transmission waveform measured in a state where the first switch unit 209 is interrupted or in a state where the second switch unit 210 is turned on to short-circuit (establish connection). Alternatively, foreign object detection with even higher accuracy is possible by both interrupting the first switch unit 209 and short-circuiting (connecting) the second switch unit 210.

Alternatively, the RX 200 may execute control to transition into a low power consumption mode or to keep electric power consumption constant in a state where the first switch unit 209 is turned on to short-circuit and the second switch unit 210 is turned off to be interrupted during the preparation period. The RX 200 transmits an execution request (packet, command) to the TX 100 and executes the above-described process during the preparation period. Alternatively, the RX 200 transmits an execution request (packet, command) to the TX 100 and simultaneously executes the above-described process. The RX 200 maintains the above-described control also during the transmission power control period. Then, at timing after the resumption of power transmission, the above-described control is cancelled, and the state is controlled so as to return to the original state. When the electric power consumption in the RX 200 is not constant or when high power is consumed, the value of the waveform attenuation index based on the attenuation waveform is affected by fluctuations of the electric power consumption. To reduce the influence, it is effective to restrict or stop the operation of a software application that operates on the RX 200, or to set the hardware functional blocks of the RX 200 to a low power consumption mode or an operation stop mode. Foreign object detection with higher accuracy is possible by performing foreign object detection using the waveform attenuation index based on the power transmission waveform measured in a state where the electric power consumption of the RX 200 is suppressed.

Similarly, in the TX 100, at the time of measuring the waveform attenuation index, when elements such as the power transmission unit 103, the first communication unit 104, and the power supply unit 102 are connected to the power transmission antenna 105 and the resonant capacitor 107 of the TX 100, the waveform attenuation factor are influenced by these elements. In other words, the value of the waveform attenuation index changes depending on the states of the power transmission unit 103, the first communication unit 104, and the power supply unit 102. As a result, even when, for example, the value of the waveform attenuation index is large, it is difficult to differentiate between the influence of a foreign object and the influence of the power transmission unit 103, the first communication unit 104, and the power supply unit 102.

Therefore, when the TX 100 has received a foreign object detection execution request (command) from the RX 200, the control unit 101 turns on the switch unit 108 during the preparation period. This leads to a state where current flows through the closed loop circuit formed by the power transmission antenna 105, the resonant capacitor 107, and the switch unit 108. Then, it is possible to reduce the influence of the power transmission unit 103, the first communication unit 104, and the power supply unit 102 at the time of measuring the waveform attenuation index in the TX 100.

Alternatively, it is possible to reduce the influence of the power supply unit 102, the power transmission unit 103, and the first communication unit 104 by providing a switch (not shown) between the power transmission antenna 105 and the power transmission unit 103 and interrupting the switch during the preparation period. Alternatively, a switch may be provided between the power transmission unit 103 and the closed loop circuit formed by the power transmission antenna 105, the resonant capacitor 107, and the switch unit 108. The TX 100 can reduce the above-described influence by interrupting the closed loop circuit and the power transmission unit through control of the switch when the TX 100 measures the waveform attenuation index to perform foreign object detection. The TX 100 also maintains the above-described control during a transmission power control period. Then, at timing after the resumption of power transmission, the above-described control is cancelled, and the state is controlled so as to return to the original state. By performing the above-described method alone or in combination, foreign object detection with higher accuracy is possible.

As described above, at least one or more of a short-circuit (connected) state where the switch unit 108 is turned on, an interrupted state established by the switch concerned with the power transmission antenna 105 and the power transmission unit 103, and an interrupted state established by the switch concerned with the closed-loop circuit and the power transmission unit 103 are achieved. With this configuration, it is possible to perform foreign object detection with higher accuracy.

Next, a method of setting a threshold of the waveform attenuation index for state detection of the TX 100 and the RX 200 and foreign object determination based on the waveform attenuation method will be described. A measured value of the waveform attenuation index can be compared with a predetermined threshold, and foreign object determination can be performed based on the comparison result. A first threshold setting method is a method in which the TX 100 holds a threshold, that is, a predetermined value that is a common value not dependent on the RX 200 that is a target to which electric power is transmitted. The threshold is a fixed value or a variable value determined by the TX 100 depending on a situation. The power transmission waveform during the transmission power control period has a higher waveform attenuation factor when a foreign object is present. Thus, the value of the waveform attenuation index acquired in a state where no foreign object is present is held, and the value is set as the threshold. By comparing the measured value of the waveform attenuation index with the threshold, it is possible to determine that "a foreign object is present" or "there is a high possibility that a foreign object is present". When, for example, a quality factor is adopted as the waveform attenuation index, the TX 100 compares the measured value of quality factor with a predetermined threshold. The threshold is set based on a measured value in the first detection state or a value obtained by adding a measurement error to the measured value. When the measured value of quality factor is less than the threshold, it is determined that "a foreign object is present" or "there is a high possibility that a foreign object is present". When the measured value of quality factor is greater than or equal to the threshold, it is determined that "no foreign object is present" or "there is a low possibility that a foreign object is present."

A second threshold setting method is a method in which the TX 100 adjusts and determines a threshold based on information transmitted from the RX 200. One point to be noted as a difference from the first threshold setting method is that the value of the waveform attenuation index possibly varies depending on the RX 200 that is a target to which electric power is transmitted and that is placed on the TX 100. This is because the electric characteristics of the RX 200 coupled via the power transmission antenna of the TX 100 influence the value of waveform attenuation index. For example, when the quality factor is adopted as the waveform attenuation index, the quality factor measured by the TX 100 when no foreign object is present possibly varies depending on the RX 200 placed on the TX 100. Therefore, the RX 200 holds quality factor information for each TX 100 in advance at the time when mounted on the TX 100 in a state where no foreign object is present and notifies the TX 100 of the quality factor information. The TX 100 adjusts and determines a threshold for each RX 200 based on the quality factor information received from the RX 200.

More specifically, during the negotiation phase, the TX 100 receives an FOD status data packet containing information on a reference quality factor value and adjusts and determines a threshold in the quality factor measurement method. The reference quality factor value is a quality factor that can be measured at the terminal of the power transmission antenna of a test TX 100 when the RX 200 is placed on the test TX 100 and no foreign object is present nearby. The TX 100 assumes that the reference quality factor value corresponds to the "quality factor information at the time when the RX 200 is placed on the TX 100 in a state where no foreign object is present" and uses the value to determine the threshold. In other words, the TX 100 can adjust and determine a threshold for foreign object determination using the waveform attenuation method based on the reference quality factor value. During the negotiation phase, a reference quality factor value transmitted from the RX 200 to the TX 100 is information used for foreign object detection using the quality factor measurement method that originally measures a quality factor in a frequency domain. However, when a quality factor is used as a waveform attenuation index, although a method of deriving a quality factor is different, it is possible to, for example, obtain a quality factor from the waveform of Fig. 9 with expression 1 by using the waveform attenuation method that measures a quality factor in a time domain. Therefore, it is possible to set a threshold of the quality factor in the waveform attenuation method based on the reference quality factor value. The value of waveform attenuation index, obtained by adding a predetermined value (a value corresponding to a measurement error) to the reference quality factor value may be set as a threshold for foreign object determination.

In this way, when the TX 100 sets a threshold of a quality factor in the waveform attenuation method based on the information already transmitted from the RX 200 to the TX 100 during the negotiation phase, a process, such as new measurement for setting a threshold, is not needed. As a result, it is possible to set a threshold in a shorter period of time.

A third threshold setting method is a method in which the TX 100 measures a waveform attenuation index in a state where no foreign object is present and then the TX 100 adjusts and determines a threshold based on information on the measurement result. Hereinafter, the timing for measuring the waveform attenuation factor in advance in a state where no foreign object is present will be described. During the negotiation phase in the WPC standard, when foreign object detection using the quality factor measurement method is performed and, as a result, it is determined that no foreign object is present, the phase proceeds to the calibration phase and to the power transfer phase. In other words, the fact that the phase has proceeded to the negotiation phase and the following phases means that it is determined that no foreign object is present as a result of foreign object detection using the quality factor measurement method. There is a high possibility that a waveform attenuation index can be measured in a state without no foreign object is present during any one of the negotiation phase, the calibration phase, and the power transfer phase. Therefore, the timing for measuring a waveform attenuation index in a state where no foreign object is present may be any one of the negotiation phase, the calibration phase, and the power transfer phase.

For example, a case where a waveform attenuation index is measured during the power transfer phase is assumed. The timing for measuring a waveform attenuation index in a state where no foreign object is present is set at the initial stage of the power transfer phase. The reason is that, as the time that has elapsed from the time point when it is determined using the quality factor measurement method that no foreign object is present extends, the probability that a foreign object enters near the TX 100 and the RX 200 increases. The timing is designated by the RX 200 or the TX 100, and the TX 100 measures the waveform attenuation index at that time and sets the value of the waveform attenuation index as a threshold. When the RX 200 designates the timing, the RX 200 transmits a predetermined packet to the TX 100 to notify the TX 100 of the timing. When the TX 100 designates the timing, the TX 100 transmits a predetermined packet to the RX 200 to notify the RX 200 of the timing. A value obtained by adding a predetermined value (a value corresponding to a measurement error) to the waveform attenuation index may be set as a threshold for foreign object determination.

A fourth threshold setting method is a method in which the TX 100 adjusts and determines a threshold according to transmission power. The value of waveform attenuation index possibly varies depending on the transmission power of the TX 100. The reason is that the heat generation amount, various characteristics of the electrical circuit of the TX 100, and the like vary depending on the magnitude of transmission power of the TX 100, and those influence the value of the waveform attenuation index. The TX 100 measures a waveform attenuation index for each transmission power and adjusts and determines a threshold based on the measurement results, with the result that more accurate foreign object determination with higher accuracy is possible.

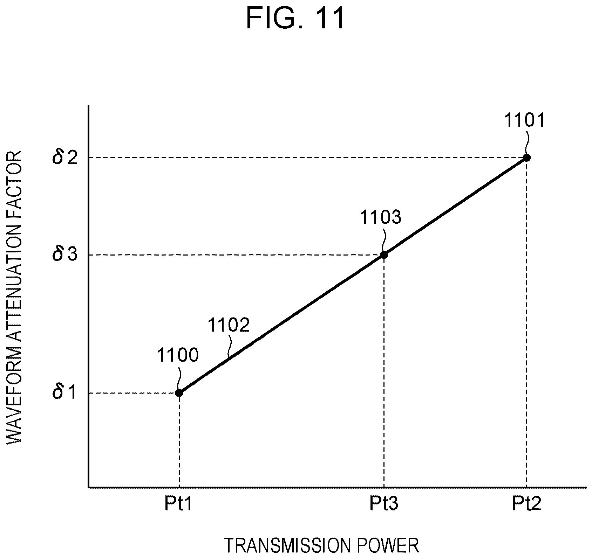

Fig. 11 is a graph for illustrating a threshold setting method for foreign object determination for each transmission power of the TX 100 in the waveform attenuation method. In Fig. 11, the abscissa axis represents the transmission power of the TX 100, and the ordinate axis represents the waveform attenuation index (waveform attenuation factor) of a voltage waveform or current waveform. On the graph line represented by the straight line segment 1102, point 1100 corresponds to a transmission power value Pt1 and a waveform attenuation index $\delta 1$, and point 1101 corresponds to a transmission power value Pt2 and a waveform attenuation index $\delta 2$. On the graph line, point 1103 corresponds to a transmission power value Pt3 and a waveform attenuation index $\delta 3$.

Initially, when electric power is transmitted from the TX 100, the RX 200 is controlled so as to enter a light load state. In the light load state, electric power is not supplied to the load of the RX 200, or only electric power lower than a threshold is supplied, or electric power within a predetermined range (hereinafter, referred to as "third range") is supplied. It is assumed that the transmission power value of the TX 100 in this state is Pt1. Then, the RX 200 transmits, to the TX 100, a packet indicating a request to measure the waveform attenuation index. Then, when the TX 100 receives the packet, the TX 100 stops power transmission in a state where the load of the RX 200 is controlled to a light load state, or decreases transmission power, to measure the waveform attenuation index $\delta 1$. At this time, the TX 100 recognizes the transmission power value Pt1 and stores CP 1100 that is a calibration point that associates the transmission power value Pt1 with the waveform attenuation index $\delta 1$, in the memory. Subsequently, the RX 200 executes control in the connected load state. The connected load state is a state where maximum electric power is supplied to the load on the RX 200 when electric power is transmitted from the TX 100, or a state where electric power higher than or equal to a predetermined threshold is supplied, or a state where electric power within a predetermined range (hereinafter, referred to as "fourth range") is supplied. Here, the "fourth range" is a range of electric power higher than the "third range". It is assumed that the transmission power value of the TX 100 in this state is Pt2. Then, the RX 200 transmits, to the TX 100, a packet indicating a request to measure the waveform attenuation index. Then, when the TX 100 receives the packet, the TX 100 stops power transmission in a state where the load of the RX 200 is controlled to a connected load state, or decreases transmission power, to measure the waveform attenuation index $\delta 2$. At this time, the TX 100 stores CP 1101 that associates the transmission power value Pt2 with the waveform attenuation index $\delta 2$, in the memory. Subsequently, the TX 100 performs linear interpolation between CP 1100 and CP 1101 to generate the line segment 1102. The line segment 1102 represents the relationship between the transmission power and the waveform attenuation index of the waveform observed in the power transmission antenna 105 in the first detection state where no foreign object is present around the TX 100 and the RX 200. Thus, the TX 100 can estimate the waveform attenuation index of the waveform observed in the power transmission antenna 105 for each transmission power value in the first detection state based on the line segment 1102. For example, when the transmission power value is Pt3, the waveform attenuation index is estimated as $\delta 3$ from point 1103 on the line segment 1102, corresponding to Pt3. The TX 100 can calculate a threshold used to determine the presence or absence of a foreign object for each transmission power value based on the estimated result. For example, a waveform attenuation index greater by a predetermined value (a value corresponding to a measurement error) than the estimated result of the waveform attenuation index in the first detection state at a transmission power value can be set as a threshold for foreign object determination.

The CAL process that the TX 100 and the RX 200 execute for the TX 100 to acquire a combination of a transmission power value and a waveform attenuation index is referred to as "CAL process using the waveform attenuation method" in the following description. Executing the calibration process again to update or add calibration points after the calibration process has been executed once is referred to as recalibration process and is abbreviated as ReCAL process. In the above-described example, two-point transmission power values Pt1 and Pt2 are measured. For higher accuracy, the waveform attenuation index of each transmission power may be calculated by performing measurement at three or more points. The RX 200 may execute control in the light load state and control in the connected load state after notifying the TX 100 of the execution of the controls through a predetermined packet. Any one of the two controls may be executed first.

An operation to calculate a threshold used for foreign object determination for each load (or each transmission power value), described in the present embodiment, may be executed during the calibration phase. As described above, the TX 100 acquires data needed at the time of performing foreign object detection using the power loss method during the calibration phase. At this time, the TX 100 acquires data related to the receiving power value and power loss of the RX 200 in a case where the load state of the RX 200 is a light load state and data related to the receiving power value and power loss of the RX 200 in a case where the load state is a connected load state. Therefore, the measurement of CP 1100 and CP 1101 in Fig. 11 may be performed together with the measurement of power loss during the calibration phase, when the RX 200 enters a light load state or when the RX 200 enters a connected load state. For example, when the TX 100 receives a signal having first reference receiving power information from the RX 200, the TX 100 measures CP 1100 in addition to a predetermined process to be executed during the calibration phase. The first reference receiving power information is information on RP1 predefined in the WPC standard. Alternatively, another message may be used. When the TX 100 receives a signal having second reference receiving power information from the RX 200, the TX 100 measures CP 1101 in addition to a predetermined process to be executed during the calibration phase. The second reference receiving power information is information on RP2 predefined in the WPC standard. Alternatively, another message may be used. There is no need to set separate periods for the measurements of CP 1100 and CP 1101, so it is possible to measure CP 1100 and CP 1101 in a shorter period of time.

In this way, the TX 100 adjusts and sets a threshold of the waveform attenuation index for each transmission power based on information on the waveform attenuation index measured by the TX 100 at the transmission power. For example, when a quality factor is used as a waveform attenuation index, the TX 100 compares the measured value of quality factor with the threshold determined by using the above-described method. When the measured value of quality factor is less than the threshold, it is determined that "a foreign object is present" or "there is a possibility that a foreign object is present". When the measured value of quality factor is greater than or equal to the threshold, it is determined that "no foreign object is present" or "there is a low possibility that a foreign object is present". With the above configuration, a threshold is set at each transmission power of the TX 100, so foreign object determination with further high accuracy is possible.

The number of thresholds for foreign object determination, set by using the above-described method, is not limited to one. A plurality of thresholds can be set in a stepwise manner. For example, the first threshold is set as a threshold for determining that "there is a state abnormality", the second threshold is set as a threshold for determining that "there is a high possibility of state abnormality", the third threshold is set as a threshold for determining that "there is a low possibility of state abnormality", and the fourth threshold is set as a threshold for determining "there is no state abnormality".

There is a possibility that accuracy cannot be ensured by executing the foreign object detection process only once. For example, when transmission power control is executed once in executing foreign object detection using the waveform attenuation method and foreign object determination is performed based on the waveform attenuation index at that time, there is a possibility that disruptions occur in the amplitude and phase of the power transmission waveform during a transmission power control period. Noise contamination during a transmission power control period, misalignment of the RX 200 placed on the TX 100, or the like can occur. In this case, when the value of the waveform attenuation index obtained from the power transmission waveform during a transmission power control period once is not accurate, there is a possibility of erroneous determination in foreign object determination. Therefore, the TX 100 can execute transmission power control multiple times, measure the waveform attenuation index from the power transmission waveform during a plurality of transmission power control periods, and perform foreign object determination with higher accuracy based on measurement results of multiple times.

Next, the first measurement method will be described as a coupling state index measurement method for a power transmission antenna and a power receiving antenna. A measurement performed in the first measurement method is referred to as first measurement. In wireless power transfer, electric power is transmitted while the power transmission antenna 105 and the power receiving antenna 205 are electromagnetically coupled. A voltage is induced in the power receiving antenna 205 by flowing alternating current through the power transmission antenna 105 to change the magnetic flux penetrating the power receiving antenna 205. The coupling coefficient (denoted by k or k value), which is an index indicating the coupling state between the power transmission antenna and the power receiving antenna, becomes, for example, "k = 1" when all (100%) of the magnetic flux generated by the power transmission antenna passes through the power receiving antenna. When 70% of the magnetic flux generated by the power transmission antenna penetrates the power receiving antenna, "k = 0.7". In this case, the remaining (30%) magnetic flux generated by the power transmission antenna is leakage magnetic flux. This is the magnetic flux that has not penetrated the power receiving antenna out of the magnetic flux generated by the power transmission antenna. Therefore, when the coupling state between the power transmission antenna and the power receiving antenna is good and the k value is large, the transmission efficiency of electric power transmitted from the TX 100 to the RX 200 is high. On the contrary, when the coupling state is not good and the k value is small, the transmission efficiency of electric power transmitted from the TX 100 to the RX 200 is low.

Factors causing the value of coupling coefficient to reduce include the presence of a foreign object (such as a metal piece) between the power transmission antenna and the power receiving antenna and a misalignment between the power transmission antenna and the power receiving antenna. Alternatively, the distance between the power transmission antenna and the power receiving antenna is long. When a foreign object is placed between the power transmission antenna and the power receiving antenna, there is a possibility that heat is generated in the foreign object. When there is a misalignment or separation between the power transmission antenna and the power receiving antenna, leakage magnetic flux increases, so there is a possibility that significant noise is generated in the surrounding area. When the k value is small, appropriate control is needed to achieve safer and higher quality wireless power transfer. In the present embodiment, in order to improve the accuracy of detecting a foreign object and the detection accuracy in a case where the misalignment or the distance is large, a process is executed to detect the coupling state (including the coupling coefficient) between the power transmission antenna and the power receiving antenna.

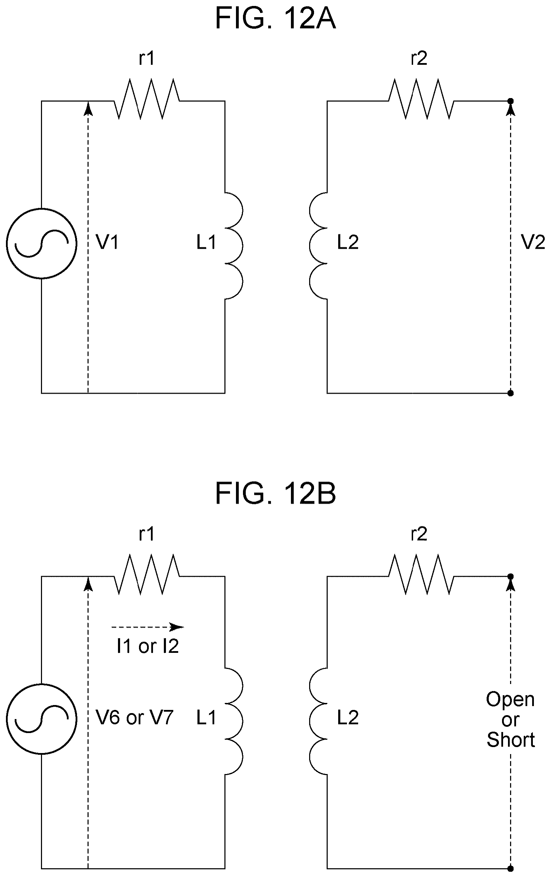

A coupling state index measurement method for the power transmission antenna and the power receiving antenna will be described with reference to Figs. 12A and 12B. Fig. 12A is an equivalent circuit diagram for illustrating the first measurement method. The definitions of various quantities related to the power transmission antenna (power transmission coil) of a primary side (TX 100) are shown below.

· $r_1$: The winding resistance of the power transmission antenna
· $L_1$: The self-inductance of the power transmission antenna
· $V_1$: The transmission voltage (input voltage) applied to the power transmission antenna and measured by the TX 100

The definitions of various quantities related to the power receiving antenna (power receiving coil) of a secondary side (RX 200) are shown below.

· $r_2$: The winding resistance of the power receiving antenna
· $L_2$: The self-inductance of the power receiving antenna
· $V_2$: The receiving voltage (output voltage) applied to the power receiving antenna and measured by the RX 200

The coupling coefficient k between the power transmission antenna and the power receiving antenna can be calculated by using the following expression 2.

$$k = (V2/V1) \cdot \sqrt{(L1/L2)} \qquad (\text{Expression } 2)$$

The value of the coupling coefficient k can be referred to as "k value".

When the TX 100 calculates the coupling coefficient k, the RX 200 notifies the TX 100 of the measured receiving voltage V2 and the value of the self-inductance L2 of the power receiving antenna, held by the RX 200 in advance. The TX 100 calculates a k value by using the measured transmission voltage V1, the value of the self-inductance L1 of the power transmission antenna, held in advance, and the receiving voltage V2 and the value of the self-inductance L2, received from the RX 200. Alternatively, the RX 200 can notify the TX 100 of V2 and a constant calculated by using all or any one of L1 and L2, and the TX 100 can calculate a k value by using V2 and the constant received from the RX 200 and the transmission voltage V1 measured by the TX 100.

On the other hand, when the RX 200 calculates a coupling coefficient k, the TX 100 notifies the RX 200 of the measured transmission voltage V1 and the value of the self-inductance L1 of the power transmission antenna, held in advance. The RX 200 calculates a k value by using the measured receiving voltage V2, the value of the self-inductance L2 of the power receiving antenna, held in advance, and the transmission voltage V1 and the value of the self-inductance L1, received from the TX 100. Alternatively, the TX 100 can notify the RX 200 of V1 and a constant calculated by using all or any one of L1 and L2, and the RX 200 can calculate a k value by using the constant and V1 received from the TX 100, and the receiving voltage V2 measured by the RX 200.

As for the transmission voltage V1, the TX 100 actually measures the voltage applied to the power transmission antenna or the TX 100 calculates the voltage from the set value of transmission power. Alternatively, the transmission voltage V1 may be used as the set value of the transmission voltage during power transmission. The transmission voltage V1 applied to the power transmission antenna can be obtained from the transmission voltage (denoted by V3) applied to the circuit (for example, the inverter) of the power transmission unit 103 of the TX 100 and the voltage applied between both ends of the resonant capacitor 107. Here, the transmission voltage V3 applied to the circuit of the power transmission unit 103 of the TX 100 is, for example, inverter input voltage input to the inverter of the power transmission unit 103 of the TX 100 or inverter output voltage output from the inverter. In this case, the TX 100 may also calculate the transmission voltage V3 from the set value of transmission power. Alternatively, the TX 100 may actually measure the transmission voltage V3 and the voltage applied between both ends of the resonant capacitor 107 and calculate the transmission voltage V1 by using those values. Alternatively, the TX 100 may transmit the measured transmission voltage V3 and the value of the voltage applied between both ends of the resonant capacitor 107 to the RX 200, and the RX 200 may calculate a k value by obtaining the transmission voltage V1.

When the TX 100 or the RX 200 performs the first measurement, the RX 200 may turn off the third switch unit 213 to execute control such that the terminal of the power receiving antenna 205 enters an open state. Thus, it is possible to set both ends of the power receiving antenna to an open state, as shown in Fig. 12A. Since there is no influence from the resonant capacitor 211, the power receiving unit 203, the charging unit 206, or the battery 207 in the first measurement, it is possible to measure the coupling coefficient k with higher accuracy. The receiving voltage V2 applied to the power receiving antenna can be obtained from a receiving voltage (denoted by V4) applied to a circuit (for example, a rectifier section) of the power receiving unit 203 of the RX 200 and the voltage applied between both ends of the resonant capacitor 211. Here, the receiving voltage V4 applied to the circuit of the power receiving unit 203 of the RX 200 is, for example, rectifier section input voltage that is input to the rectifier section of the power receiving unit 203 of the RX 200. Alternatively, the receiving voltage V2 applied to the power receiving antenna can be obtained from a receiving voltage (denoted by V5) applied to the circuit (for example, the rectifier section) of the power receiving unit 203 of the RX 200 and the voltage applied between both ends of the resonant capacitor 211. Here, the receiving voltage V5 applied to the circuit of the power receiving unit 203 of the RX 200 is, for example, rectifier section output voltage that is output from the rectifier section of the power receiving unit 203 of the RX 200. In this case, the RX 200 may actually measure the receiving voltage V4 and the voltage applied between both ends of the resonant capacitor 211, and obtain the receiving voltage V2 by using those values. Alternatively, the RX 200 may actually measure the receiving voltage V5 and the voltage applied between both ends of the resonant capacitor 211, and obtain the receiving voltage V2 by using those values. Alternatively, the RX 200 may transmit the measured receiving voltage V4 and the value of the voltage applied between both ends of the resonant capacitor 211 to the TX 100, and the TX 100 may calculate a k value by obtaining the receiving voltage V2. Alternatively, the RX 200 may transmit the measured receiving voltage V5 and the value of the voltage applied between both ends of the resonant capacitor 211 to the TX 100, and the TX 100 may calculate a k value by obtaining the receiving voltage V2.

Alternatively, when the TX 100 or the RX 200 performs the first measurement, the RX 200 may be controlled to enter a light load state or a connected load state. By keeping the state of the load of the RX 200 constant, it is possible to measure the coupling coefficient k with higher accuracy. Alternatively, the TX 100 or the RX 200 may be controlled so as to perform the first measurement in both the state where the RX 200 is in a light load state and the state where the RX 200 is in a connected load state. Alternatively, the TX 100 or the RX 200 may be controlled so as to perform the first measurement in each of three or more load states. It is possible to determine the coupling state with higher accuracy by measuring coupling states in multiple load states of the RX 200 and determining a coupling state based on those measurement results.

As an index indicating the electromagnetic coupling state between the power transmission antenna and the power receiving antenna, there are multiple quantities in addition to the coupling coefficient, and those are collectively referred to as "coupling state indices" in the present embodiment. The coupling state indices all have values corresponding to the electromagnetic coupling state between the power transmission antenna and the power receiving antenna.

The contents of the present embodiment can also be applied similarly to cases where other coupling state indices, other than the coupling coefficient, are used.

For example, one method of calculating a coupling state index is to use the transmission voltage V3 applied to the circuit (such as the inverter) of the power transmission unit 103 of the TX 100 and the receiving voltage (denoted by V4) applied to the circuit (such as the rectifier section) of the power receiving unit 203 of the RX 200. Here, the transmission voltage V3 applied to the circuit of the power transmission unit 103 of the TX 100 is, for example, inverter input voltage input to the inverter of the power transmission unit 103 of the TX 100 or inverter output voltage output from the inverter. Here, the receiving voltage V4 applied to the circuit of the power receiving unit 203 of the RX 200 is, for example, rectifier section input voltage that is input to the rectifier section of the power receiving unit 203 of the RX 200. It is possible to execute the process of calculating the coupling state index between the power transmission antenna and the power receiving antenna. Alternatively, it is possible to calculate the coupling state index between the power transmission antenna and the power receiving antenna by using the transmission voltage V3 applied to the circuit (for example, the inverter) of the power transmission unit 103 of the TX 100 and the receiving voltage (denoted by V5) of the circuit (for example, the rectifier section) of the power receiving unit 203 of the RX 200. Here, the receiving voltage V5 applied to the circuit of the power receiving unit 203 of the RX 200 is, for example, rectifier section output voltage that is output from the rectifier section of the power receiving unit 203 of the RX 200. Alternatively, the receiving voltage V5 is a voltage applied to the load (charging unit, battery). The TX 100 can notify the RX 200 of the transmission voltage V3, and the RX 200 can calculate the coupling state index by using the notified V3, and V4 or V5. At this time, the TX 100 can notify the RX 200 of a constant calculated by using the electric characteristics (for example, L1) of the power transmission antenna, and the RX 200 can calculate the coupling state index by using the constant.

Alternatively, the RX 200 notifies the TX 100 of the receiving voltage V4 or the receiving voltage V5, and the TX 100 calculates the value of the coupling state index by using the notified V4 or V5, and V3. At this time, the RX 200 can notify the TX 100 of a constant calculated by using the electric characteristics (for example, L2) of the power receiving antenna, and the TX 100 can calculate the coupling state index by using the constant.

The TX 100 and the RX 200 exchange information on the voltage values V1 to V5, the values of self-inductances L1, L2, or the electric characteristics of the power transmission antenna and power receiving antenna. Hereinafter, the timing to measure the voltage values and the timing to exchange piece of information will be described. The voltage values are measured, for example, during the ping phase. During the ping phase, the TX 100 transmits a digital ping to the RX 200. Therefore, any of the voltage values V1, V2, V3, V4, V5, which occurs during the transmission of the digital ping, can be used. During the ping phase, the TX 100 and the RX 200 measure any one of the values V1 to V5 and store and hold the value in the memory 106 or the memory 208. Alternatively, the TX 100 transmits a predetermined packet to the RX 200 to notify the RX 200 of the timing to measure the voltage value. When the RX 200 receives the predetermined packet, the RX 200 measures any of the voltage values V2, V4, V5. The RX 200 measures any of the values V2, V4, V5 and stores and holds the value in the memory 208. Alternatively, the RX 200 transmits a predetermined packet to the TX 100 to notify the TX 100 of the timing to measure the voltage value. When the RX 200 receives the predetermined packet, the RX 200 measures any of the voltage values V1, V3. The TX 100 measures any of the values V1, V3 and stores and holds the value in the memory 106.

The TX 100 transmits a predetermined transmission request packet to the RX 200 to request the transmission of a packet containing information on any or all of the voltage values V2, V4, V5. When the RX 200 receives the transmission request packet, the RX 200 transmits a predetermined packet containing information on any or all of the voltage values V2, V4, V5, to the TX 100. The TX 100 receives a predetermined packet containing information on any or all of the voltage values V2, V4, V5, notified from the RX 200, and stores the information in the memory 106. The information contained in the predetermined packet may include not only the voltage of the RX 200 but also information on the receiving power, the requested receiving power value, the value of self-inductance L2, a constant calculated by using the electric characteristics of the power receiving antenna, or the like. Alternatively, the information contained in the predetermined packet may include information on the temperature of the RX 200. The TX 100 can receive the information from the RX 200 and use the information and the calculated coupling state index to execute further appropriate control. As the predetermined packet, a signal strength data packet can be used to notify the TX 100 of information on the RX 200. Alternatively, the predetermined packet may be an identification data packet or an extended identification data packet packet during the configuration phase. Alternatively, the predetermined packet may be a configuration data packet. Alternatively, the predetermined packet may be a packet during the calibration phase or the power transfer phase. In other words, the predetermined packet may be RP1, RP2, or RP0. The configuration is not limited to the example using the voltage value that the TX 100 generates at the time of transmitting a digital ping. Any of the voltage values V1 to V5 that the TX 100 generates at the time of transmitting an analog ping during the selection phase may be used. Alternatively, any of the voltage values V1 to V5 that the TX 100 generates at the time of transmitting electric power to the RX 200 during the power transfer phase may be used.

The RX 200 transmits a predetermined transmission request packet to the TX 100 to request the transmission of a packet containing information on any or all of the voltage values V1, V3. When the TX 100 receives the transmission request packet, the TX 100 transmits a predetermined packet containing information on any or all of the voltage values V1, V3 to the RX 200.

The RX 200 receives a predetermined packet containing information on any or all of the voltage values V1, V3, notified from the TX 100, and stores the information in the memory 208. The information contained in the predetermined packet may include not only the voltage of the TX 100 but also information on the transmission power value, the transmittable electric power value, the value of self-inductance L1, a constant calculated by using the electric characteristics of the power transmission antenna, or the like. Alternatively, the predetermined packet may contain the foreign object detection results from the above-described foreign object detection methods (power loss method, quality factor measurement method, waveform attenuation method) and information on the temperature of the TX 100. The RX 200 can receive the information from the TX 100 and use the information and the calculated coupling state index to execute further appropriate control. As the predetermined packet, a power transmitter capabilities (CAP) data packet can be used to notify the RX 200 of the information on the TX 100. Alternatively, a power transmitter identification (ID) data packet can be used to notify the RX 200 of the information on the TX 100. The configuration is not limited to the example using the voltage value that the TX 100 generates at the time of transmitting a digital ping. Any of the voltage values V1 to V5 that the TX 100 generates at the time of transmitting an analog ping during the selection phase may be used. Alternatively, any of the voltage values V1 to V5 that the TX 100 generates at the time of transmitting electric power to the RX 200 during the power transfer phase may be used.

When the RX 200 performs the first measurement, the RX 200 may turn off the third switch unit 213 between the resonant capacitor 211 and the power receiving unit 203 to execute control such that the terminal of the circuit formed by the power receiving antenna 205 and the resonant capacitor 211 enters an open state. Thus, in performing the first measurement method, there is no influence from the power receiving unit 203, the charging unit 206, or the battery 207, so it is possible to measure the coupling state index with higher accuracy.

Next, the second measurement method will be described as another example of a coupling state index measurement method for a power transmission antenna and a power receiving antenna. A measurement performed in the second measurement method is referred to as second measurement. Fig. 12B is an equivalent circuit diagram for illustrating the second measurement method. r1, r2, L1, and L2 are the same as those in Fig. 12A. The definitions of various quantities related to the power transmission antenna (coil) of a primary side (TX 100) are shown below.

· V6: The input voltage (transmission voltage) of the power transmission antenna when the power receiving antenna side is in a short-circuit state
· V7: The input voltage (transmission voltage) of the power transmission antenna when the power receiving antenna side is in an open state
· I1: The current flowing through the power transmission antenna when the power receiving antenna side is in a short-circuit state
· I2: The current flowing through the power transmission antenna when the power receiving antenna side is in an open state

The coupling coefficient k can be calculated by using the following expression 3.

$$k = \sqrt{(1 - Lsc/Lopen)} \qquad (\text{Expression } 3)$$

In expression 3, Lsc denotes the inductance of the power transmission antenna when both ends of the power receiving antenna are short-circuited. For example, the control unit 201 sets the third switch unit 213 and the second switch unit 210 to an on state (short-circuit state). The value of Lsc can be acquired by measuring the inductance value of the power transmission antenna in this state. The inductance value of the power transmission antenna can be obtained from the input voltage V6 and current I1 of the power transmission antenna.

In expression 3, Lopen denotes the inductance of the power transmission antenna when both ends of the power receiving antenna are open. For example, the control unit 201 sets the third switch unit 213 to an off state (open state). The value of Lopen can be acquired by measuring the inductance value of the power transmission antenna in this state. The inductance value of the power transmission antenna can be obtained from the input voltage V7 and current I2 of the power transmission antenna. In the second measurement method, the coupling state index (coupling coefficient) can be obtained from the input voltage and current of the power transmission antenna in each of the case where both ends of the power receiving antenna are short-circuited and the case where both ends of the power receiving antenna are open.

The TX 100 can calculate the coupling state index based on the transmission voltage and current applied to the circuit (for example, the inverter) included in the power transmission unit 103. In this case, the input voltages V6, V7 represent the transmission voltages applied to the circuit (for example, the inverter) included in the power transmission unit 103. Here, each of the transmission voltages V6, V7 applied to the circuit included in the power transmission unit 103 of the TX 100 is, for example, inverter input voltage or inverter output voltage. The input voltages V6, V7 may also be the voltages applied between both terminals of a series resonant circuit made up of the power transmission antenna and the resonant capacitor. Alternatively, the transmission voltage applied to the circuit (for example, the inverter) included in the power transmission unit 103 and the voltage applied between both ends of the resonant capacitor 107 may be measured, and the voltage applied to the power transmission antenna may be calculated from the results. In other words, it is possible to obtain the coupling state index from the measurement results of the transmission voltage applied to the circuit (for example, the inverter) included in the power transmission unit 103 and the voltage applied between both ends of the resonant capacitor 107. The transmission voltage applied to the circuit (for example, the inverter) included in the power transmission unit 103 in this case may be calculated by the TX 100 from the set value of the transmission power.

In Fig. 12B, the current I1 or I2 is not limited to the current flowing through the power transmission antenna, and may be a current flowing through the circuit (for example, the inverter) included in the power transmission unit 103. Here, the current flowing through the circuit included in the power transmission unit 103 of the TX 100 is, for example, inverter input current or inverter output current. An example in which the open state and short-circuit state of the power receiving antenna are implemented by the control unit 201 controlling the second switch unit 210 and the third switch unit 213 has been described. These states may be implemented by the power receiving unit 203. A light load state may be employed instead of a short-circuit state. A connected load state may be employed instead of an open state.

In the second measurement method, the TX 100 can calculate the coupling state index by measuring the input voltages V6, V7 and the currents I1, I2. Therefore, the information such as the voltage values measured by the RX 200 and the inductance value of the power receiving antenna is not necessary, so the notification of the information from the RX 200 to the TX 100 is not needed. However, when the TX 100 measures the input voltage V6 and the current I1, the RX 200 needs to set both terminals of the circuit including the power receiving antenna to a short-circuit state. When the TX 100 measures the input voltage V7 and the current I2, the RX 200 needs to set both terminals of the circuit including the power receiving antenna to an open state. In other words, depending on the timing at which the TX 100 measures the input voltage and the current, the RX 200 needs to control both terminals of the circuit including the power receiving antenna to a short-circuit state or an open state. When the control is completed, the TX 100 performs the measurement. Regarding the measurement timing, the TX 100 determines the timing and notifies the RX 200 of the timing, or the RX 200 determines the timing and notifies the TX 100 of the timing. When the RX 200 completes control to set both terminals of the circuit including the power receiving antenna to a short-circuit state or an open state, the RX 200 notifies the TX 100. These notifications are performed through communication based on the WPC standard between the first communication unit 104 of the TX 100 and the first communication unit 204 of the RX 200, or communication based on a standard other than the WPC standard between the second communication unit 109 of the TX 100 and the second communication unit 212 of the RX 200.

The input voltages V6, V7 and the currents I1, I2 are measured, for example, during the ping phase. During the ping phase, the TX 100 transmits a digital ping to the RX 200. Therefore, the values of V6, V7 and currents I1, I2 that occur at the time of transmitting a digital ping can be used. During the ping phase, the TX 100 acquires the values of V6, V7, I1, and I2, holds the values in the memory 106, and calculates a coupling state index. The configuration is not limited to the example using the voltage values and current values that occur at the time when the TX 100 transmits a digital ping. For example, the values of V6, V7, I1, and I2 that the TX 100 generates at the time of transmitting an analog ping during the selection phase may be used. Alternatively, the voltage values V6, V7, I1, and I2 that occur when the TX 100 transmits electric power to the RX 200 during the power transfer phase may be used.

The present disclosure relates to a coupling state index measurement method for a power transmission antenna and a power receiving antenna, and both the first measurement method and the second measurement method are applicable. Hereinafter, a method of setting a state determination threshold for a coupling state index acquired by the first or second measurement method will be described. State determination refers to determination regarding foreign object detection between the power transmission antenna and the power receiving antenna, determination regarding detection of misalignment between the power transmission antenna and the power receiving antenna, determination regarding detection of separation between the power transmission antenna and the power receiving antenna, or the like. It is possible to determine the presence or absence of a state abnormality using a state determination threshold by performing the first or second measurement method. Hereinafter, first to fourth threshold setting methods will be described.

The first threshold setting method is a method of setting the value of coupling state index in a state where there is no state abnormality as a threshold for a coupling state index used for state detection between the power transmission antenna and the power receiving antenna. In state detection, determination results such as "there is a state abnormality", "there is a high possibility of state abnormality", "there is a low possibility of state abnormality", and "there is no state abnormality" are obtained. A case where that RX 200 is placed on a test TX 100 and there is no state abnormality between the power transmission antenna and the power receiving antenna is assumed. In this case, the value of the coupling state index between the test TX 100 including the power transmission antenna, and the RX 200 including the power receiving antenna can be set as a threshold. The value (threshold) of the coupling state index measured in advance is stored in the memory of the RX 200, and the RX 200 notifies the TX 100 of the threshold. The TX 100 executes a determination process related to state detection by using the threshold. Regarding the threshold, the RX 200 may transmit, to the TX 100, the threshold contained in an FOD status data packet predefined in the WPC standard. Alternatively, the value of the coupling state index between the power transmission antenna and the power receiving antenna, with which a predetermined power transfer efficiency is obtained may be set as a threshold. In state detection, for example, the following determination results can be obtained.

· "The predetermined power transfer efficiency cannot be obtained", or "the coupling between the power transmission antenna and the power receiving antenna is weak"
· "There is a high possibility that the predetermined power transfer efficiency cannot be obtained", or "there is a possibility that the coupling between the power transmission antenna and the power receiving antenna is weak"
· "There is a high possibility that a predetermined power transfer efficiency is obtained", or "there is a possibility that the coupling state between the power transmission antenna and the power receiving antenna is good"
· "The predetermined power transfer efficiency is obtained", or "the coupling state between the power transmission antenna and the power receiving antenna is good"

Here, a case where the RX 200 is placed on the test TX 100, there is no state abnormality between the power transmission antenna and the power receiving antenna, and a predetermined power transfer efficiency is obtained is assumed. In this case, the value of the coupling state index between the test TX 100 including the power transmission antenna, and the RX 200 including the power receiving antenna can be set as a threshold. The RX 200 holds the value of the coupling state index measured in advance is stored as a threshold in the memory and notifies the TX 100 of the threshold. The TX 100 executes a determination process related to state detection by using the threshold. Regarding the threshold, the RX 200 may transmit, to the TX 100, the threshold included in an FOD status data packet predefined in the WPC standard.

The second threshold setting method is a method in which the TX 100 and the RX 200 set a coupling state index measured by using the first or second measurement method as a threshold in a predetermined state. The predetermined state is "a state in which there is no state abnormality between the power transmission antenna and the power receiving antenna". In the method of confirming the state, foreign object detection using the power loss method, foreign object detection using the waveform attenuation method, foreign object detection using the quality factor measurement method, foreign object detection based on the temperature of the TX 100 or the RX 200, or the like can be used. As a result, when it is determined that there is no state abnormality, "a state where there is no state abnormality between the power transmission antenna and the power receiving antenna" can be confirmed with high probability.

In other words, this confirmation is performed by methods and devices other than the first or second measurement method. As a result, when it is determined as "no state abnormality" (or "no foreign object"), the coupling state index is measured by using the first or second measurement method, and an appropriate threshold is set based on the measurement result.

For example, in the WPC standard, a foreign object detection process using the quality factor measurement method is executed during the negotiation phase or the renegotiation phase. As a result of the foreign object detection process, when it is determined as "no state abnormality" (or "no foreign object"), the coupling state index is measured by using the first or second measurement method after the negotiation phase or the renegotiation phase. It is possible to set a further appropriate threshold based on the measurement result. A foreign object detection process using the power loss method is executed during the power transfer phase. After the foreign object detection process is executed, the coupling state index is measured by using the first or second measurement method, and a further appropriate threshold is set based on the measurement result. Alternatively, a foreign object detection process can be executed by using a quality factor or the like during the selection phase or the ping phase. In this case, a coupling state index is measured by using the first or second measurement method after the phase in which the foreign object detection process is executed, and it is possible to set an appropriate threshold based on the measurement result. Alternatively, the above-described foreign object detection process using the waveform attenuation method is executed during the power transfer phase. After the foreign object detection process is executed, the coupling state index is measured by using the first or second measurement method, and a further appropriate threshold is set based on the measurement result.

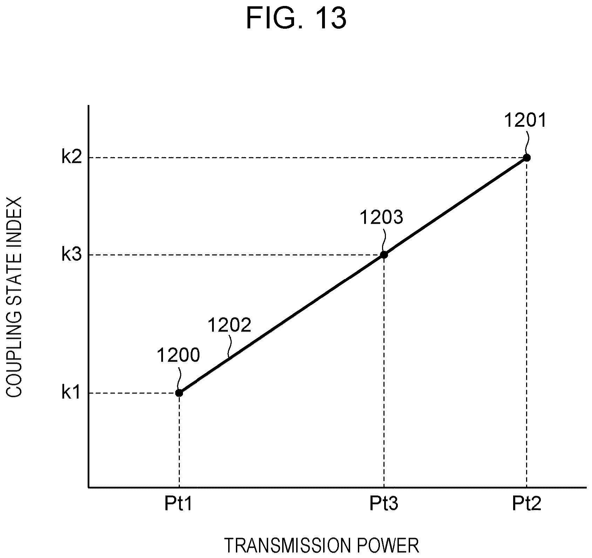

Next, a third threshold setting method will be described with reference to Fig. 13. Fig. 13 is a graph for illustrating a threshold setting method in state detection using a coupling state index. In Fig. 13, the abscissa axis represents transmission power, and the ordinate axis represents coupling state index. On the graph line represented by the straight line segment 1202, point 1200 corresponds to a transmission power value Pt1 and a coupling state index value k1, and point 1201 corresponds to a transmission power value Pt2 and a coupling state index value k2. On the graph line, point 1203 corresponds to a transmission power value Pt3 and a coupling state index value k3. The above-described first measurement method or second measurement method can be used to calculate each coupling state index value.

As shown in Fig. 3, the charging unit 206 and the battery 207 are connected to the power receiving unit 203 of the RX 200 as a load, so the calculated coupling state index value changes depending on the state of the load. To determine the presence or absence of a state abnormality based on the state of the load, it is necessary to set a threshold of the coupling state index. Initially, when electric power is transmitted from the TX 100, the RX 200 controls the load such that the load enters a light load state. The light load state is a state where no electric power is supplied to the load of the RX 200 or only electric power lower than or equal to a threshold is supplied to the load of the RX 200. Alternatively, the light load state is a load state where the receiving power value of the RX 200 falls within a predetermined range (hereinafter, referred to as "fifth range").

It is assumed that the transmission power value of the TX 100 in this state is Pt1. Then, the RX 200 transmits, to the TX 100, a packet indicating a request to measure the coupling state index. Alternatively, the TX 100 transmits, to the RX 200, a packet indicating a request to measure the coupling state index. The TX 100 and the RX 200 measure the transmission voltage on the TX 100 side and the receiving voltage on the RX 200 side in that state. The TX 100 and the RX 200 exchange information such as the values V1 to V7, the values of self-inductances L1, L2, and a constant calculated by using the electric characteristics of the power transmission antenna and the power receiving antenna, and the TX 100 or the RX 200 calculates a coupling state index value k1. When the RX 200 calculates the coupling state index value k1, the RX 200 notifies the TX 100 of the result. When the TX 100 calculates the coupling state index value k1, the TX 100 notifies the RX 200 of the result and Pt1. At this time, the TX 100 recognizes the transmission power value Pt1 and stores CP 1200 associating Pt1 with k1 in the memory. Alternatively, the RX 200 stores CP 1200 associating Pt1 with k1 in the memory.

Subsequently, when electric power is transmitted from the TX 100, the RX 200 controls the load of the RX 200 such that the load enters a connected load state. The connected load state is a state where maximum electric power is supplied to the load of the RX 200 or electric power higher than or equal to a threshold is supplied to the load of the RX 200. Here, "maximum electric power" refers to electric power with a value close to the reference power. Alternatively, the light load state is a load state where the receiving power value of the RX 200 falls within a predetermined range (hereinafter, referred to as "sixth range"). Here, the sixth range is a range of electric power values that are higher than the fifth range. It is assumed that the transmission power value of the TX 100 in this state is Pt2. Then, the RX 200 transmits, to the TX 100, a packet indicating a request to measure the coupling state index. Alternatively, the TX 100 transmits, to the RX 200, a packet indicating a request to measure the coupling state index. The TX 100 and the RX 200 measure the transmission voltage on the TX 100 side and the receiving voltage on the RX 200 side in that state. The TX 100 and the RX 200 exchange information such as the values V1 to V7, the values of self-inductances L1, L2, and a constant calculated by using the electric characteristics of the power transmission antenna and the power receiving antenna, and the TX 100 or the RX 200 calculates a coupling state index value k2. When the RX 200 calculates the coupling state index value k2, the RX 200 notifies the TX 100 of the result. When the TX 100 calculates the coupling state index value k2, the TX 100 notifies the RX 200 of the result and Pt2. The TX 100 stores CP 1201 associating Pt2 with k2 in the memory. Alternatively, the RX 200 stores CP 1201 associating Pt2 with k2 in the memory. Subsequently, the TX 100 performs straight line interpolation between CP 1200 and CP 1201 to generate the line segment 1202. The line segment 1202 represents the relationship between transmission power and coupling state index in a state where there is no state abnormality around the TX 100 and the RX 200. The TX 100 can estimate a coupling state index value for each transmission power value in a state where there is no state abnormality around the TX 100 and the RX 200 by using the line segment 1202. For example, a case where the transmission power value is Pt3 is assumed. In this case, it is possible to estimate the coupling state index value k3 from point 1203 on the line segment 1202, corresponding to the transmission power value Pt3. The TX 100 can calculate a threshold used to determine the presence or absence of a state abnormality for each transmission power value based on the estimated result. For example, a coupling state index value obtained by adding a predetermined value (a value corresponding to a measurement error) to an estimated result of the coupling state index value in a case where there is no state abnormality at a transmission power value can be set as a determination threshold.

In this way, a CAL process that the TX 100 and the RX 200 execute for the TX 100 to acquire combinations of the transmission power value and the coupling state index value is referred to as "CAL process of the coupling state index measurement method". Executing the calibration process again to update or add calibration points after the calibration process has been executed once is referred to as recalibration process and is abbreviated as ReCAL process. The RX 200 may execute control to set the load in a light load state and control to set the load in a connected load state after notifying the TX 100 that the controls are executed. Any one of these two controls may be executed first.

In the present embodiment, an operation to calculate a determination threshold of state detection for each load (or each transmission power value) is performed, for example, during the calibration phase. The TX 100 acquires data needed at the time of performing foreign object detection using the power loss method during the calibration phase. At this time, the TX 100 acquires data on each amount of power loss in a case where the load state of the RX 200 is a light load state and data on each amount of power loss in a case where the load state of the RX 200 is a connected load state. Therefore, the measurement of CP 1200 and CP 1201 in Fig. 13 can be performed together with the measurement of power loss during the calibration phase when the RX 200 enters a light load state or when the RX 200 enters a connected load state. In other words, when the TX 100 receives first reference receiving power information from the RX 200, the TX 100 measures CP 1200 in addition to a predetermined process to be executed during the calibration phase. The first reference receiving power information is information on RP1 predefined in the WPC standard. Alternatively, another message may be used. When the TX 100 receives second reference receiving power information from the RX 200, the TX 100 measures CP 1201 in addition to a predetermined process to be executed during the calibration phase. The second reference receiving power information is information on RP2 predefined in the WPC standard. Alternatively, another message may be used. In this way, a period for measuring CP 1200 and CP 1201 does not need to be separately set, so it is possible to measure CP 1200 and CP 1201 in a shorter period of time.

The fourth threshold setting method is a method in which the TX 100 or the RX 200 sets a threshold in advance for a coupling state index having a value in a predetermined range. The threshold is a common value not dependent on the RX 200 that is a target to which electric power is transmitted, and is a predetermined value held by the TX 100 or the RX 200. The threshold may be a fixed value that does not depend on a situation or may be a variable value that the TX 100 or the RX 200 determines according to a situation. For example, when the coupling state index is used as the coupling coefficient k, the range of k value is "$0 \leq k \leq 1$". For example, the TX 100 or the RX 200 determines that "there is a state abnormality" when "$0 \leq k < 0.2$" and determines that "there is a high possibility of state abnormality" when "$0.2 \leq k < 0.5$". The TX 100 or the RX 200 determines that "there is a low possibility of state abnormality" when "$0.5 \leq k < 0.8$", and determines that "there is no state abnormality" when "$0.8 \leq k \leq 1$". The data of the conditions related to the k value is held in the memory in advance, and a determination process is executed based on the data.

Alternatively, the TX 100 or the RX 200 determines that, for example, "a predetermined power transfer efficiency is not obtained" or "the coupling between the power transmission antenna and the power receiving antenna is weak" when "$0 \leq k < 0.2$". The TX 100 or the RX 200 determines that "there is a high possibility that a predetermined power transfer efficiency cannot be obtained", or "the coupling between the power transmission antenna and the power receiving antenna is weak" when "$0.2 \leq k < 0.5$". The TX 100 or the RX 200 determines that "there is a high possibility that a predetermined power transfer efficiency is obtained", or "there is a possibility that the coupling state between the power transmission antenna and the power receiving antenna is good" when "$0.5 \leq k < 0.8$". The TX 100 or the RX 200 determines that "a predetermined power transfer efficiency is obtained" or "the coupling state between the power transmission antenna and the power receiving antenna is good" when "$0.8 \leq k \leq 1$". The data of the conditions related to the k value is held in the memory in advance, and a determination process is executed based on the data.

In setting a determination threshold related to state detection using the coupling state index as well, it is possible to set a value obtained by adding a predetermined value (a value corresponding to a measurement error) to the coupling state index value calculated based on a measurement result or received information, as a determination threshold. As described above, the number of thresholds is not limited to one, and a plurality of thresholds can be set in a stepwise manner.

Next, the timing to calculate the coupling state between the power transmission antenna and the power receiving antenna by using the first or second measurement method will be described. The coupling state is calculated (measured) when the RX 200 transmits a predetermined packet to the TX 100. Here, the predetermined packet is a signal strength data packet that the RX 200 transmits to the TX 100. Alternatively, the predetermined packet may be an identification data packet or an extended identification data packet during the configuration phase. Alternatively, the predetermined packet may be a configuration data packet. Alternatively, the predetermined packet may be a packet during the calibration phase or the power transfer phase. In other words, the predetermined packet may be RP1, RP2, or RP0.

When the TX 100 has received a predetermined packet from the RX 200, the TX 100 calculates the coupling state index between the power transmission antenna and the power receiving antenna. Then, the TX 100 makes a determination by comparing the determination threshold set by the above-described method with the calculated coupling state index. When the TX 100 determines that "there is no state abnormality", the TX 100 transmits an acknowledge ACK to the RX 200 or transmits state information indicating that "there is no state abnormality" to the RX 200. When the TX 100 determines that "there is a low possibility of state abnormality" or determines that "there is a high possibility of state abnormality", the TX 100 transmits the state information indicating each determination result to the RX 200. When the TX 100 determines that "there is a state abnormality", the TX 100 transmits a negative acknowledge NAK or state information indicating that "there is a state abnormality" to the RX 200.

Alternatively, when the TX 100 determines that "a predetermined power transfer efficiency is obtained" or "the coupling state between the power transmission antenna and the power receiving antenna is good", the TX 100 transmits an acknowledge ACK or state information indicating the determination result to the RX 200. When the TX 100 determines that "there is a high possibility that a predetermined power transfer efficiency is obtained" or "there is a possibility that the coupling state between the power transmission antenna and the power receiving antenna is good", the TX 100 transmits state information indicating the determination result to the RX 200. When the TX 100 determines that "there is a high possibility that a predetermined power transfer efficiency cannot be obtained" or "there is a possibility that the coupling state between the power transmission antenna and the power receiving antenna is weak", the TX 100 transmits state information indicating the determination result to the RX 200. When the TX 100 determines that "a predetermined power transfer efficiency cannot be obtained" or "the coupling between the power transmission antenna and the power receiving antenna is weak", the TX 100 transmits a negative acknowledge NAK or state information indicating the determination result to the RX 200.

State information refers to a numeric value according to a state as follows.

· The state information "0" corresponding to the determination result "there is no state abnormality", or "a predetermined power transfer efficiency is obtained", or "the coupling state between the power transmission antenna and the power receiving antenna is good"

· The state information "1" corresponding to the determination result "there is a low possibility of state abnormality", or "there is a high possibility that a predetermined power transfer efficiency is obtained", or "there is a possibility that the coupling state between the power transmission antenna and the power receiving antenna is good"

· The state information "2" corresponding to the determination result "there is a high possibility of state abnormality", or "there is a high possibility that a predetermined power transfer efficiency cannot be obtained", or "there is a possibility that the coupling between the power transmission antenna and the power receiving antenna is weak"

· The state information "3" corresponding to the determination result "there is a state abnormality", or "a predetermined power transfer efficiency cannot be obtained", or "the coupling between the power transmission antenna and the power receiving antenna is weak"

Alternatively, the coupling state is calculated (measured) when the TX 100 transmits a predetermined packet to the RX 200. Here, the predetermined packet refers to a power transmitter capabilities (CAP) data packet that the TX 100 transmits to the RX 200. Alternatively, the predetermined packet is a power transmitter identification (ID) data packet.

When the RX 200 has received a predetermined packet from the TX 100, the RX 200 calculates the coupling state index between the power transmission antenna and the power receiving antenna. Then, the RX 200 makes a determination by comparing the determination threshold set by the above-described method with the calculated coupling state index. When the RX 200 determines that "there is no state abnormality", the RX 200 transmits a predetermined packet containing the determination result to the TX 100. When the RX 200 determines that "there is a low possibility of state abnormality" or "there is a high possibility of state abnormality", the RX 200 transmits a predetermined packet containing state information indicating each determination result to the TX 100. When the RX 200 determines that "there is a state abnormality", the RX 200 transmits a predetermined packet containing state information that indicates the determination result to the TX 100.

Alternatively, when the RX 200 determines that "a predetermined power transfer efficiency is obtained" or "the coupling state between the power transmission antenna and the power receiving antenna is good", the RX 200 transmits state information indicating the determination result to the TX 100. When the RX 200 determines that "there is a high possibility that a predetermined power transfer efficiency is obtained" or "there is a possibility that the coupling state between the power transmission antenna and the power receiving antenna is good", the RX 200 transmits state information indicating the determination result to the TX 100. When the RX 200 determines that "there is a high possibility that a predetermined power transfer efficiency cannot be obtained" or "there is a possibility that the coupling state between the power transmission antenna and the power receiving antenna is weak", the RX 200 transmits state information indicating the determination result to the TX 100. When the RX 200 determines that "a predetermined power transfer efficiency cannot be obtained" or "the coupling between the power transmission antenna and the power receiving antenna is weak", the RX 200 transmits state information indicating the determination result to the TX 100.

State information refers to a numeric value according to a state as follows.

· The state information "0" corresponding to the determination result "there is no state abnormality", or "a predetermined power transfer efficiency is obtained", or "the coupling state between the power transmission antenna and the power receiving antenna is good"

· The state information "1" corresponding to the determination result "there is a low possibility of state abnormality", or "there is a high possibility that a predetermined power transfer efficiency is obtained", or "there is a possibility that the coupling state between the power transmission antenna and the power receiving antenna is good"

· The state information "2" corresponding to the determination result "there is a high possibility of state abnormality", or "there is a high possibility that a predetermined power transfer efficiency cannot be obtained", or "there is a possibility that the coupling between the power transmission antenna and the power receiving antenna is weak"

· The state information "3" corresponding to the determination result "there is a state abnormality", or "a predetermined power transfer efficiency cannot be obtained", or "the coupling between the power transmission antenna and the power receiving antenna is weak"

Next, an operation for the TX 100 to appropriately and quickly charge the battery of the RX 200 will be described. To charge quickly, it is necessary to transmit higher electric power from the TX 100 to the RX 200. In the WPC standard, there are a baseline power profile (BPP) with which an electric power of five watts or less is transmitted to the RX 200, and an extended power profile (EPP) with which an electric power of 15 watts or less is transmitted to the RX 200. In the present embodiment, a case where a higher power transfer than EPP is performed is assumed. In other words, a case where the TX 100 transmits an electric power of more than 15 watts to the RX 200 is assumed. The state (profile, mode) in which wireless power transfer over 15 watts to the RX 200 is referred to as fast charging mode or fast charging profile. Alternatively, the state (profile, mode) in which the TX 100 and the RX 200 can set GP higher than 15 watts is referred to as fast charging mode or fast charging profile. It is assumed that the maximum value of GP that can be set in fast charging mode or fast charging profile is 50 watts.

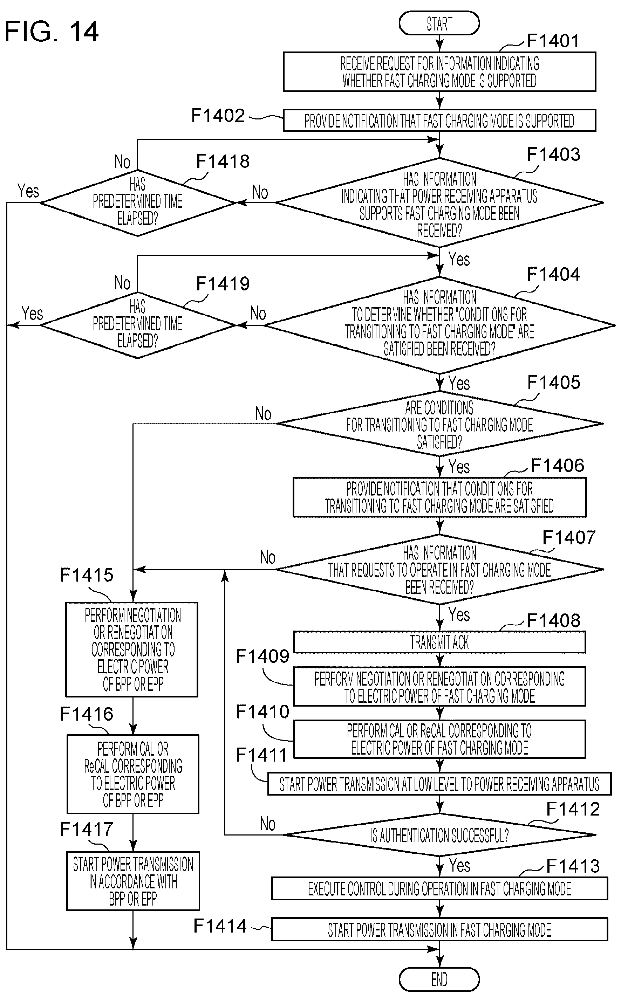

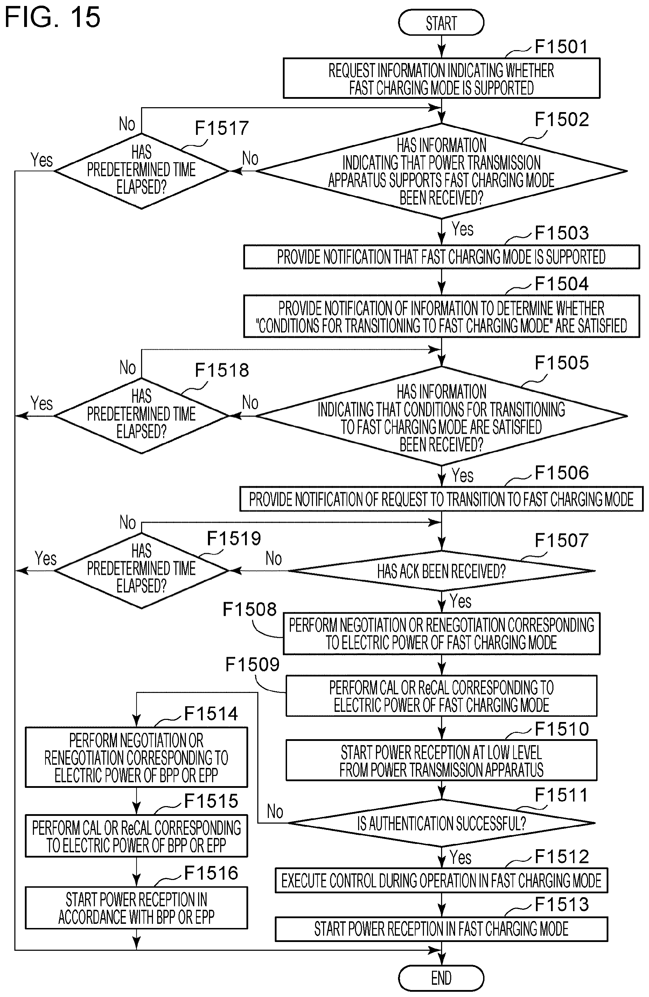

Hereinafter, the operation in a case where the TX 100 and the RX 200 perform wireless charging in fast charging mode will be described by using the flowchart for the power transmission apparatus in Fig. 14 and the flowchart for the power receiving apparatus in Fig. 15. Hereinafter, the negotiation phase and the following phases after the TX 100 and the RX 200 have executed the above-described selection phase, ping phase, and configuration phase will be described (not shown). Initially, during the negotiation phase, the RX 200 requests the transmission of information indicating whether the power transmission apparatus supports fast charging mode (F1501). Specifically, the request is performed by using a general request (GRQ) data packet predefined in the WPC standard.

When the TX 100 receives, from the RX 200, a request for the transmission of information indicating whether the power transmission apparatus supports fast charging mode (F1401), the TX 100 transmits a packet containing information indicating that the TX 100 supports fast charging mode, to the RX 200 (F1402). Here, "supporting fast charging mode" means that the TX 100 or the RX 200 has the hardware, and control devices and functions, with which the TX 100 can operate in fast charging mode, for the RX 200. The packet is a power transmitter capabilities (CAP) data packet. Alternatively, the packet is a power transmitter identification (ID) data packet. These packets include a one-bit field indicating whether fast charging mode is supported. When the TX 100 notifies the RX 200 that the TX 100 supports fast charging mode, the TX 100 stores "1" in the relevant field; whereas, when the TX 100 notifies the RX 200 that the TX 100 does not support fast charging mode, the TX 100 stores "0" in the relevant field. The meanings of "1" and "0" stored in the relevant field may be reversed.

Alternatively, the power transmitter identification (ID) data packet includes fields to store the version information of the WPC standard. The fields that store the major and minor versions of the power transmitter ID data packet store information that can identify the versions of the WPC standard (Qi standard), supported by the TX 100. These fields are used to store information on the versions that support MPP (described later) and information on the versions that support both MPP and fast charging mode. When the TX 100 does not support MPP (described later), the TX 100 is controlled so as not to notify the RX 200 of the above-described information indicating that the TX 100 supports fast charging mode. In other words, in the above-described example, when the TX 100 "does not support MPP", the TX 100 is controlled so as not to transmit "version information that supports both MPP and fast charging mode" to the RX 200. For example, the TX 100 may transmit "version information that does not support MPP or fast charging mode". When the TX 100 notifies the RX 200 of the above-described information indicating that the TX 100 supports fast charging mode, the TX 100 needs to support MPP (described later). In other words, in the above-described example, when the TX 100 "supports fast charging mode", the TX 100 is controlled so as to transmit "version information that supports both MPP and fast charging mode" to the RX 200.

The RX 200 determines whether the RX 200 has received a packet containing information that the TX 100 supports fast charging mode from the TX 100 (F1502). When the RX 200 has not received the packet, the RX 200 regularly or irregularly makes a determination of F1502 until a predetermined time elapses (No in F1502, and No in F1517). When the RX 200 has not received a packet containing information that the TX 100 supports fast charging mode within the predetermined time (No in F1502, and Yes in F1517), the RX 200 ends the process. In other words, the RX 200 returns to the selection phase.

When the RX 200 has received a packet containing information indicating that the TX 100 supports fast charging mode from the TX 100 (Yes in F1502), the RX 200 transmits a packet containing information indicating whether the RX 200 supports fast charging mode to the TX 100 (F1503). The packet is, for example, an FOD status data packet. These packets include a one-bit field indicating whether fast charging mode is supported. When the RX 200 notifies the TX 100 that the RX 200 supports fast charging mode, the RX 200 stores "1" in the relevant field; whereas, when the RX 200 notifies the TX 100 that the RX 200 does not support fast charging mode, the RX 200 stores "0" in the relevant field. Here, the RX 200 is a power receiving apparatus that supports fast charging mode, so the RX 200 transmits a packet containing information indicating that the RX 200 supports fast charging mode. The meanings of "1" and "0" stored in the relevant field may be reversed. When the packet is used during the negotiation phase, another packet may be used instead of an FOD status data packet. The TX 100 determines whether the TX 100 has received a packet containing information indicating that the RX 200 supports fast charging mode from the RX 200 (F1403). When the TX 100 has not received the packet, the TX 100 regularly or irregularly makes a determination of F1403 until a predetermined time elapses (No in F1403, No in F1418). When the TX 100 has not received a packet containing information indicating that the RX 200 supports fast charging mode within the predetermined time (No in F1403, Yes in F1418), the TX 100 ends the process. In other words, the TX 100 returns to the selection phase.

An example in which the RX 200 receives information indicating that "the TX 100 supports fast charging mode" from the TX 100, and then the RX 200 transmits information indicating that "the RX 200 supports fast charging mode" to the TX 100 has been described above. However, the order of transmission and reception of information may be reversed. In other words, the TX 100 may receive, from the RX 200, information indicating that "the RX 200 supports fast charging mode", and then the TX 100 may transmit, to the RX 200, information indicating that "the TX 100 supports fast charging mode". For example, information indicating that "the RX 200 supports fast charging mode" may be transmitted before the configuration phase. The information may be stored in the signal strength data packet transmitted from the RX 200 to the TX 100 during the ping phase. Alternatively, the information may be stored in a packet transmitted during the configuration phase. An identification data packet, an extended identification data packet, or a configuration data packet may be used as the packet.

The identification data packet includes fields to store the version information of the WPC standard. The fields that store the major and minor versions of the identification (ID) data packet store information that can identify the versions of the WPC standard (Qi standard), supported by the RX 200. These fields are used to store information on the versions that support MPP (described later) and information on the versions that support both MPP and fast charging mode. When the RX 200 does not support MPP (described later), the RX 200 is controlled so as not to notify the TX 100 of the above-described information indicating that the TX 100 supports fast charging mode. In other words, the above-described example, when the RX 200 "does not support MPP", the RX 200 is controlled so as not to transmit "version information that supports both MPP and fast charging mode" to the TX 100. For example, the RX 200 may transmit "version information that does not support MPP or fast charging mode". When the RX 200 notifies the TX 100 of the above-described information indicating that the RX 200 supports fast charging mode, the RX 200 needs to support MPP (described later). In other words, in the above-described example, when the RX 200 "supports fast charging mode", the RX 200 is controlled so as to transmit "version information that supports both MPP and fast charging mode" to the TX 100.

Only any one of the TX 100 and the RX 200 may transmit a packet containing information indicating that "the any one of the TX 100 and the RX 200 supports fast charging mode" to the other one of the RX 200 and the TX 100.

Subsequently, the RX 200 transmits a packet containing "information to determine whether the conditions for transitioning to fast charging mode are satisfied" to the TX 100 (F1504). An FOD status data packet may be used as the packet. The FOD status data packets transmitted in F1503 and F1504 may be the same single packet or may be FOD status data packets different from each other. In the former case, F1503 and F1504 are performed in one step. When the packet is used during the negotiation phase, another packet may be used instead of the FOD status data packet. A packet containing "information to determine whether the conditions for transitioning to fast charging mode are satisfied" and a packet containing information indicating that "the TX 100 supports fast charging mode" may be of the same type of packet or may be of different types.

Here, "the conditions for transitioning to fast charging mode" will be described. The conditions may be all of a plurality of conditions listed below, a combination of some of them, or any one of them.

[First Condition]

The first condition is that the TX 100 and the RX 200 support MPP. MPP stands for magnetic power profile, and it has been announced by WPC that MPP will be adopted as the next-generation standard "Qi2" for the wireless power receiving standard "Qi". MPP has a function to accurately fix the TX 100 and the RX 200 in a predetermined position. Several devices are conceivable to accurately fix the TX 100 and the RX 200 in a predetermined position. For example, by using the magnets respectively built in the TX 100 and the RX 200, it is possible to cause the power transmission antenna (power transmission coil) of the TX 100 and the power receiving antenna (power receiving coil) of the RX 200 to face each other in a correct position. In other words, in this case, MPP is an extended function of BPP and can be regarded as a profile that uses magnets to align the power transmission apparatus and the power receiving apparatus. The magnets may be permanent magnets or may be electromagnets. Increasing the transmission efficiency of electric power to reduce a power loss in a case where high power is transferred in fast charging mode is also desirable for environments. Thus, when the TX 100 and the RX 200 support MPP and can operate in accordance with MPP, the TX 100 and the RX 200 are controlled so as to operate in fast charging mode. Therefore, in F1504, the RX 200 transmits a packet containing information indicating that "the RX 200 can support MPP" to the TX 100. When the RX 200 is unable to operate in accordance with MPP, the RX 200 transmits a packet containing information indicating that the RX 200 does not support MPP. In other words, in F1504, the RX 200 transmits a packet containing information indicating whether it is possible to align the power transmission apparatus and the power receiving apparatus by using magnets.

[Second Condition]

The second condition is that the TX 100 and the RX 200 have a predetermined method (device) as a method (device) for accurately fixing the TX 100 and the RX 200 in a predetermined position. Alternatively, the second condition is that the TX 100 and the RX 200 have a predetermined method (device) as a method (device) for accurately fixing the power transmission antenna of the TX 100 and the power receiving antenna of the RX 200 in a predetermined position. Several methods can be listed as methods for accurately fixing the TX 100 and the RX 200 in a predetermined position, or methods (alignment methods) for accurately fixing the power transmission antenna of the TX 100 and the power receiving antenna of the RX 200 in a predetermined position.

<First Alignment Method>

This is a method in which magnets are respectively built in the TX 100 and the RX 200 and the power transmission antenna of the TX 100 and the power receiving antenna of the RX 200 are caused to face each other by using magnetic force.

<Second Alignment Method>

This is a method in which the TX 100 has a movable power transmission antenna and the power transmission antenna of the TX 100 and the power receiving antenna of the RX 200 are caused to face each other by moving the power transmission antenna to near the power receiving coil of the RX 200.

<Third Alignment Method>

This is a method in which the TX 100 has a holder for fixing the RX 200 so that the RX 200 can be placed in a predetermined position on the TX 100 and the power transmission antenna of the TX 100 and the power receiving antenna of the RX 200 are caused to face each other by placing the RX 200 along the holder.

Among these alignment methods, the positional accuracy with which the power transmission antenna of the TX 100 and the power receiving antenna of the RX 200 face each other varies depending on the method used. As described above, the higher the positional accuracy with which the power transmission antenna of the TX 100 and the power receiving antenna of the RX 200 face each other, the higher the transmission efficiency of electric power, which is desirable. Thus, when the TX 100 and the RX 200 support a predetermined alignment method with which the power transmission antenna of the TX 100 and the power receiving antenna of the RX 200 can be aligned with high accuracy above a predetermined level, the TX 100 and the RX 200 are controlled so as to operate in fast charging mode.

For example, among the alignment methods described above, the first alignment method is listed as an alignment method with which the power transmission antenna of the TX 100 and the power receiving antenna of the RX 200 can be aligned with high accuracy above a predetermined level. By using the magnets respectively built in the TX 100 and the RX 200, it is possible to cause the power transmission antenna (power transmission coil) of the TX 100 and the power receiving antenna (power receiving coil) of the RX 200 to face each other (in a correct position). Thus, when the TX 100 and the RX 200 support the first alignment method, the TX 100 and the RX 200 are controlled so as to operate in fast charging mode. In F1504, the RX 200 transmits a packet containing information indicating that "the RX 200 supports the first alignment method" to the TX 100. For example, the following can be listed as methods of notifying information related to alignment methods.

(1) Method of Providing Notification of Alignment Methods Supported by RX 200 through Predetermined Information

For example, when the RX 200 supports the first alignment method, the RX 200 incorporates information "1" in a predetermined packet and transmits the predetermined packet to the TX 100. When the RX 200 supports the second alignment method, the RX 200 incorporates information "2" in a predetermined packet and transmits the information "2" in the predetermined packet to the TX 100. When the RX 200 supports the third alignment method, the RX 200 incorporates information "3" in a predetermined packet and transmits the predetermined packet to the TX 100.

(2) Method of Providing Notification of Whether RX 200 Supports First Alignment Method through Predetermined Information

For example, when the RX 200 supports the first alignment method, the RX 200 incorporates information "1" in a predetermined packet and transmits the predetermined packet to the TX 100. When the RX 200 does not support the first alignment method, the RX 200 incorporates information "2" in a predetermined packet and transmits the predetermined packet to the TX 100.

[Third Condition]

The third condition is that the coupling state index between the power transmission antenna of the TX 100 and the power receiving antenna of the RX 200 is greater than or equal to a predetermined value or exceeds a predetermined value. A method of measuring the coupling state index between the power transmission antenna of the TX 100 and the power receiving antenna of the RX 200 or a method of setting a threshold to determine whether the coupling state index is good is as described above.

When the power transmission antenna of the TX 100 and the power receiving antenna of the RX 200 face each other, the value of the coupling state index also becomes a good value (in the case of the coupling coefficient, a large value), so the transmission efficiency of electric power is high, which is desirable. Thus, when the measured coupling state index between the TX 100 and the RX 200 is greater than or equal to a set threshold or exceeds a set threshold, the TX 100 and the RX 200 are controlled so as to operate in fast charging mode.

In F1504, the RX transmits a packet containing "information used by the TX to calculate the coupling state index between the power transmission antenna and the power receiving antenna" to the TX. The information received from the RX, which is necessary for the TX to calculate the coupling state index between the power transmission antenna and the power receiving antenna, is as described in the description of the above-described coupling state index measurement method.

The above description has been made based on a method of measuring the coupling state index between the power transmission antenna of the TX 100 and the power receiving antenna of the RX 200, or a method of setting a threshold of the coupling state index as a method of determining the coupling state index between the power transmission antenna of the TX 100 and the power receiving antenna of the RX 200. Hereinafter, another method of determining the coupling state index between the power transmission antenna of the TX 100 and the power receiving antenna of the RX 200.

<Another Method of Determining Coupling State Index between Power Transmission Antenna of TX 100 and Power Receiving Antenna of RX 200>

The RX 200 measures a receiving power value and notifies the TX 100 of the measurement result. For example, during the ping phase, the TX 100 transmits DP, and the RX 200 measures the voltage value of the received DP. The RX 200 stores the measured voltage value in a signal strength data packet as a signal strength value. The RX 200 transmits the packet to the TX 100, and the TX 100 receives the packet from the RX 200. The signal strength value is a value measured by the RX 200 as a voltage value in relation to the electric power transmitted by the TX 100. In other words, the magnitude of the receiving voltage value (measured value) represents the strength of the coupling between the power transmission antenna and the power receiving antenna. The TX 100 compares the signal strength value in the packet with the threshold. When the signal strength value of the TX 100 is greater than or equal to the threshold, it is determined that the TX 100 is in a strong coupling state; whereas, when the signal strength value is less than the threshold, it is determined that the TX 100 is in a weak coupling state. The signal strength value is a value obtained in a manner such that the RX 200 has measured the electric power transmitted by the TX 100 as a voltage value. The RX 200 determines the strength of coupling between the power transmission antenna and the power receiving antenna in accordance with the comparison result between the measured value of signal strength value and the threshold. When the signal strength value is greater than or equal to the threshold, the RX 200 determines that the coupling state is strong; whereas, when the signal strength value is less than the threshold, the RX 200 determines that the coupling state is weak. When the coupling state between the power transmission antenna and the power receiving antenna is strong, the TX 100 or the RX 200 is controlled so as to operate in fast charging mode. When the coupling state between the power transmission antenna and the power receiving antenna is weak, the TX 100 or the RX 200 is controlled so as not to operate in fast charging mode.

Threshold setting in the above-described "Another Method of Determining Coupling State Index between Power Transmission Antenna of TX 100 and Power Receiving Antenna of RX 200" can be performed as follows. In other words, among the threshold setting methods in measuring the coupling state index, particularly, the first or fourth threshold setting method may be performed, and the TX 100 may hold the threshold in advance. The RX 200 may notify the TX 100 of the threshold. Alternatively, the TX 100 and the RX 200 may hold the same threshold in advance.

[Fourth Condition]

The fourth condition is that, when no foreign object is detected by using the above-described foreign object detection methods, or when the presence probability of a foreign object determined in the above-described foreign object detection methods is less than or equal to a predetermined value or less than a predetermined value. The foreign object detection methods are the power loss method, the quality factor measurement method, and the waveform attenuation method. The detailed operations for executing each foreign object detection method and the method of setting a threshold for determining the presence or absence of a foreign object or the presence probability of a foreign object are as described above.

It is undesirable to perform wireless power transfer in the presence of a foreign object near the power transmission antenna of the TX 100 and the power receiving antenna of the RX 200 because heat generation and the like occur in the foreign object. Particularly, as the electric power transmitted from the TX 100 to the RX 200 increases, the amount of heat generated can also increase, which is undesirable. Thus, when there is no foreign object or the presence probability of a foreign object is less than or equal to a predetermined value or less than a predetermined value, the TX 100 and the RX 200 are controlled so as to operate in fast charging mode.

In F1504, the RX 200 transmits a packet containing "information used by the TX 100 to perform a foreign object detection method" to the TX 100. The information received from the RX 200, necessary for the TX 100 to perform a foreign object detection method, is as described above. The information also includes information used to determine a threshold to be set for performing a foreign object detection method.

A specific fast charging mode transition determination threshold for determining whether the conditions for transitioning to fast charging mode are satisfied may be set as a threshold for performing a foreign object detection method and determining the presence or absence of a foreign object or the presence probability of a foreign object. In other words, the threshold for the foreign object detection method used while operating in accordance with EPP for power transmission at 15 watts or less and the fast charging mode transition determination threshold are set so as to be different from each other. For example, the fast charging mode transition determination threshold is set to a stricter value than the threshold for the foreign object detection method used while operating in accordance with EPP for power transmission at 15 watts or less. A threshold is set by adding a predetermined margin to a reference value; however, the fast charging mode transition determination threshold is set with a smaller margin against the threshold for the foreign object detection method used while operating in accordance with EPP for power transmission at 15 watts or less. Thus, it is possible to transition to high-power transfer in fast charging mode more safely.

[Fifth Condition]

The fifth condition is that the temperature at a predetermined point in the TX 100 or the RX 200 is lower than or equal to a predetermined value or lower than a predetermined value. When high-power transfer is performed in fast charging mode, the components (such as the power transmission antenna, the power receiving antenna, and the battery) of the TX 100 or the RX 200 generate more heat compared to low-power transfer. Thus, when the mode transitions to fast charging mode in a state where the temperature of the TX 100 or the RX 200 is high and high-power transfer is performed, this may lead to a breakage of the TX 100 or the RX 200. Thus, when the temperature of the TX 100 or the RX 200 is lower than or equal to a predetermined value or lower than a predetermined value, the TX 100 and the RX 200 are controlled so as to operate in fast charging mode.

Here, a control method based on the temperature of the TX 100 will be described. It is assumed that each of the TX 100 and the RX 200 has temperature sensors at multiple locations. Particularly, temperature sensors are placed at a higher density on the power transmission antenna 105, the charging base 300, and the power receiving antenna 205 compared to other locations.

In F1504, the RX 200 transmits, to the TX 100, a packet containing "timing information to determine the timing at which the TX 100 acquires temperature information from the temperature sensors of the TX 100". The information may include information used to determine a threshold for temperature to be set.

[Sixth Condition]

The sixth condition is a case where the TX and the RX are operating in the above-described MPP. The TX and the RX execute predetermined control and operate in accordance with MPP. Then, when the TX and the RX are operating in accordance with MPP, it is determined that "the conditions for transitioning to fast charging mode are satisfied".

The first to sixth conditions have been described as "the conditions for transitioning to fast charging mode". As for "the conditions for transitioning to fast charging mode", a combination of some of the above-described first to sixth conditions may be defined as "the conditions for transitioning to fast charging mode". For example, the case where both the above-described first condition and second condition are satisfied may be set as "the conditions for transitioning to fast charging mode". Not only a combination of two of the first to sixth conditions but also a combination of three or four or five or all of the first to sixth conditions may be set as "the conditions for transitioning to fast charging mode".

Subsequently, the TX 100 determines whether the TX 100 has received, from the RX 200, a packet containing "information to determine whether the conditions for transitioning to fast charging mode are satisfied" (F1404). When the TX 100 has not received the packet, the TX 100 regularly or irregularly makes a determination of F1404 until a predetermined time elapses (No in F1404, No in F1419). When the TX 100 has not received a packet containing "information to determine whether the conditions for transitioning to fast charging mode are satisfied" after a lapse of the predetermined time (No in F1404, Yes in F1419), the TX 100 ends the process. In other words, the TX 100 transitions to the selection phase.

When the TX 100 has received a packet containing "information to determine whether the conditions for transitioning to fast charging mode are satisfied" (Yes in F1404), the TX 100 makes a determination based on the information whether the conditions for transitioning to fast charging mode are satisfied (F1405). When it is determined that "the conditions for transitioning to fast charging mode are satisfied" (Yes in F1405), the process proceed to F1406. When it is determined that "the conditions for transitioning to fast charging mode are not satisfied" (No in F1405), the process proceeds to F1415.

Here, the determination process related to the above-described conditions will be described.

[When First Condition is Included as Conditions for Transitioning to Fast Charging Mode]

When the TX 100 has received a packet containing information indicating that "the RX 200 supports MPP" and the TX 100 also supports MPP, the TX 100 determines that the conditions for transitioning to fast charging mode are satisfied, and the process proceeds to F1406. Here, when the TX 100 has received a packet not containing information indicating that "the RX 200 supports MPP", the TX 100 determines that the conditions for transitioning to fast charging mode are not satisfied, and the process proceeds to F1415. Alternatively, when the TX 100 has received a packet containing information indicating that "the RX 200 does not support MPP", the TX 100 determines that the conditions for transitioning to fast charging mode are not satisfied, and the process proceeds to F1415. In other words, when the TX 100 and the RX 200 both support MPP, the TX 100 is controlled so as to operate in fast charging mode. On the other hand, when at least any one of the TX 100 and the RX 200 does not support MPP, the TX 100 is controlled so as not to operate in fast charging mode.

[When Second Condition is Included as Conditions for Transitioning to Fast Charging Mode]

When the TX 100 has received a packet containing information indicating that "the RX 200 supports the first alignment method" and the TX 100 also supports the first alignment method, the TX 100 determines that the conditions for transitioning to fast charging mode are satisfied. In other words, the process proceeds to F1406. On the other hand, when the TX 100 has received a packet not containing information indicating that the RX 200 supports the first alignment method, the TX 100 determines that the conditions for transitioning to fast charging mode are not satisfied, and the process proceeds to F1415. Alternatively, when the TX 100 has received a packet containing information indicating that "the RX 200 does not support the first alignment method", the TX 100 determines that the conditions for transitioning to fast charging mode" are not satisfied, and the process proceeds to F1415. In other words, when the TX 100 and the RX 200 both support the first alignment method, the TX 100 is controlled so as to operate in fast charging mode. On the other hand, when at least one of the TX 100 and the RX 200 does not support the first alignment method, the TX 100 is controlled so as not to operate in fast charging mode.

[When Third Condition Is Included as Conditions for Transitioning to Fast Charging Mode]

The TX 100 calculates the coupling state index by using "information used for the TX 100 to calculate the coupling state index between the power transmission antenna and the power receiving antenna". When the coupling state index satisfies a predetermined condition, the TX 100 determines that the conditions for transitioning to fast charging mode are satisfied, and the process proceeds to F1406. Here, "satisfying a predetermined condition" refers to that the coupling state index is greater than or equal to a predetermined threshold or exceeds a threshold. On the other hand, when the coupling state index does not satisfy the predetermined condition, the TX 100 determines that the conditions for transitioning to fast charging mode are not satisfied, and the process proceeds to F1415.

[When Fourth Condition Is Included as Conditions for Transitioning to Fast Charging Mode]

The TX 100 performs a foreign object detection method by using "information used for the TX 100 to perform a foreign object detection method" received from the RX 200. When the result obtained by using the foreign object detection method satisfies a predetermined condition, the TX 100 determines that the conditions for transitioning to fast charging mode are satisfied, and the process proceeds to F1406. Here, "satisfying a predetermined condition" refers to that the result of foreign object detection by using a foreign object detection method indicates that no foreign object is present, or that the presence probability of a foreign object is lower than or equal to a predetermined value or lower than a predetermined value. When the result of foreign object detection by using a foreign object detection method does not satisfy the predetermined condition, the TX 100 determines that the conditions for transitioning to fast charging mode are not satisfied, and the process proceeds to F1415.

[When Fifth Condition Is Included as Conditions for Transitioning to Fast Charging Mode]

When the TX 100 has received, from the RX 200, a packet containing "timing information to determine the timing for the TX 100 to acquire temperature information from the temperature sensors of the TX 100", the TX 100 acquires the values from the temperature sensors of the TX 100 at the timing at which the TX 100 receives the packet. Then, the TX 100 determines whether the conditions for transitioning to fast charging mode are satisfied. When the acquired values of the temperature sensors satisfy a predetermined condition, the TX 100 determines that the conditions for transitioning to fast charging mode are satisfied, and the process proceeds to F1406. Here, "satisfying a predetermined condition" refers to that the values of the temperature sensors are less than or equal to a predetermined value or less than a predetermined value. "Not satisfying a predetermined condition" refers to that the values of the temperature sensors are greater than or equal to the predetermined value or exceed the predetermined value.

In the above-described example, it is assumed that the TX 100 acquires the values of the temperature sensors of the TX 100 at the timing at which the TX 100 receives "timing information that determines the timing for the TX 100 to acquire the temperature information from the temperature sensors of the TX 100" from the RX 200. However, the configuration is not limited thereto. For example, the TX 100 may acquire the temperature information from the temperature sensors of the TX 100 at the timing determined by the TX 100 at predetermined intervals.

The TX 100 is not limited to determining whether to transition to fast charging mode based on the acquired values of the temperature sensors. For example, the TX 100 may calculate the rate of increase in temperature based on a plurality of temperature detection values acquired at predetermined timing. In this case, when the rate of increase in temperature is lower than or equal to a predetermined threshold or lower than a predetermined threshold, the TX 100 may determine that "the conditions for transitioning to fast charging mode are satisfied". Then, when the rate of increase in temperature is higher than or equal to the predetermined threshold or exceeds the predetermined threshold, the TX 100 may determine that "the conditions for transitioning to fast charging mode are not satisfied".

The RX 200 may acquire the values of the temperature sensors of the RX 200 and transmit, to the TX 100, a packet containing "temperature information from the temperature sensors of the RX 200". The information may include information used to determine a threshold for temperature to be set. In this case, when the received values of the temperature sensors of the RX 200 satisfy a predetermined condition, the TX 100 determines that the conditions for transitioning to fast charging mode are satisfied, and the process proceeds to F1406. Here, "satisfying a predetermined condition" refers to that the values of the temperature sensors of the RX 200 are less than or equal to a predetermined value or less than a predetermined value. When the values of the temperature sensors of the RX 200 do not satisfy the predetermined condition, the TX 100 determines that the conditions for transitioning to fast charging mode are not satisfied, and the process proceeds to F1415. Here, "Not satisfying a predetermined condition" refers to that the values of the temperature sensors of the RX 200 are greater than or equal to the predetermined value or exceed the predetermined value.

The TX 100 may calculate the rate of increase in temperature based on the values of the plurality of temperature sensors acquired from the RX 200, and, when the rate of increase in temperature is lower than or equal to a predetermined threshold or lower than a predetermined threshold, may determine that "the conditions for transitioning to fast charging mode are satisfied". Then, when the rate of increase in temperature is higher than or equal to the predetermined threshold or exceeds the predetermined threshold, the TX 100 may determine that "the conditions for transitioning to fast charging mode are not satisfied".

With the methods described above, the TX 100 determines in F1405 whether the conditions for transitioning to fast charging mode are satisfied. Hereinafter, the flow from F1405 will be described. When the TX 100 determines in F1405 that "the conditions for transitioning to fast charging mode are satisfied", the process proceeds to F1406. Then, the TX 100 transmits a packet containing information indicating that "the conditions for transitioning to fast charging mode are satisfied" to the RX 200 (F1406). ACK that is an acknowledge is used as the packet. The RX 200 determines whether the RX 200 has received, from the TX 100, a packet containing information indicating that the conditions for transitioning to fast charging mode are satisfied" (F1505). When the RX 200 has not received the packet from the TX 100 (for example, when the RX 200 has received NAK that is a negative acknowledge), the RX 200 regularly or irregularly makes a determination in F1505 until a predetermined period of time elapses (No in F1505, No in F1518). When the RX 200 has not received a packet containing information indicating that "the conditions for transitioning to fast charging mode are satisfied" within a predetermined time (No in F1505, Yes in F1518), the RX 200 ends the process. In other words, the RX 200 returns to the selection phase.

When the determination is affirmative in F1505, the RX 200 transmits, to the TX 100, a packet containing information indicating that the RX 200 requests to transition to fast charging mode (F1506). The TX 100 determines whether the TX 100 has received, from the RX 200, a packet containing information indicating "a request to transition to fast charging mode" (F1407). An FOD status data packet is used as the packet. The packet includes a one-bit field that indicates whether to request a transition to fast charging mode. When the RX 200 requests that the TX 100 transition to fast charging mode, the RX 200 stores "1" (or "0") in the relevant field; whereas, when the RX 200 does not request that the TX 100 transition to fast charging mode, the RX 200 stores "0" (or "1") in the relevant field. When the packet is used during the negotiation phase, another packet may be used instead of the FOD status data packet.

When the TX 100 has not received a packet containing information indicating a request to transition to fast charging mode (No in F1407), the process proceeds to F1415. When the TX 100 has received the packet (Yes in F1407), the TX 100 transmits ACK that is an acknowledge to the RX 200 (F1408). Then, the TX 100 proceeds to F1409. The RX 200 determines whether the RX 200 has received ACK from the TX 100 (F1507). When the RX 200 has not received ACK from the TX 100, the RX 200 regularly or irregularly makes a determination of F1507 until a predetermined time elapses (No in F1507, No in F1519). When the RX 200 has not received ACK after a lapse of the predetermined time (No in F1507, Yes in F1519), the RX 200 ends the process. In other words, the RX 200 return to the selection phase. When the RX 200 has received ACK from the TX 100 (Yes in F1507), the process proceeds to F1508.

Next, the operations of the TX 100 in fast charging mode from F1409 will be described. In F1409, the TX 100 performs negotiation or renegotiation corresponding to the electric power of the fast charging mode. Specifically, the TX 100 can set a negotiable load power to over 15 watts. More specifically, the TX 100 can set the negotiable load power to a potential load power. The potential load power is the highest level of GP for which the TX 100 can negotiate. Thus, it is possible to set the GP to over 15 watts. However, there is a possibility that the negotiable load power is not set to the potential load power due to other conditions. As a result, even in fast charging mode, GP is not always set to over 15 watts. Negotiation or renegotiation is an operation performed during the above-described negotiation phase. Through the above-described control, the TX 100 and the RX 200 agree on GP through negotiation.

Then, the process proceeds to F1410, and a CAL process or ReCAL process corresponding to the electric power of the fast charging mode is executed. The CAL process or ReCAL process is an operation executed during the above-described calibration phase. When the GP is set to over 15 watts, Pt2 in Fig. 4 also exceeds 15 watts. The straight line 1002 in Fig. 4 is created so as to cover the transmission power and receiving power in fast charging mode. The straight line 1002 in Fig. 4 is created in consideration of the GP of fast charging mode. Calibration points created during the CAL process or ReCAL process in the case of fast charging mode may be controlled so as to be more than calibration points created during the CAL process or ReCAL process in the case of operating in accordance with BPP or EPP. Alternatively, calibration points created during the CAL process or ReCAL process in the case of fast charging mode are controlled so as to create a predetermined number or more of calibration points. The term "predetermined number" refers to, for example, "three" or a number greater than or equal to "three". Alternatively, the number of calibration points created during the CAL process or ReCAL process in the case of fast charging mode may be determined according to the value of GP. For example, the number of calibration points is "three" when the GP is 20 watts, the number of calibration points is "four" when the GP is 30 watt, and the number of calibration points is "five" when the GP is 40 watts. The above-described method of determining the number of calibration points can be applied to the "calibration process of the power loss method", "CAL process of the waveform attenuation method", and "CAL process of the coupling state index measurement method".

Calibration points may be controlled so as to create calibration points corresponding to the following electric powers.

·Guaranteed load power
·Requested load power
·Negotiable load power
·Potential load power
·Maximum power value or reference power

The above-described method of creating calibration points can be applied to the "calibration process of the power loss method", "CAL process of the waveform attenuation method", and "CAL process of the coupling state index measurement method".

Subsequently, the process proceeds to F1411, and the TX 100 starts power transmission at less than five watts or five watts or less to the RX 200. Then, the process proceeds to F1412, and authentication as defined in the WPC standard is performed. Here, authentication refers to a process by which the RX 200 authenticates the TX 100. The authentication includes a process in which the RX 200 determines whether the TX 100 supports authentication. When the RX 200 determines that the TX 100 supports authentication, the RX 200 transmits a predetermined first packet to the TX 100. The RX 200 determines whether a response from the TX 100 that has received the predetermined packet satisfies a predetermined condition. When the RX 200 determines that the predetermined condition is satisfied, the RX 200 transmit a predetermined second packet to the TX 100. The RX 200 determines whether the authentication is successful based on the content of the response from the TX 100 that has received the predetermined packet (F1412). Alternatively, in authentication, in addition to the process in which the RX 200 authenticates the TX 100, the TX 100 may execute a process of authenticating the RX 200. The authentication includes a process in which the TX 100 determines whether the RX 200 supports authentication. When the TX 100 determines that the RX 200 supports authentication, the TX 100 transmits a predetermined third packet to the RX 200. The TX 100 determines whether a response from the RX 200 that has received the predetermined packet satisfies a predetermined condition. When the TX 100 determines that the predetermined condition is satisfied, the TX 100 transmits a predetermined fourth packet to the RX 200. The TX 100 determines whether the authentication is successful based on the content of the response from the RX 200 that has received the predetermined packet (F1412). In this case, the TX 100 and the RX 200 determine that "the authentication is successful" when the RX 200 successfully authenticates the TX 100 and the TX 100 successfully authenticates the RX 200.

When the authentication is successful (Yes in F1412), the process proceeds to F1413, and control during operation in fast charging mode, which will be described in a second embodiment, is executed. When the authentication is successful, the RX 200 can receive electric power from the reliable TX 100. Thus, when the RX 200 attempts to receive high power from the TX 100 in fast charging mode, the RX 200 is controlled so as to transition to fast charging mode only when the authentication is successful. The fast charging mode enables power transmission at an electric power up to the GP determined in F1409. On the other hand, when the authentication fails (No in F1412), the process proceeds to F1415.

The operation executed in F1413 will be described in detail later in the second embodiment, and is control to solve problems during operation in fast charging mode. Subsequently, the process proceeds to F1414, and power transmission in fast charging mode is started. The operations from F1409 to F1414 have been described above.

Next, the operations of the TX 100 from F1415 will be described. The operations from F1415 are operations when it is determined to operate not in fast charging mode but in accordance with BPP or EPP. In F1415, the TX 100 performs negotiation or renegotiation corresponding to the electric power of BPP or EPP. Negotiation or renegotiation is an operation performed during the above-described negotiation phase. The TX 100 and the RX 200 set GP to five watts or less in BPP or 15 watts or less in EPP. Specifically, the TX 100 sets the negotiable load power to five watts or less or 15 watts or less. Thus, the GP is set to five watts or less or 15 watts or less.

Then, the process proceeds to F1416, and a CAL process or ReCAL process corresponding to the electric power of the BPP or EPP is executed. A CAL process or ReCAL process is an operation executed in the above-described calibration phase. Since the GP is set to five watts or less based on BPP or 15 watts or less based on EPP, Pt2 in Fig. 4 is also 15 watts or less. The straight line 1002 in Fig. 4 is created so as to cover the transmission power and receiving power of BPP or EPP.

The straight line 1002 in Fig. 4 is created in consideration of the GP of BPP or EPP. Subsequently, the process proceeds to F1417, and the TX 100 starts power transmission to the RX 200 in accordance with BPP or EPP. The operations from F1415 to F1417 have been described above.

Next, the operations of the RX 200 in fast charging mode from F1508 will be described. In F1508, the RX 200 performs negotiation or renegotiation corresponding to the electric power of the fast charging mode. Specifically, the RX 200 can set the requested load power to over 15 watts. Thus, it is possible to set the GP to over 15 watts. However, even in fast charging mode, GP is not always set to over 15 watts. Negotiation or renegotiation is an operation performed during the above-described negotiation phase. Through the above-described control, the TX 100 and the RX 200 agree on GP through negotiation.

Then, the process proceeds to F1509, and a CAL process or ReCAL process corresponding to the electric power of the fast charging mode is executed. The description of the process is omitted because it has been described in the above-described F1410.

Subsequently, the process proceeds to F1510, and the RX 200 starts power reception at less than five watts or five watts or less from the TX 100. Then, the process proceeds to F1511, and authentication as defined in the WPC standard is performed. When the authentication is successful (Yes in F1511), the process proceeds to F1512, and control during operation in fast charging mode, which will be described in the second embodiment, is executed. Then, the process proceeds to F1513, and power reception is started in fast charging mode. When the authentication fails (No in F1511), the process proceeds to F1514. The operations from F1508 to F1513 have been described above.

Next, the operations of the RX 200 from F1514 will be described. The operations from F1514 are operations when it is determined to operate not in fast charging mode but in accordance with BPP or EPP. In F1514, the RX 200 performs negotiation or renegotiation corresponding to the electric power of BPP or EPP. Negotiation or renegotiation is an operation performed during the above-described negotiation phase. The TX 100 and the RX 200 set GP to five watts or less in BPP or 15 watts or less in EPP. Specifically, the RX 200 sets the requested load power to five watts or less or 15 watts or less. Thus, the GP is set to five watts or less or 15 watts or less.

Then, the process proceeds to F1515, and a CAL process or ReCAL process corresponding to the electric power of BPP or EPP is executed. The description of the process is omitted because it has been described in the above-described F1416. Subsequently, the process proceeds to F1516, and the RX 200 starts power reception from the TX 100 in accordance with BPP or EPP. The operations from F1514 to F1516 have been described above.

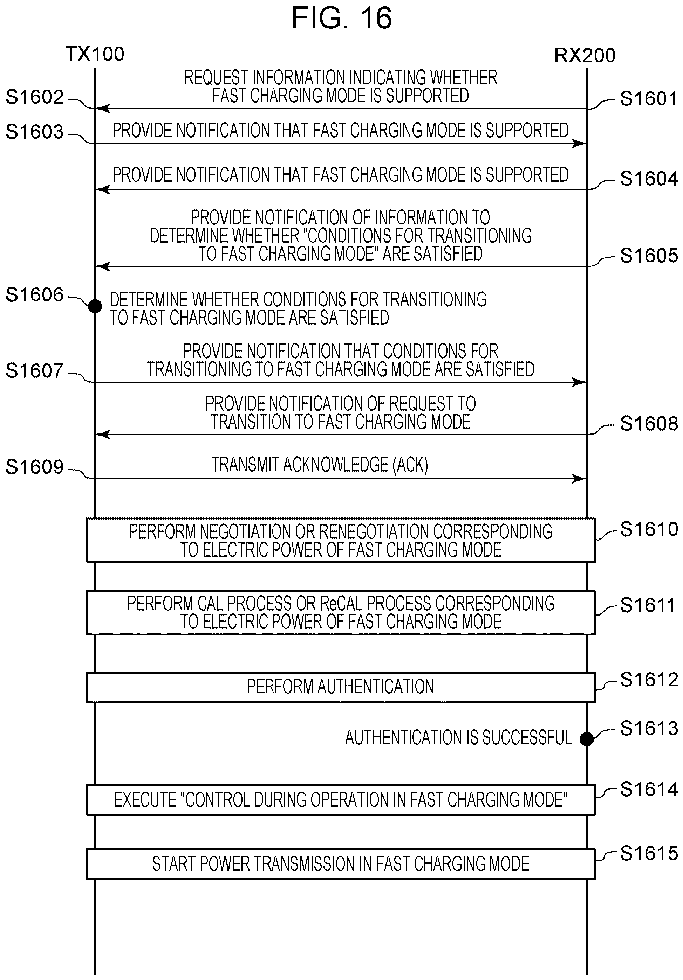

Fig. 16 is a sequence diagram in a case where electric power is transmitted in fast charging mode from the TX 100 to the RX 200. Initially, the RX 200 requests information indicating whether the TX 100 supports fast charging mode (S1601), and the TX 100 receives the request (S1602). The TX 100 and the RX 200 each provide a notification that the host apparatus supports fast charging mode (S1603, S1604). The RX 200 provides a notification about information to determine whether "the conditions for transitioning to fast charging mode" are satisfied (S1605). Based on the information, the TX 100 determines whether the conditions for transitioning to fast charging mode are satisfied (S1606). Then, to satisfy the conditions for transitioning to fast charging mode, the TX 100 provides a notification that the conditions for transitioning to fast charging mode are satisfied (S1607). Subsequently, the RX 200 provides a notification of a request to transition to fast charging mode (S1608). Then, the TX 100 transmits an acknowledge (ACK) (S1609). After that, the TX 100 and the RX 200 perform negotiation or renegotiation corresponding to the electric power of the fast charging mode (S1610). Subsequently, the TX 100 and the RX 200 execute a CAL process or ReCAL process corresponding to the electric power of the fast charging mode (S1611). Then, the RX 200 performs the authentication of the TX 100 (S1612). The TX 100 performs the authentication of the RX 200 (S1612). When the authentication is successful (S1613), the TX 100 and the RX 200 execute "control during operation in fast charging mode" (S1614). Then, the TX 100 and the RX 200 start power transmission in fast charging mode (S1615).

The order from S1601 to S1607 until the RX 200 notifies the TX 100 to request to transition to fast charging mode may be changed. For example, control may be executed such that, after S1605 to S1607 are performed, S1601 to S1604 are performed. In that case, when the TX 100 determines in S1606 that the TX 100 does not satisfy the conditions for transitioning to fast charging mode, the TX 100 may be controlled so as not to perform S1607 and the TX 100 and the RX 200 may be controlled so as not to perform S1601 to S1604.

<Various Modifications>

The roles of the controls described in F1404 to F1406 of Fig. 14 and F1504 to F1505 of Fig. 15 may be interchanged as follows.

For example, the TX 100 may notify the RX 200 through a predetermined packet of information to determine whether "the conditions for transitioning to fast charging mode" are satisfied. A power transmitter capabilities (CAP) data packet may be used as the packet. Alternatively, a power transmitter identification (ID) data packet may be used as the packet. However, these packets may be provided as responses to a general request (GRQ) data packet from the RX 200. Specifically, initially, the RX 200 may use a GRQ data packet to request the transmission of information to determine whether "the conditions for transitioning to fast charging mode" are satisfied. Then, in response to the request, the TX 100 may transmit information to determine whether "the conditions for transitioning to fast charging mode" are satisfied.

The RX 200 may determine that "the conditions for transitioning to fast charging mode" are satisfied and notifies the TX 100 of the determination result through a predetermined packet. The packet may be ACK that is an acknowledge.

The RX 200 may request to transition to "fast charging mode" by using a predetermined packet. An FOD status data packet may be used as the packet.

The information to determine whether "the conditions for transitioning to fast charging mode" are satisfied, transmitted from the TX 100 to the RX 200, is, for example, information that "the TX 100 supports MPP". Alternatively, as described in the description of the coupling state index measurement method, the above-described information is information on the TX 100, needed for the RX 200 to calculate the coupling state index. The above-described information may be a packet containing information indicating the timing for the RX 200 to acquire the values of the temperature sensors of the RX 200. Alternatively, the above-described information may be a packet containing information on the values of the temperature sensors of the TX 100.

Alternatively, the following configuration may be adopted as another modification. In other words, initially, the RX 200 notifies the TX 100 of information to execute "a foreign object detection process" or "calculation of the coupling state index". Then, the TX 100 executes "a foreign object detection process" or "calculation of the coupling state index" based on the information received from the RX 200. After that, the TX 100 notifies the RX 200 of the result of "the foreign object detection process" or "the calculation of the coupling state index". In other words, the TX 100 notifies the RX 200 of the value of the coupling state index, the presence or absence of a foreign object, or the presence probability of a foreign object. Then, the RX 200 compares the result of "the foreign object detection process" or "the calculation of the coupling state index" received from the TX 100 with the threshold held by the RX 200 to determine whether "the conditions for transitioning to fast charging mode" are satisfied. Based on the determination result, the RX 200 requests to transition to "fast charging mode". In this case as well, when a combination of a plurality of conditions among the first to sixth conditions is satisfied, the RX 200 may be controlled to determine that "the conditions for transitioning to fast charging mode are satisfied".

The RX 200 may perform the operation of "notifying a request of the power transmission apparatus to transition to fast charging mode" in F1506 during the power transfer phase. The RX 200 performs the operation of F1506 when the RX 200 intends to receive higher power or determines that predetermined conditions for receiving higher power are satisfied, during the power transfer phase in accordance with BPP or EPP. In that case, the TX 100 transmits ACK that is the operation of F1408, and the RX 200 receives ACK that is the operation of F1507. Then, the TX 100 transitions to the operation of F1409 and performs renegotiation corresponding to the electric power of the fast charging mode. Then, the TX 100 transitions to the operation of F1410 and executes a ReCAL corresponding to the electric power of the fast charging mode. Then, the TX 100 performs the operations of F1412, F1413, and F1414. The RX 200 also transitions to the operation of F1508 and performs renegotiation corresponding to the electric power of the fast charging mode. Then, the RX 200 transitions to the operation of F1509 and executes a ReCAL corresponding to the electric power of the fast charging mode. Then, the TX 100 performs the operations from F1510 to F1513.

In the above-described embodiment, an example in which the notification of information indicating whether the fast charging mode is supported is performed during the negotiation phase has been described; however, the notification may be performed during other phases. For example, during the ping phase, the RX 200 may use a signal strength data packet to provide a notification of information indicating whether fast charging mode is supported. Alternatively, during the configuration phase, the RX 200 may use an identification data packet to provide a notification of information indicating whether fast charging mode is supported. Alternatively, an extended identification data packet or a configuration data packet may be used. In this case, F1503 is performed before F1501 in Fig. 15.

Packets during the calibration phase or the power transfer phase may be used. For example, RP1, RP2, or RP0 may be used. Therefore, the process from F1503 is performed during the renegotiation phase after passing through the calibration phase and the power transfer phase.

In the above-described embodiment, an example in which the notification of information to determine whether "the conditions for transitioning to fast charging mode" are satisfied is performed during the negotiation phase has been described; however, the notification may be performed during other phases. For example, the RX 200 may use a signal strength data packet during the ping phase. Alternatively, an identification data packet during the configuration phase may be used. Alternatively, an extended identification data packet or a configuration data packet may be used. In this case, F1504 is performed in advance before F1501 in Fig. 15.

Packets during the calibration phase or the power transfer phase may be used. For example, RP1, RP2, or RP0 may be used. Therefore, the process from F1503 is performed during the renegotiation phase after passing through the calibration phase and the power transfer phase.

In the above-described embodiment, an example in which the TX 100 performs F1409 and F1410 before F1412 has been described. Alternatively, the TX 100 may perform F1409 and F1410 after F1412 and then perform F1413 and F1414. An example in which the RX 200 performs F1508 and F1509 before F1511 has been described. Alternatively, the RX 200 may perform F1508 and F1509 after F1511 and then perform F1512 and F1513. In other words, when the authentication is successful, the TX 100 and the RX 200 perform negotiation or renegotiation and CAL or ReCAL, corresponding to fast charging mode. Then, the TX 100 and the RX 200 execute control during operation in fast charging mode and start power transmission and reception in fast charging mode.

In the above-described first embodiment, from F1415 in Fig. 14, the TX 100 operates in a case where the TX 100 is determined to operate not in fast charging mode but in accordance with BPP or EPP. Instead, from F1415 in Fig. 14, the TX 100 may operate in a case where the TX 100 is determined to operate not in fast charging mode but in accordance with MPP that is not the fast charging mode. In the above-described first embodiment, from F1514 in Fig. 15, the RX 200 operates in a case where the RX 200 is determined to operate not in fast charging mode but in accordance with BPP or EPP. Instead, from F1514 in Fig. 15, the TX 200 may operate in a case where the TX 200 is determined to operate not in fast charging mode but in accordance with MPP that is not the fast charging mode. Here, "MPP that is not the fast charging mode" refers to a mode in which, in MPP having a function of accurately fixing the TX 100 and the RX 200 in a predetermined position, the TX 100 transmits electric power of 15 watts or less to the RX 200. Alternatively, "MPP that is not the fast charging mode" refers to a mode in which, in the MPP having a function of accurately fixing the TX 100 and the RX 200 in a predetermined position, the RX 200 receives electric power of 15 watts or less from the TX 100.

[Second Embodiment]

In the present embodiment, control executed by the TX 100 and the RX 200 in F1413 of Fig. 14 that is the flowchart of the TX 100 and F1512 of Fig. 15 that is the flowchart of the RX 200, described in the first embodiment, will be described. Specifically, control that is executed during operation in fast charging mode, which is not executed in accordance with BPP or EPP, will be described. As described above, in fast charging mode, higher power is transmitted from the TX 100 to the RX 200 compared to BPP or EPP. Therefore, the following problems arise in fast charging mode.

· The noise leaking from the power transmission (power receiving) antenna to the surrounding area is larger than the noise during the operation in accordance with BPP or EPP
· Faster and more stable communication is desired compared to the operation in accordance with BPP or EPP
· The accuracy of foreign object detection decreases compared to the operation in accordance with BPP or EPP

The control performed during the operation in fast charging mode to solve each of the above-described problems will be described below in detail.

<Noise Leaking to Surrounding Area>

As a first method to suppress noise leaking from the power transmission antenna and the power receiving antenna to the surrounding area, a method of changing transmission power from the TX 100 to the RX 200 according to the coupling state index between the power transmission antenna and power receiving antenna will be described. Initially, a method of decreasing transmission power from the TX 100 to the RX 200 by using the coupling state index between the power transmission antenna and the power receiving antenna will be described. The TX 100 and the RX 200 measure and calculate the coupling state index between the power transmission antenna and the power receiving antenna. A case where the coupling state index between the power transmission antenna and the power receiving antenna is a small (weak) coupling state index with respect to a predetermined threshold, this state is referred to as a weak coupling state. A case where the coupling state index between the power transmission antenna and the power receiving antenna is a large (strong) coupling state index with respect to the predetermined threshold is hereinafter referred to as a strong coupling state.

When the TX 100 and the RX 200 recognize that the TX 100 and the RX 200 are in a weak coupling state, the TX 100 and the RX 200 execute control to limit electric power by decreasing transmission power compared to when the TX 100 and the RX 200 are in a strong coupling state. A power source of electric power transmitted from the TX 100 can also be a noise source. Therefore, by decreasing transmission power, it is possible to suppress noise leaking from the power transmission antenna and the power receiving antenna to the surrounding area. The control unit 101 of the TX 100 controls the power transmission unit 103 and sets the transmission power to a predetermined electric power value or below. Electric power transmitted from the power transmission antenna 105 is limited to the predetermined electric power value or less.

As another method for decreasing the transmission power of the TX 100, or a method of decreasing the receiving power of the RX 200, there is a method of determining GP by performing negotiation between the TX 100 and the RX 200 during the renegotiation phase. The RX 200 transmits information on a requested load power to the TX 100. A requested load power refers to the value of electric power to be output to a load and requested of the TX 100 by the RX 200. The electric power is consumed by the load. The load refers to a system to which electric power is supplied from the RX 200 or the power receiving unit of the RX 200, and examples of the load include the charging unit 206 and the battery 207 of the RX 200.

On the other hand, the TX 100 has the value of potential load power or the value of negotiable load power in advance. A potential load power refers to a maximum load power value (highest load power level) on which the TX 100 can negotiate and that can be output (supplied) to the load of the RX 200. A negotiable load power refers to a maximum load power value (highest load power level) on which the TX 100 can negotiate and that can be output (supplied) to the load of the RX 200 during a predetermined period or under a predetermined condition. Negotiation is established when the value of requested load power is less than the value of negotiable load power. The TX 100 and the RX 200 set the value of requested load power as the value of GP and hold the value in the memory. In other words, the TX 100 receives the value of requested load power from the RX 200, and, when the value is less than the value of negotiable load power, the TX 100 transmits an acknowledge ACK to the RX 200. The TX 100 and the RX 200 set the value of requested load power as the value of GP and hold the value in the memory.

The TX 100 receives the value of requested load power from the RX 200, and, when the value is greater than the value of negotiable load power, the TX 100 transmits a negative acknowledge NAK to the RX 200. The RX 200 reduces the value of the requested load power and transmits information indicating the value of the requested load power to the TX 100 again. The RX 200 repeats the process until the RX 200 receives an acknowledge ACK from the TX 100. When the RX 200 receives an acknowledge ACK from the TX 100, both the TX 100 and the RX 200 set the value of requested load power as the value of GP and store the value in the memory.

By setting the value of GP to a predetermined value or less, it is possible to decrease the transmission power of the TX 100 and decrease the receiving power of the RX 200. Therefore, the TX 100 sets the potential load power or negotiable load power to a predetermined value or less. Alternatively, the RX 200 sets the value of requested load power to a predetermined value or less. The above-described control may be executed during the negotiation phase. The TX 100 may switch the inverter of the power transmission unit 103 from a full-bridge switching circuit to a half-bridge switching circuit.

In the above-described example, the operations of the TX 100 and RX in a case where the TX 100 and the RX 200 recognize that the TX 100 and the RX 200 are in a weak coupling state have been described. On the other hand, when a foreign object (such as a metal piece) that has been present between the power transmission antenna and the power receiving antenna is removed, or when a misalignment between the power transmission antenna and the power receiving antenna is resolved and the power transmission antenna and the power receiving antenna are placed so as to face each other in a correct position, the coupling state between the power transmission antenna and the power receiving antenna changes from a weak coupling state to a strong coupling state. Alternatively, when the distance between the power transmission antenna and the power receiving antenna reduces, the coupling state between the power transmission antenna and the power receiving antenna changes from a weak coupling state to a strong coupling state. The operations in a case where the coupling state between the power transmission antenna and the power receiving antenna changes from a weak coupling state to a strong coupling state will be described. The TX 100 and the RX 200 calculate (measure) the coupling state index by using the above-described coupling state index measurement method, and compare the calculated coupling state index with the set threshold.

A method of setting the threshold is as described above. Then, the TX 100 and the RX 200 recognize that the TX 100 and the RX 200 are in a strong coupling state. When the TX 100 and the RX 200 recognize that the TX 100 and the RX 200 are in a strong coupling state, the TX 100 and the RX 200 execute control to increase the transmission power of the TX 100 (to increase the receiving power of the RX 200) compared to when the TX 100 and the RX 200 are in a weak coupling state. In this case, by setting the value of GP to a predetermined value or more, it is possible to increase the transmission power of the TX 100 (to increase the receiving power of the RX 200).

Therefore, the TX 100 sets the potential load power or negotiable load power to a predetermined value or more. Alternatively, the RX 200 sets the value of requested load power to a predetermined value or more. The above-described control may be executed during the negotiation phase or during the renegotiation phase. The TX 100 may switch the inverter of the power transmission unit 103 from a half-bridge switching circuit to a full-bridge switching circuit.

During the power transfer phase, at predetermined timing, the TX 100 or the RX 200 calculates (measures) the coupling state index by using the above-described coupling state index measurement method, and compares the calculated coupling state index with the set threshold. The predetermined timing comes at predetermined intervals or comes when the TX 100 receives a predetermined packet from the RX 200. Alternatively, the predetermined timing comes when the RX 200 receives a predetermined packet from the TX 100. The TX 100 or the RX 200 may control the transmission power by using the above-described method according to the determination result of the coupling state.

Next, as a second method to suppress noise leaking from the power transmission antenna and the power receiving antenna to the surrounding area, a method in which the TX 100 changes the frequency band of the power transmission waveform will be described. Noise occurs in the frequency band (hereinafter, referred to as the use frequency band) used to transmit electric power from the power transmission antenna to the power receiving antenna. Harmonic noise occurs in a frequency band higher than the use frequency band. When other systems are using the frequency band where noise occurs, malfunctions may be caused in those systems. Therefore, when the TX 100 and the RX 200 operate in fast charging mode, the TX 100 and the RX 200 execute control to change the use frequency band from a first frequency band to a second frequency band. By changing the frequency band of noise leaking from the power transmission antenna and the power receiving antenna to the surrounding area, it is possible to suppress the influence on other systems. The use frequency band predefined in the WPC standard ranges from 87 kHz to 205 kHz. When the TX 100 and the RX 200 recognize that the TX 100 and the RX 200 operate in fast charging mode, the TX 100 and the RX 200 change the use frequency band to a frequency band lower than 87 kHz or a frequency band higher than 205 kHz.

Next, as a third method to suppress noise leaking from the power transmission antenna and the power receiving antenna to the surrounding area, a method of using a noise suppression circuit will be described. The TX 100 or the RX 200 includes a noise suppression circuit. For example, the noise suppression circuit is made up of an inductor, a capacitor, a resistor, a filter, and noise suppression components (such as ferrite) mounted on a circuit board of the TX 100 and connected to the power transmission antenna 105, the power transmission unit 103, and the first communication unit 104. The noise suppression circuit is made up of an inductor, a capacitor, a resistor, a filter, and noise suppression components (such as ferrite) mounted on a circuit board of the RX 200 and connected to the power receiving antenna 205, the power receiving unit 203, and the first communication unit 204. The noise suppression circuit is configured according to the use frequency band. The reason is that the noise source is based on the transmission power of the TX 100, and the frequency band of noise that occurs is determined according to the use frequency band. Therefore, the TX 100 or the RX 200 has a noise suppression circuit for each use frequency band. When the TX 100 and the RX 200 operate in fast charging mode, the TX 100 and the RX 200 execute control to suppress noise by changing the use frequency band from a first frequency band to a second frequency band and switching to a noise suppression circuit corresponding to the changed use frequency band.

Next, as a fourth method to suppress noise leaking from the power transmission antenna and power receiving antenna to the surrounding area, a method of changing the parameters of frequency shift keying used by the TX 100 for communication with the RX 200 will be described. A method of changing the parameters of load modulation, amplitude modulation, or backscatter modulation used by the RX 200 for communication with the TX 100 will be described.

In the communication for information transmission from the TX 100 to the RX 200, the first communication unit 104 of the TX 100 performs frequency shift keying of electromagnetic waves output from the power transmission antenna 105. At that time, the TX 100 transmits information while changing the frequency of the carrier (power transmission waveform). When two frequencies are used, the TX 100 associates a relatively high frequency signal with the first information (for example "1") and associates a relatively low frequency signal with second information (for example, "0"). The TX 100 transmits (transmits electric power) while switching between two frequencies and transmits information to the RX 200.

The TX 100 switches the frequency of the carrier to a first operating frequency (denoted by fop) corresponding to an unmodulated state and a second operating frequency (denoted by fmod) corresponding to a modulated state to transmit information to the RX 200. fop and fmod are defined by two parameters.

A first parameter is a polarity, and indicates whether the difference between fmod and fop (fmod - fop) is positive or negative. By changing the polarity, it is possible to suppress noise in a specific frequency band. Noise in the frequency band used for communication or harmonic noise in a frequency band higher than the frequency band may cause malfunctions in other systems. By changing the polarity, it is possible to change the frequency band used for communication.

A second parameter is a modulation index (frequency shift, modulation depth, depth), and indicates the magnitude (absolute value) of the difference between fmod and fop. As the modulation index increases, the magnitude of the difference between fmod and fop increases. Therefore, the bandwidth of noise in a specific frequency band, leaking from the power transmission antenna and the power receiving antenna to the surrounding area, widens. When the TX 100 and the RX 200 operate in fast charging mode, there is a possibility of occurrence of strong noise over a wider bandwidth during power transmission.

Therefore, when the TX 100 and the RX 200 operate in fast charging mode, the TX 100 and the RX 200 control the values of the first and second parameters to predetermined values in communication for transmitting information from the TX 100 to the RX 200.

For example, when the TX 100 and the RX 200 operate in fast charging mode, the TX 100 and the RX 200 are controlled such that the polarity becomes negative (positive). By changing the polarity, it is possible to control the frequency band used for communication. Thus, it is possible to suppress noise in a specific frequency band, leaking from the power transmission antenna and the power receiving antenna to the surrounding area.

When the TX 100 and the RX 200 operate in fast charging mode, the TX 100 and the RX 200 execute control to reduce the modulation index (frequency shift, modulation depth, depth). Since the difference between fmod and fop reduces, it is possible to narrow the bandwidth of noise in a specific frequency band, leaking from the power transmission antenna and the power receiving antenna to the surrounding area.

The RX 200 can incorporate the first and second parameters in a configuration data packet to be transmitted during the configuration phase. When the RX 200 recognizes that the TX 100 and the RX 200 operate in fast charging mode, the RX 200 sets the values of the two parameters concerned with frequency shift keying in the configuration data packet to predetermined values and transmits the packet to the TX 100. The TX 100 performs frequency shift keying based on the values of two parameters in the received packet and transmits information to the RX 200.

The packet used for the RX 200 to transmit the values of the first and second parameters to the TX 100 is a signal strength data packet or an identification data packet. Alternatively, the packet may be an extended identification data packet. Alternatively, the packet may be a packet during the calibration phase or a power transfer phase, that is, RP1, RP2, or RP0. Hereafter, these packets are referred to as "predetermined packets".

Next, a method of changing the parameters of load modulation, amplitude modulation, or backscatter modulation used by the RX 200 for communication to transmit information to the TX 100 will be described. The first communication unit 204 of the RX 200 performs load modulation, amplitude modulation, or backscatter modulation of electromagnetic waves output from the power transmission antenna 105 of the TX 100 and transmits information to the TX 100 for communication. At that time, the RX 200 transmits information while changing the amplitude of the carrier (power transmission waveform). When the magnitudes of two amplitudes are used, the RX 200 associates a relatively large amplitude signal with first information (for example "1") and associates a relatively small amplitude signal with second information (for example, "0"). The RX 200 transmits information to the TX 100 by superimposing a signal on the power transmission waveform while switching the magnitude of the amplitude.

The RX 200 switches the magnitude of the amplitude of the carrier between the following two types of amplitudes to transmit information to the TX 100.

· Amplitude Amp_A in the Hi-State (relatively large amplitude)
· Amplitude Amp_B in the Low-State (relatively small amplitude)

The magnitude of the difference between Amp_A and Amp_B is referred to as modulation depth. As the modulation depth increases, the carrier frequency more significantly changes, so the bandwidth of noise in a specific frequency band, leaking from the power transmission antenna and the power receiving antenna, widens. Therefore, when the TX 100 and the RX 200 operate in fast charging mode, there is a possibility that strong noise occurs over a wider bandwidth during power transmission. Therefore, when the TX 100 and the RX 200 operate in fast charging mode, the TX 100 and the RX 200 execute control such that the modulation depth becomes a predetermined value in communication from the RX 200 to the TX 100. More specifically, the TX 100 and the RX 200 execute control to reduce the modulation depth, so the magnitude of the difference between the amplitude Amp_A and the amplitude Amp_B reduces. Thus, it is possible to narrow the bandwidth of noise in a specific frequency band, leaking from the power transmission antenna and the power receiving antenna to the surrounding area.

When the RX 200 executes the above-described process, the RX 200 may notify the TX 100 of the modulation depth to be used through a predetermined packet in advance. For example, the RX 200 can incorporate information on the modulation depth used into a configuration data packet to be transmitted during the configuration phase. When the RX 200 operates in fast charging mode, the RX 200 sets the value of the parameter (modulation depth) concerned with load modulation, amplitude modulation, or backscatter modulation in the configuration data packet to a predetermined value and transmits the packet to the TX 100. The TX 100 controls the power transmission waveform based on the value of the parameter (modulation depth) concerned with load modulation, amplitude modulation, or backscatter modulation, contained in the received packet. A packet used for the RX 200 to transmit information on the parameter (modulation depth) concerned with load modulation, amplitude modulation, or backscatter modulation to the TX 100 may be the above-described predetermined packet.

Next, as a fifth method to suppress noise leaking from the power transmission antenna and the power receiving antenna, a method of changing the modulation method of signals in communication concerned with information transmission from the TX 100 to the RX 200 and in communication concerned with information transmission from the RX 200 to the TX 100 will be described. An example of a signal modulation method is a spread spectrum method, with which communication is performed by using a signal having a wide frequency band exceeding the frequency band necessary for information transmission. Specifically, there is a direct sequence spread spectrum (DSSS) as a first method.

For example, to operate in fast charging mode, the first communication unit 104 of the TX 100 performs computation by using a spreading signal, called a spread code (PN: pseudo noise) or pseudo random noise, on the frequency shift keyed original signal. The first method is a method of directly spreading energy over a frequency band wider than a frequency band needed to transmit the original signal. The TX 100 transmits the computed signal to the RX 200. The RX 200 holds the data of the spreading signal used by the TX 100 for computation in the memory 208 in advance. The RX 200 performs inverse transform by using the spreading signal on the received signal to acquire the frequency shift keyed original signal. When the TX 100 and the RX 200 are recognized to operate in fast charging mode in transmission from the RX 200 to the TX 100, the following process is executed. In other words, the first communication unit 204 of the RX 200 performs computation on the load modulated, amplitude modulated, or backscatter modulated original signal by using a spreading signal. The RX 200 transmits the computed signal to the TX 100. The TX 100 holds the data of the spreading signal used by the RX 200 for computation in the memory 106 in advance. The TX 100 performs inverse transform by using the spreading signal on the received signal to acquire the load modulated, amplitude modulated, or backscatter modulated original signal. By using the first method, it is possible to reduce the magnitude (level) of noise in a specific frequency band, leaking from the power transmission antenna and the power receiving antenna to the surrounding area.

A second method is a frequency hopping spread spectrum (FHSS). This method divides the frequency band allocated for communication into multiple frequency slots and rapidly switches the frequency slots used for communication in a short time in accordance with the pattern of switching frequencies. In other words, transmission is performed by using different bands within a wide frequency band while switching the bands in a short time. The frequency slots are also called "hopping channels". The pattern of switching frequencies is called a hopping sequence or a hopping pattern. The TX 100 and the RX 200 can receive signals in their respective frequency bands and acquire the original signal in accordance with a hopping sequence acquired in advance.

For example, in transmission from the TX 100 to the RX 200, when the TX 100 and the RX 200 operate in fast charging mode, the first communication unit 104 of the TX 100 executes the process of transmitting a frequency shift keyed original signal by using frequency slots according to the hopping sequence.

The TX 100 transmits the processed signal to the RX 200. The RX 200 holds the data of the hopping sequence used for the process by the TX 100 in the memory 208 in advance. The RX 200 performs inverse transform on the received signal in accordance with the hopping sequence to acquire the frequency shift keyed original signal. To operate in fast charging mode, the first communication unit 204 of the RX 200 executes the process of transmitting the load modulated, amplitude modulated, or backscatter modulated original signal by using frequency slots in accordance with the hopping sequence. The RX 200 transmits the processed signal to the TX 100. The TX 100 holds the data of the hopping sequence used for the process by the RX 200 in the memory 106 in advance. The TX 100 performs inverse transform on the received signal in accordance with the hopping sequence to acquire the load modulated, amplitude modulated, or backscatter modulated original signal. By using the second method, it is possible to reduce the magnitude (level) of noise in a specific frequency band, leaking from the power transmission antenna and the power receiving antenna.

A third method is a method that executes the process of direct sequence spread spectrum and that further executes the process of frequency hopping spread spectrum. By combining the two methods, it is possible to further reduce the magnitude (level) of noise in a specific frequency band, leaking from the power transmission antenna and the power receiving antenna.

Among the first to third methods, information indicating which method is used or which method is supported can be incorporated into a configuration data packet transmitted by the RX 200 during the configuration phase. When the TX 100 and the RX 200 operate in fast charging mode, the RX 200 stores data (for example, "1") indicating that any one of the first to third methods is used, in a predetermined field in the configuration data packet. Alternatively, "1" that is data corresponding to a case where the first method is used, "2" that is data corresponding to a case where the second method is used, or "3" that is data corresponding to a case where the third method is used, is stored in the relevant field. When the RX 200 recognizes that the TX 100 and the RX 200 do not operate in fast charging mode, the RX 200 stores "0" in the relevant field because any of the first to third methods is not used. Alternatively, information indicating whether the RX 200 supports any of the first to third methods is stored in a predetermined field. When the RX 200 supports a method, the RX 200 stores "1" in the relevant field as data; whereas, when the RX 200 does not support a method, the RX 200 stores "0" in the relevant field as data. The TX 100 that has received a configuration data packet from the RX 200 transmits information to the RX 200 and receives information from the RX 200 based on information on the modulation method in the packet. A packet used to transmit information indicating which method is used by the RX 200 for the TX 100 among the first to third methods or which method is supported by the RX 200 among the first to third methods may be the above-described predetermined packet.

Among the first to third methods, information indicating which method is used or which method is supported can be incorporated into the following packet. The packet is a power transmitter capabilities (CAP) data packet or power transmitter identification (ID) data packet to be transmitted by the TX 100. For example, the TX 100 stores data (for example, "1") indicating that any one of the first to third methods is used, in a predetermined field in the power transmitter capabilities (CAP) data packet. When a power transmitter identification (ID) data packet is used as well, data (for example, "1") indicating that any one of the first to third methods is used is stored in a predetermined field similarly. Alternatively, "1" that is data corresponding to a case where the first method is used, "2" that is data corresponding to a case where the second method is used, or "3" that is data corresponding to a case where the third method is used, is stored in the relevant field. When the TX 100 and the RX 200 do not operate in fast charging mode, the RX 200 stores "0" in the relevant field because any of the first to third methods is not used. Alternatively, information indicating whether the TX 100 supports any of the first to third methods is stored in a predetermined field. When the TX 100 supports a method, the TX 100 stores "1" in the relevant field as data; whereas, when the TX 100 does not support a method, the RX 200 stores "0" in the relevant field as data. The RX 200 that has received a power transmitter CAP data packet or a power transmitter ID data packet, transmits and receives information to and from the TX 100 in accordance with the modulation method designated in the packet.

When the RX 200 executes the above-described process, the RX 200 may notify the TX 100 of the modulation method to be used through a predetermined packet in advance. For example, the RX 200 can incorporate information on the modulation method used into a configuration data packet to be transmitted during the configuration phase. When the RX 200 and the TX 100 operate in fast charging mode, the RX 200 sets a predetermined value in a field indicating the modulation method used by the RX 200 in the packet and transmits the packet to the TX 100. The TX 100 transmits information to the RX 200 and receives information from the RX 200 based on information on the modulation method used by the RX 200, contained in the received packet.

When the TX 100 executes the above-described process, the TX 100 may notify the RX 200 of the modulation method used through a predetermined packet in advance. For example, information on the modulation method used can be incorporated into a power transmitter CAP data packet or power transmitter ID data packet to be transmitted by the TX 100. When the TX 100 and the RX 200 operate in fast charging mode, the TX 100 sets a predetermined value in a field indicating the modulation method used by the TX 100 in the packet and transmits the packet to the RX 200. The RX 200 transmits information to the TX 100 and receives information from the TX 100 based on information on the modulation method used by the TX 100, contained in the received packet.

With the above-described method, the RX 200 notifies the TX 100 of information on the modulation method used through a predetermined packet in advance. Then, the TX 100 and the RX 200 may negotiate with each other through communication based on those pieces of information and determine the modulation method used for communication. Alternatively, with the above-described method, the TX 100 notifies the RX 200 of information on the modulation method used through a predetermined packet in advance. Then, the TX 100 and the RX 200 may negotiate with each other through communication based on those pieces of information and determine the modulation method used for communication.

Next, as a sixth method to suppress noise leaking from the power transmission antenna and the power receiving antenna to the surrounding area, a method in which the TX 100 switches the power transmission antenna (power transmission coil) will be described. When the TX 100 and the RX 200 operate in fast charging mode, the TX 100 transmits electric power to the RX 200 at a high power, so noise leaking to the surrounding area increases. Furthermore, one factor of increase in noise is a significant difference in size between the power transmission antenna and the power receiving antenna. For example, a case where the power transmission antenna is larger than the power receiving antenna is assumed. In this case, since the size of the power receiving antenna is relatively small, part of magnetic flux generated by the power transmission antenna does not penetrate the inside of the power receiving antenna during power transmission from the TX 100 to the RX 200. As the difference in size between the power transmission antenna and the power receiving antenna increases, leakage magnetic flux increases. To solve this situation, the TX 100 includes two or more power transmission antennas. For example, among two power transmission antennas, the larger power transmission antenna is referred to as "power transmission antenna (large)", and the smaller power transmission antenna is referred to as "power transmission antenna (small)".

It is assumed that the TX 100 selects the power transmission antenna (large), measures and calculates the coupling state index between the power transmission antenna and the power receiving antenna by using the above-described method, and recognizes that the coupling state is a weak coupling state as a result of comparing the coupling state index with a threshold. In this case, the TX 100 selects the power transmission antenna (small). Then, the TX 100 measures and calculates the coupling state index between the power transmission antenna and the power receiving antenna by using the above-described method, and the TX 100 determines whether the coupling state is a weak coupling state by comparing the coupling state index with the threshold again. It is assumed that, as a result of the determination, the coupling between the power transmission antenna and the power receiving antenna is strong compared to when the power transmission antenna (large) is selected. In this case, the TX 100 is controlled so as to use the power transmission antenna (small) during each subsequent phase.

It is assumed that the TX 100 first selects the power transmission antenna (small), measures and calculates the coupling state index between the power transmission antenna and the power receiving antenna by using the above-described method, and recognizes that the coupling state is a weak coupling state as a result of comparing the coupling state index with a threshold. In this case, the TX 100 selects the power transmission antenna (large). Then, the TX 100 measures and calculates the coupling state index between the power transmission antenna and the power receiving antenna by using the above-described method, and the TX 100 determines whether the coupling state is a weak coupling state by comparing the coupling state index with the threshold again. It is assumed that, as a result of the determination, the coupling between the power transmission antenna and the power receiving antenna is strong compared to when the power transmission antenna (small) is selected. In this case, the TX 100 is controlled so as to use the power transmission antenna (large) during each subsequent phase.

The TX 100 may include three or more power transmission antennas of different sizes. The TX 100 measures the coupling state between the power transmission antenna and the power receiving antenna in a case where each of the power transmission antennas is used, and makes a determination. During each subsequent phase, the TX 100 is controlled so as to use the power transmission antenna with the best coupling state.

Alternatively, as shown in the first method, the RX 200 notifies the TX 100 of the detailed information on the hardware of the power receiving apparatus through a predetermined packet. More specifically, the RX 200 notifies the TX 100 of the size, type, and the like of the power receiving antenna (power receiving coil). The TX 100 receives a predetermined packet from the RX 200 and selects the power transmission antenna determined to be optimal to a target power receiving antenna based on information on the size, type, and the like of the power receiving antenna (power receiving coil). The TX 100 or the RX 200 measures the coupling state index between the power transmission antenna and the power receiving antenna, and determines whether a value indicating the coupling state (for example, a k value) is greater than or equal to a threshold. During each subsequent phase, the TX 100 is controlled so as to use the power transmission antenna with a good coupling state, selected according to the determination result.

Next, as a seventh method to suppress noise leaking from the power transmission antenna and the power receiving antenna to the surrounding area, a method of changing a circuit concerned with power transmission, including the power transmission antenna, such that the quality factor of the circuit increases will be described. The power transfer efficiency from the TX 100 to the RX 200 is expressed as a product of the coupling coefficient k and the quality factor (Q-factor). When the TX 100 and the RX 200 operate in fast charging mode, it is possible to suppress a decrease in transfer efficiency by executing control such that the value of the quality factor increases. When the TX 100 and the RX 200 operate in fast charging mode, the TX 100 (or the RX 200) changes a circuit concerned with power transmission, including the power transmission antenna (or the power receiving antenna), such that the quality factor of the circuit increases. Specifically, a first control is executed to switch the power transmission antenna 105 (or the power receiving antenna 205) to a power transmission antenna (or a power receiving antenna) having a different size or a different inductance value.

Alternatively, a second control is executed to switch the resonant capacitor 107 (or the resonant capacitor 211) to a resonant capacitor having a different constant. Alternatively, a third control is executed to connect a new different capacitor or inductor to the power transmission antenna 105 (or the power receiving antenna 205) or to the resonant capacitor 107 (or the resonant capacitor 211). All of the first, second, and third controls may be executed, or at least one may be executed. The first, second, and third controls may be executed at the timing when the RX 200 that has recognized that the TX 100 and the RX 200 operate in fast charging mode notifies the TX 100 by using a packet. Alternatively, the TX 100 that has recognized that the TX 100 and the RX 200 operate in fast charging mode may execute the first, second, and third controls at the timing when the TX 100 notifies the RX 200 by using a predetermined packet.

<Communication>

Next, the first method to suppress the instability of communication between the TX 100 and the RX 200 will be described. When the TX 100 and the RX 200 operate in fast charging mode, the TX 100 and the RX 200 need to perform rapid control to enhance the transfer efficiency. Therefore, stable communication is desired for communication for the TX 100 and the RX 200 to execute control. Therefore, a method for stabilizing communication will be described. Specifically, a first changing method of changing the parameter of frequency shift keying used to transfer signals from the TX 100 and a second changing method of changing the parameter of load modulation, amplitude modulation, or backscatter modulation used to transfer signals from the RX 200 will be described.

Initially, in the first changing method, the parameter of frequency shift keying is a modulation index (frequency shift, modulation degree, depth), and indicates the magnitude of the difference between fmod and fop. As the modulation index increase, the magnitude of the difference between fmod and fop increases, so the RX 200 easily demodulates a signal received from the TX 100. Thus, when the TX 100 and the RX 200 operate in fast charging mode, the TX 100 and the RX 200 execute control such that the modulation index becomes a predetermined value in communication at the time when information is transmitted from the TX 100 to the RX 200. More specifically, when the TX 100 and the RX 200 operate in fast charging mode, the TX 100 and the RX 200 execute control to increase the modulation index compared to when operating in accordance with BPP or EPP, so it is easier for the RX 200 to demodulate a signal received from the TX 100.

A modulation index can be incorporated into a configuration data packet that the RX 200 transmits during the configuration phase. When the RX 200 recognizes that the TX 100 and the RX 200 operate in fast charging mode, the RX 200 sets the modulation index in the configuration data packet to a predetermined value and transmits the packet to the TX 100. The TX 100 transmits information from the TX 100 to the RX 200 based on the modulation index contained in the received packet. The packet used for the RX 200 to transmit information on the modulation index to the TX 100 may be the above-described predetermined packet.

Next, the second changing method will be described. As described above, for example, the RX 200 transmits information to the TX 100 while switching the magnitude of the amplitude of carrier between a relatively large amplitude Amp_A and a relatively small amplitude Amp_B. As the modulation depth corresponding to the magnitude of the difference between Amp_A and Amp_B increases, the TX 100 more easily demodulates a signal transmitted by the RX 200. Thus, when the TX 100 and the RX 200 operate in fast charging mode, the TX 100 and the RX 200 execute control such that the modulation depth of amplitude modulation or load modulation becomes a predetermined value in communication for transmitting information from the RX 200 to the TX 100. More specifically, when the TX 100 and the RX 200 operate in fast charging mode, the TX 100 and the RX 200 execute control such that the modulation depth increases compared to the case where the TX 100 and the RX 200 operate in accordance with BPP or EPP. As a result, the difference between the amplitude Amp_A in the Hi-State and the amplitude Amp_B in the Low-State increases, so the TX 100 easily demodulates a signal transmitted by the RX 200.

When the RX 200 executes the above-described process, the RX 200 may notify the TX 100 of the modulation depth to be used through a predetermined packet in advance. This has been already described above, and a predetermined packet used to transmit the modulation depth is also similar, so the description thereof is omitted.

Next, a method of changing a communication method concerned with communication performed between the TX 100 and the RX 200 will be described. In order for the TX 100 and the RX 200 to execute high-speed control, it is necessary to enhance the communication between the TX 100 and the RX 200 to a faster communication. Therefore, when the TX 100 and the RX 200 recognize that the TX 100 and the RX 200 operate in fast charging mode, the TX 100 and the RX 200 execute control to change the communication method. Control is executed between the second communication unit 109 of the TX 100 and the second communication unit 212 of the RX 200 to change to a communication method based on a standard other than the WPC standard. Wireless LAN, BLE, and NFC are listed as the communication method. The second communication unit 109 of the TX 100 communicates with the RX 200 by using an antenna different from the power transmission antenna 105. The second communication unit 212 of the RX 200 communicates with the TX 100 by using an antenna different from the power receiving antenna 205. The frequency band used for communication by the second communication unit 109 or the second communication unit 212 is different from the use frequency band for power transmission. In this way, when the TX 100 and the RX 200 operate in fast charging mode, the TX 100 and the RX 200 can perform stable communication by using a communication method different from the communication method using the power transmission antenna 105 and the power receiving antenna 205.

The RX 200 can incorporate information on whether a communication method based on a standard other than the WPC standard is supported into a configuration data packet to be transmitted during the configuration phase. Alternatively, the RX 200 can incorporate data indicating which communication method is used among communication methods based on standards other than the WPC standard into a configuration data packet. For example, when the RX 200 recognizes that the RX 200 operates in fast charging mode, the RX 200 stores data (for example, **"1")** indicating that a communication method based on a standard other than the WPC standard is used, in a predetermined field in a configuration data packet. Alternatively, "1" corresponding to a case where wireless LAN is used or "2" corresponding to a case where BLE is used is stored in the relevant field. "3" corresponding to a case where NFC is used is stored in the relevant field. When the TX 100 and the RX 200 do not operate in fast charging mode, that is, the TX 100 and the RX 200 operate in accordance with BPP or EPP, "0" corresponding to a case where a communication method based on a standard other than the WPC standard is not used is stored in the relevant field. Alternatively, information indicating whether the RX 200 supports any of the communication methods is stored in a predetermined field. When the RX 200 supports a communication method, the RX 200 stores "1" in the field as data; whereas, when the RX 200 does not support the method, the RX 200 stores "0" in the relevant field as data. The RX 200 transmits the packet to the TX 100.

The TX 100 transmits information from the TX 100 to the RX 200 based on information on the communication method contained in the received configuration data packet. A packet used by the RX 200 to transmit, to the TX 100, information indicating whether the RX 200 supports a communication method based on a standard other than the WPC standard may be the above-described predetermined packet.

When the RX 200 executes the above-described process, the RX 200 may notify the TX 100 of the communication method to be used through a predetermined packet in advance. For example, the RX 200 can incorporate information on the communication method used into a configuration data packet transmitted during the configuration phase. When the RX 200 recognizes that the RX 200 and the TX 100 operate in fast charging mode, the RX 200 sets a predetermined value in a field indicating the communication method used by the RX 200 in the packet and transmits the packet to the TX 100. The TX 100 determines the communication method based on information on the communication method used by the RX 200, contained in the received packet. A packet used for the RX 200 to transmit information on the communication method to the TX 100 may be the above-described predetermined packet.

The TX 100 can incorporate information indicating whether the TX 100 supports a communication method based on a standard other than the WPC standard or data indicating which communication method is used among communication methods based on standards other than the WPC standard, into a predetermined packet. For example, when the TX 100 recognizes that the TX 100 and the RX 200 operate in fast charging mode, the TX 100 stores data (for example, "1") indicating that a communication method based on a standard other than the WPC standard is used, in a field of a predetermined packet. Alternatively, "1" corresponding to a case where wireless LAN is used or "2" corresponding to a case where BLE is used is stored in the relevant field. "3" corresponding to a case where NFC is used is stored in the relevant field. When the TX 100 and the RX 200 do not operate in fast charging mode, that is, the TX 100 and the RX 200 operate in accordance with BPP or EPP, "0" corresponding to a case where a communication method based on a standard other than the WPC standard is not used is stored in the relevant field. The TX 100 transmits the packet to the RX 200. Alternatively, information indicating whether the TX 100 supports any of the communication methods is stored in a predetermined field. When the TX 100 supports a communication method, the TX 100 stores "1" in the relevant field as data; whereas, when the TX 100 does not support a method, the TX 100 stores "0" in the relevant field as data. The RX 200 transmits information from the RX 200 to the TX 100 based on information on the communication method, contained in the received predetermined packet.

When the TX 100 executes the above-described process, the TX 100 may notify the RX 200 of the communication method used through a predetermined packet in advance. When the TX 100 recognizes that the TX 100 and the RX 200 operate in fast charging mode, the TX 100 sets a predetermined value in a field indicating the communication method used by the TX 100 in the packet and transmits the packet to the RX 200.

The RX 200 determines the communication method based on information on the communication method used by the TX 100, contained in the received packet.

<Accuracy of Foreign Object Detection>

Next, the first method that improves the accuracy of detecting a foreign object present between the TX 100 and the RX 200 will be described. When the TX 100 and the RX 200 operate in fast charging mode, the detection accuracy of foreign object detection using the quality factor measurement method and the power loss method predefined in the WPC standard may decrease. Therefore, when the TX 100 and the RX 200 operate in fast charging mode, the TX 100 and the RX 200 use a foreign object detection method other than those predefined in the WPC standard.

As a first foreign object detection method other than those predefined in the WPC standard, a method of detecting a foreign object based on the coupling state between the power transmission antenna and the power receiving antenna will be described. When it is recognized that the coupling state is a weak coupling state, it is possible to detect the presence or absence of a foreign object from the coupling state between the power transmission antenna and the power receiving antenna. As described in the measurement method for the coupling state index, the TX 100 and the RX 200 measure the coupling state index between the power transmission antenna and the power receiving antenna, and execute a foreign object detection process based on the measured value. A method of setting a determination threshold concerned with a possibility of the presence or absence of a foreign object has already been described. In the case of a weak coupling state, it is possible to determine the possibility of the presence or absence of a foreign object with higher accuracy based on the measurement result of the coupling state index between the power transmission antenna and the power receiving antenna. Measuring the coupling state index between the power transmission antenna and the power receiving antenna and determining the possibility of the presence or absence of a foreign object may be regularly performed. In executing a foreign object detection process based on the measurement results of the coupling state index, the TX 100 and the RX 200 may combine the quality factor measurement method, the power loss method, and the waveform attenuation method. A method of setting a determination threshold in each method is as described above.

For example, when the entity that executes a foreign object detection process based on a measurement result of the coupling state index between the power transmission antenna and the power receiving antenna is the TX 100, the TX 100 executes the foreign object detection process based on the measurement result of the coupling state index between the power transmission antenna and the power receiving antenna and acquires a determination result. The determination result is "there is a high possibility that a foreign object is present", "a foreign object is present", "there is a low possibility that a foreign object is present", "there is no foreign object", or the like, and the TX 100 notifies the RX 200 of the determination result. When the determination result is "there is a high possibility that a foreign object is present" or "a foreign object is present", the RX 200 transmits, to the TX 100, a packet requesting the execution of the predetermined foreign object detection process. Alternatively, when the determination result is "there is a high possibility that a foreign object is present" or "a foreign object is present", the TX 100 transmits, to the RX 200, a packet requesting the transmission of a packet requesting the execution of the predetermined foreign object detection process. When the RX 200 receives the packet, the RX 200 transmits, to the TX 100, a packet requesting the execution of a predetermined foreign object detection process. A predetermined foreign object detection process refers to all of foreign object detection processes based on the quality factor measurement method, the power loss method, and the waveform attenuation method or one or more of the foreign object detection processes. The TX 100 executes a predetermined foreign object detection process in accordance with a request from the RX 200 and notifies the RX 200 of the determination result. When the determination result is "there is a high possibility that a foreign object is present" or "a foreign object is present", the RX 200 transmits, to the TX 100, a packet requesting that power transmission be limited. For example, the packet is a packet that requests to set the GP value to a low value, and RP1 and RP2 that request the CAL process of the power loss method again. Alternatively, the packet is a packet that requests a CAL process using the waveform attenuation method or the coupling state index measurement method again. Alternatively, the packet is an EPT packet that requests the stop of power transmission.

The above-described predetermined foreign object detection process is executed, and the TX 100 notifies the RX 200 of the determination result. When the determination result is "there is a high possibility that a foreign object is present" or "a foreign object is present", the RX 200 transmits, to the TX 100, a packet requesting the execution of a foreign object detection process based on the coupling state between the power transmission antenna and the power receiving antenna. The TX 100 that has received the packet executes a foreign object detection process based on the coupling state between the power transmission antenna and the power receiving antenna, and notifies the RX 200 of the determination result. When the determination result is "there is a high possibility that a foreign object is present" or "a foreign object is present", the RX 200 transmits, to the TX 100, a packet requesting that power transmission be limited. For example, the packet is a packet that requests to set the GP value to a low value, and RP1 and RP2 that request the CAL process of the power loss method again. Alternatively, the packet is a packet that requests a CAL process using the waveform attenuation method again. Alternatively, the packet is an EPT packet that requests the stop of power transmission.

Alternatively, when the entity that executes a foreign object detection process based on a measurement result of the coupling state index between the power transmission antenna and the power receiving antenna is the RX 200, the RX 200 executes the foreign object detection process and acquires the determination result. A determination result is "there is a high possibility that a foreign object is present", "a foreign object is present", "there is a low possibility that a foreign object is present", "there is no foreign object", or the like, and the RX 200 notifies the TX 100 of the determination result. When the determination result is "there is a high possibility that a foreign object is present" or "a foreign object is present", the RX 200 transmits, to the TX 100, a packet requesting the execution of the predetermined foreign object detection process. A predetermined foreign object detection process refers to all of foreign object detection processes based on the quality factor measurement method, the power loss method, and the waveform attenuation method or one or more of the foreign object detection processes. The TX 100 executes a predetermined foreign object detection process in accordance with a request from the RX 200 and notifies the RX 200 of the determination result. When the determination result is "there is a high possibility that a foreign object is present" or "a foreign object is present", the RX 200 transmits, to the TX 100, a packet requesting that power transmission be limited. For example, the packet is a packet that requests to set the GP value to a low value, and RP1 and RP2 that request the CAL process of the power loss method again. Alternatively, the packet is a packet that requests a CAL process using the waveform attenuation method or the coupling state index measurement method again. Alternatively, the packet is an EPT packet that requests the stop of power transmission.

The above-described predetermined foreign object detection process is executed, and the TX 100 notifies the RX 200 of the determination result. When the determination result is "there is a high possibility that a foreign object is present" or "a foreign object is present", the RX 200 transmits a packet notifying the TX 100 to execute a foreign object detection process based on the coupling state between the power transmission antenna and the power receiving antenna. The RX 200 transmits the packet, executes a foreign object detection process based on the coupling state between the power transmission antenna and the power receiving antenna, and notifies the TX 100 of the determination result. When the determination result is "there is a high possibility that a foreign object is present" or "a foreign object is present", the RX 200 transmits, to the TX 100, a packet requesting that power transmission be limited. For example, the packet is a packet that requests to set the GP value to a low value, and RP1 and RP2 that request the CAL process of the power loss method again. Alternatively, the packet is a packet that requests a CAL process using the waveform attenuation method again. Alternatively, the packet is an EPT packet that requests the stop of power transmission.

The above-described example has described the operations that the TX 100 or the RX 200 executes a foreign object detection process based on the measurement result of the coupling state index between the power transmission antenna and the power receiving antenna and a predetermined foreign object detection process at different timings. The TX 100 or the RX 200 may execute a foreign object detection process based on the measurement result of the coupling state index between the power transmission antenna and the power receiving antenna and one or more of predetermined foreign object detection processes at the same timing. When the RX 200 designates the timing, the RX 200 transmits a predetermined packet to the TX 100 to notify the TX 100 of the timing. When the TX 100 designates the timing, the TX 100 transmits a predetermined packet to the RX 200 to notify the RX 200 of the timing. For example, when the TX 100 or the RX 200 receives the predetermined packet, the TX 100 or the RX 200 executes a foreign object detection process based on the measurement result of the coupling state index between the power transmission antenna and the power receiving antenna and the foreign object detection process using the power loss method. Alternatively, when the TX 100 or the RX 200 receives the predetermined packet, the TX 100 or the RX 200 executes a foreign object detection process based on the measurement result of the coupling state index between the power transmission antenna and the power receiving antenna and the foreign object detection process using the waveform attenuation method. Alternatively, when the TX 100 or the RX 200 receives the predetermined packet, the TX 100 or the RX 200 executes a foreign object detection process based on the measurement result of the coupling state index between the power transmission antenna and the power receiving antenna, the foreign object detection process using the power loss method, and the foreign object detection process using the waveform attenuation method.

Alternatively, the TX 100 or the RX 200 may execute one or more of the predetermined foreign object detection processes at the same timing. When the RX 200 designates the timing, the RX 200 transmits a predetermined packet to the TX 100 to notify the TX 100 of the timing. When the TX 100 designates the timing, the TX 100 transmits a predetermined packet to the RX 200 to notify the RX 200 of the timing. For example, when the TX 100 or the RX 200 receives the predetermined packet, the TX 100 or the RX 200 executes the foreign object detection process using the waveform attenuation method. Alternatively, when the TX 100 or the RX 200 receives the predetermined packet, the TX 100 or the RX 200 executes the foreign object detection process using the power loss method and the foreign object detection process using the waveform attenuation method.

Next, as a second method to improve the accuracy of detecting a foreign object present between the TX 100 and the RX 200, a method of detecting a foreign object based on the temperature of the TX 100 or the RX 200 will be described. It is assumed that each of the TX 100 and the RX 200 has a plurality of temperature sensors. Particularly, temperature sensors are placed at a higher density on the power transmission antenna 105, the charging base 300, and the power receiving antenna 205 compared to other locations. It is possible to detect a foreign object present between the TX 100 and the RX 200 with higher accuracy.

When the TX 100 or the RX 200 recognizes that the TX 100 and the RX 200 operate in fast charging mode, the TX 100 or the RX 200 executes a foreign object detection process based on the detected temperatures. The TX 100 acquires the detection values of the temperature sensors at predetermined timing. The predetermined timing comes at predetermined intervals or comes when the TX 100 receives a predetermined packet from the RX 200. When the detection values of the temperature sensors are greater than the predetermined threshold, the TX 100 determines that "there is a high possibility that a foreign object is present". The TX 100 calculates the rate of increase in temperature in accordance with a plurality of temperature detection values acquired at predetermined timing. When the rate of increase in temperature is greater than a predetermined threshold, the TX 100 determines that there is a high possibility that a foreign object is present. The determination result is notified to the RX 200 through a predetermined packet. Alternatively, when the determination result is acquired, the TX 100 executes control to limit the above-described transmission power (decrease electric power) or control to stop power transmission. Since these controls have already been described, the description is omitted.

Next, a foreign object detection process based on the temperature of the RX 200 will be described. The RX 200 acquires the detection values of the temperature sensors at predetermined timing. The predetermined timing comes at predetermined intervals or comes when the RX 200 receives a predetermined packet from the TX 100. When the detection values of the temperature sensors are greater than the predetermined threshold, the RX 200 determines that "there is a high possibility that a foreign object is present". The RX 200 calculates the rate of increase in temperature based on a plurality of temperature detection values acquired at predetermined timing. When the rate of increase in temperature is greater than a predetermined threshold, the RX 200 determines that there is a high possibility that a foreign object is present. The determination result is notified to the TX 100 through a predetermined packet. Alternatively, when the determination result is acquired, the RX 200 transmits a predetermined packet to the TX 100 to execute a process of requesting that the above-described transmission power be limited (electric power be decreased) or power transmission be stopped.

In this way, with the second method, when the TX 100 or the RX 200 recognizes that the TX 100 and the RX 200 operate in fast charging mode, the TX 100 or the RX 200 measures the temperature of the TX 100 or the RX 200, and can perform foreign object detection with higher accuracy based on the measurement result. In performing the foreign object detection, the TX 100 and the RX 200 may combine the quality factor measurement method, the power loss method, and the waveform attenuation method. For example, when the entity that executes the foreign object detection process based on temperature is the TX 100, the TX 100 executes the foreign object detection process based on temperature and notifies the RX 200 of the foreign object determination result. When the determination result is "there is a high possibility that a foreign object is present" or "a foreign object is present", the RX 200 provides the TX 100 with a notification of a packet requesting the execution of a foreign object detection process based on one or more methods among the quality factor measurement method, the power loss method, and the waveform attenuation method. The TX 100 executes a predetermined foreign object detection process in accordance with a request from the RX 200 and notifies the RX 200 of the determination result. When the determination result of the foreign object detection process is "there is a high possibility that a foreign object is present" or "a foreign object is present", the RX 200 transmits, to the TX 100, a packet requesting that power transmission be limited. The packet is, for example, a packet that requests to set the GP value to a low value, or RP1 and RP2 that request a CAL process of the power loss method again. Alternatively, the packet is a packet that requests a CAL process of the waveform attenuation method or a CAL process of the coupling state index measurement method again. Alternatively, the packet is an EPT packet that requests the stop of power transmission.

Alternatively, the TX 100 executes a foreign object detection process based on one or more methods among the quality factor measurement method, the power loss method, and the waveform attenuation method, and notifies the RX 200 of the determination result. When the determination result is that "there is a high possibility that a foreign object is present" or "a foreign object is present", the RX 200 transmits, to the TX 100, a packet requesting that foreign object detection be performed based on the temperature of the TX 100. The TX 100 acquires the temperature detection value of the TX 100 in accordance with the packet, executes the foreign object detection process, and notifies the RX 200 of the determination result. When the determination result is that "there is a high possibility that a foreign object is present" or "a foreign object is present", the RX 200 transmits, to the TX 100, a packet requesting that power transmission be limited. The packet is, for example, a packet that requests to set the GP value to a low value, or RP1 and RP2 that request a CAL process of the power loss method again. Alternatively, the packet is a packet that requests a CAL process of the waveform attenuation method or a CAL process of the coupling state index measurement method again. Alternatively, the packet is an EPT packet that requests the stop of power transmission.

Alternatively, for example, when the entity that executes the foreign object detection process based on temperature is the RX 200, the RX 200 executes the foreign object detection process based on temperature and notifies the TX 100 of the foreign object determination result. When the determination result is "there is a high possibility that a foreign object is present" or "a foreign object is present", the RX 200 provides the TX 100 with a notification of a packet requesting the execution of a foreign object detection process based on one or more methods among the quality factor measurement method, the power loss method, and the waveform attenuation method. The TX 100 executes a predetermined foreign object detection process in accordance with a request from the RX 200 and notifies the RX 200 of the determination result. When the determination result of the foreign object detection process is "there is a high possibility that a foreign object is present" or "a foreign object is present", the RX 200 transmits, to the TX 100, a packet requesting that power transmission be limited. The packet is, for example, a packet that requests to set the GP value to a low value, or RP1 and RP2 that request a CAL process of the power loss method again. Alternatively, the packet is a packet that requests a CAL process of the waveform attenuation method or a CAL process of the coupling state index measurement method again. Alternatively, the packet is an EPT packet that requests the stop of power transmission.

Alternatively, the TX 100 executes a foreign object detection process based on one or more methods among the quality factor measurement method, the power loss method, and the waveform attenuation method, and notifies the RX 200 of the determination result. When the determination result is that "there is a high possibility that a foreign object is present" or "a foreign object is present", the RX 200 acquires the temperature detection value of the RX 200 to execute a foreign object detection process, and notifies the TX 100 of the determination result. When the determination result is that "there is a high possibility that a foreign object is present" or "a foreign object is present", the RX 200 transmits, to the TX 100, a packet requesting that power transmission be limited. The packet is, for example, a packet that requests to set the GP value to a low value, or RP1 and RP2 that request a CAL process of the power loss method again. Alternatively, the packet is a packet that requests a CAL process of the waveform attenuation method or a CAL process of the coupling state index measurement method again. Alternatively, the packet is an EPT packet that requests the stop of power transmission.

The above-described example has described the operations that the TX 100 or the RX 200 executes a foreign object detection process based on temperature and one or more methods and executes a foreign object detection process based on one or more methods among the quality factor measurement method, the power loss method, and the waveform attenuation method at different timings. The TX 100 or the RX 200 may execute a foreign object detection process based on temperature and a foreign object detection process based on one or more methods among the quality factor measurement method, the power loss method, and the waveform attenuation method at the same timing. When the RX 200 designates the timing, the RX 200 transmits a predetermined packet to the TX 100 to notify the TX 100 of the timing. When the TX 100 designates the timing, the TX 100 transmits a predetermined packet to the RX 200 to notify the RX 200 of the timing. For example, when the TX 100 or the RX 200 receives the above-described predetermined packet, the TX 100 or the RX 200 executes a foreign object detection process based on temperature and a foreign object detection process using the power loss method.

Alternatively, when the TX 100 or the RX 200 receives the above-described predetermined packet, the TX 100 or the RX 200 executes a foreign object detection process based on temperature and a foreign object detection process using the waveform attenuation method. Alternatively, when the TX 100 or the RX 200 receives the above-described predetermined packet, the TX 100 or the RX 200 executes a foreign object detection process based on temperature, a foreign object detection process using the power loss method, and a foreign object detection process using the waveform attenuation method.

In the above-described second method, when the TX 100 or the RX 200 recognizes that the TX 100 and the RX 200 operate in fast charging mode, the TX 100 or the RX 200 measures the temperature of the TX 100 or the RX 200 and performs foreign object detection with higher accuracy based on the measurement result. Another physical quantity of the TX 100 or the RX 200 may be measured instead of the above-described "temperature", and foreign object detection with higher accuracy may be performed based on the measurement result. For example, the above-described "temperature of the TX 100" may be replaced with the following parameter of the TX 100. The parameter may be any one of an inverter input voltage, an inverter input current, an electric power supplied to the inverter, an inverter output voltage, an inverter output current, and an electric power output from the inverter. Alternatively, the parameter may be any one of voltage applied to the power transmission antenna, current flowing through the power transmission antenna, and electric power supplied to the power transmission antenna. Alternatively, the above-described "temperature of the RX 200" may be replaced with the following parameter of the RX 200. The parameter may be any one of rectifier section output voltage, rectifier section output current, electric power supplied to the rectifier section, electric power output from the rectifier section, voltage applied to the power receiving antenna, current flowing through the power receiving antenna, and electric power received by the power receiving antenna. The parameter may be any one of voltage applied to the load (charging unit, battery), current flowing through the load (charging unit, battery), and electric power supplied to the load (charging unit, battery).

When these physical quantities are greater than the corresponding predetermined thresholds, the TX 100 or the RX 200 determines that "there is an abnormality". When these physical quantities are less than the corresponding predetermined thresholds, the TX 100 or the RX 200 determines that "there is no abnormality".

Next, the third method to suppress a decrease in the accuracy of detecting a foreign object present between the TX 100 and the RX 200 will be described. As described above, there are foreign object detection methods based on the quality factor measurement method, the power loss method, the waveform attenuation method, and the coupling state between the power transmission antenna and the power receiving antenna, and a foreign object detection method based on the temperature of the TX 100 or the RX 200. Even when any method is used, foreign object detection is performed by setting a predetermined threshold.

For example, it is assumed that there is no foreign object between the TX 100 and the RX 200, and there is no misalignment between the power transmission antenna and the power receiving antenna. In this state, there is a possibility that quality factor, power loss, waveform attenuation index, coupling state index, and temperature, measured to execute the corresponding foreign object detection methods, vary between when the TX 100 and the RX 200 operate in fast charging mode and when the TX 100 and the RX 200 operate in accordance with BPP or EPP. In other words, it is necessary to execute control such that a determination threshold in foreign object detection varies between when the TX 100 and the RX 200 operate in fast charging mode and when the TX 100 and the RX 200 operate in accordance with BPP or EPP. When the TX 100 and the RX 200 recognize that the TX 100 and the RX 200 operate in fast charging mode, the TX 100 and the RX 200 set a determination threshold to a first threshold; whereas, when the TX 100 and the RX 200 recognize that the TX 100 and the RX 200 operate in accordance with BPP or EPP, the TX 100 and the RX 200 set the determination threshold to a second threshold.

In other words, when the TX 100 and the RX 200 recognize that the TX 100 and the RX 200 operate in fast charging mode, the TX 100 and the RX 200 execute the above-described calibration process of the power loss method in that state. Alternatively, the TX 100 and the RX 200 set a threshold by using the above-described method of setting a threshold for a waveform attenuation index. Alternatively, the TX 100 and the RX 200 set a threshold by using the above-described threshold setting method in measuring a coupling state index. Alternatively, the TX 100 and the RX 200 set a threshold for temperature in the above-described foreign object detection method based on temperature. When the TX 100 and the RX 200 recognize that the TX 100 and the RX 200 operate in accordance with BPP or EPP, the TX 100 and the RX 200 execute the above-described calibration process of the power loss method in that state. Alternatively, the TX 100 and the RX 200 set a threshold by using the above-described method of setting a threshold for a waveform attenuation index. Alternatively, the TX 100 and the RX 200 set a threshold by using the above-described threshold setting method in measuring a coupling state index. Alternatively, the TX 100 and the RX 200 set a threshold for temperature in the above-described foreign object detection method based on temperature. When the TX 100 and the RX 200 execute the above-described calibration process of the power loss method, the TX 100 and the RX 200 may execute a foreign object detection process based on one or more methods of the foreign object detection process based on temperature, the foreign object detection process using the waveform attenuation method, and the foreign object detection process based on the coupling state at the same timing. When the TX 100 and the RX 200 set a threshold for the above-described waveform attenuation index, the TX 100 and the RX 200 may execute a foreign object detection process based on one or more methods, including the foreign object detection process using the power loss method, the foreign object detection process based on temperature, and the foreign object detection process based on the coupling state, at the same timing. When the TX 100 and the RX 200 set a threshold for measuring the above-described coupling state index, the TX 100 and the RX 200 may execute a foreign object detection process based on one or more methods, including the foreign object detection process using the power loss method, the foreign object detection process based on temperature, and the foreign object detection process using the waveform attenuation method at the same timing. When a threshold is set, the accuracy of the threshold to be set improves by executing a foreign object detection process.

When the RX 200 designates the timing, the RX 200 transmits a predetermined packet to the TX 100 to notify the TX 100 of the timing. When the TX 100 designates the timing, the TX 100 transmits a predetermined packet to the RX 200 to notify the RX 200 of the timing.

The TX 100 or the RX 200 calculates the coupling state index by using the above-described coupling state index measurement method at predetermined timing during the power transfer phase. The predetermined timing comes at predetermined intervals or comes when the TX 100 receives a predetermined packet from the RX 200. Alternatively, the predetermined timing comes when the RX 200 receives a predetermined packet from the TX 100. The TX 100 or the RX 200 compares the calculated coupling state index with the set threshold to determine the coupling state. The TX 100 or the RX 200 set a determination threshold with the above-described method according to the determination result. By setting a determination threshold according to the coupling state, it is possible to more appropriately perform a determination on the possibility of the presence or absence of a foreign object.

When the possibility of the presence of a foreign object is detected by the foreign object detection method performed, the TX 100 or the RX 200 executes a first notification process for a user. The first notification process is a notification process that prompts the user to remove a foreign object between the power transmission antenna and the power transmission antenna or on the power transmission antenna. This can be achieved, for example, by using the UI unit 202 of the RX 200 to perform various outputs for the user. Various outputs include screen display of a liquid crystal panel, blink and color change of an LED, voice output through a speaker, and motions, such as vibrations of the main body of the RX 200 by a vibration motor. When the foreign object is removed as a result of notification to the user, the possibility of more appropriate power transmission from the TX 100 to the RX 200 increases. Alternatively, the TX 100 includes a component (UI unit 110) similar to the UI unit 202 of the RX 200, and the component provides a notification prompting the user to remove a foreign object on the TX 100.

One of the factors to weaken the coupling between the power transmission antenna and the power receiving antenna is a misalignment between the power transmission antenna and the power receiving antenna. When, for example, the coupling state index between the power transmission antenna and the power receiving antenna is measured and the measured value is less than a predetermined threshold, the RX 200 executes a second notification process for the user. The second notification process is a notification process that prompts the user to rearrange the RX 200 on the TX 100. This can be achieved by using the UI unit of the RX 200 (or the TX 100) to perform various outputs for the user. Various outputs are as described above. When the RX 200 on the TX 100 is placed at an optimal position as a result of notifying the user, the possibility of appropriate power transmission from the TX 100 to the RX 200 increases. Alternatively, the TX 100 includes a component similar to the UI unit of the RX 200, and the component provides a notification prompting the user to rearrange the RX 200 on the TX 100. The first notification process and the second notification process are executed in a manner such that the user can identify the first notification process and the second notification process from each other. For example, control is executed such that the blink and color change of an LED vary, audio output from a speaker varies, or the vibration pattern of the main body of the RX 200 by a vibration motor varies, among the notification processes.

The TX 100 and the RX 200 include a protection function to protect the circuits of the TX 100 and the RX 200.protection The protection function transmits, to the TX 100, a packet requesting that power transmission be limited when a physical quantity in each circuit is greater than or equal to a limit value. The packet is, for example, a packet that requests to set the GP value to a low value, or RP1 and RP2 that request a CAL process of the power loss method again. Alternatively, the packet is a packet that requests a CAL process of the waveform attenuation method or a CAL process of the coupling state index measurement method again. Alternatively, the packet is an EPT packet that requests the stop of power transmission. Alternatively, the protection function stops (shuts down) the operation of the TX 100 or the RX 200 when a physical quantity in each circuit is greater than or equal to a limit value.

There is a possibility that the limit value of a physical quantity, allowed in each circuit, varies between when the TX 100 and the RX 200 operate in fast charging mode and when the TX 100 and the RX 200 operate in accordance with BPP or EPP. In other words, it is necessary to execute control such that the limit value of a physical quantity of each circuit varies between when the TX 100 and the RX 200 operate in fast charging mode and when the TX 100 and the RX 200 operate in accordance with BPP or EPP. Here, a physical quantity of each circuit is as follows.

The physical quantity is an inverter input voltage, an inverter input current, an electric power supplied to the inverter, an inverter output voltage, an inverter output current, an electric power output from the inverter, or the like. The physical quantity is also a rectifier section output voltage, a rectifier section output current, an electric power supplied to the rectifier section, an electric power output from the rectifier section, a voltage applied to the power transmission antenna, a current flowing through the power transmission antenna, an electric power supplied to the power transmission antenna, a voltage applied to the power receiving antenna, or the like. The physical quantity is also a current flowing through the power receiving antenna, an electric power received by the power receiving antenna, a voltage applied to the load (the charging unit, the battery), a current flowing through the load (the charging unit, the battery), an electric power supplied to the load (the charging unit, the battery), or the like.

When the TX 100 and the RX 200 recognize that the TX 100 and the RX operate in fast charging mode, the TX 100 and the RX 200 set the limit value to a third limit value; whereas, when the TX 100 and the RX 200 recognize that the TX 100 and the RX 200 operate in accordance with BPP or EPP, the TX 100 and the RX 200 set the limit value to a fourth limit value. The TX 100 or the RX 200 calculates the coupling state index by using the above-described coupling state index measurement method at predetermined timing during the power transfer phase. The predetermined timing comes at predetermined intervals or comes when the TX 100 receives a predetermined packet from the RX 200. Alternatively, the predetermined timing comes when the RX 200 receives a predetermined packet from the TX 100. The TX 100 or the RX 200 compares the calculated coupling state index with the set threshold to determine the coupling state. The TX 100 or the RX 200 sets, resets, and adjusts the limit value according to the determination result. By setting the limit value of a physical quantity in each circuit according to the operation mode (profile), including fast charging mode, BPP, and EPP, and the coupling state, it is possible to further appropriately protect the circuits of the TX 100 and the RX 200.

Next, as a fourth method to improve the accuracy of detecting a foreign object present between the TX 100 and the RX 200, a method of increasing the frequency of executing a foreign object detection process executed by the TX 100 or the RX 200 will be described. When the TX 100 and the RX 200 operate in fast charging mode, the TX 100 or the RX 200 is controlled so as to increase the frequency of executing the above-described foreign object detection process compared to when the TX 100 or the RX 200 operates in accordance with BPP or EPP. Thus, it is possible to further early detect a foreign object present between the TX 100 and the RX 200. Here, the above-described foreign object detection method can be used for the foreign object detection process. In other words, it is possible to use foreign object detection by using the power loss method, the quality factor measurement method, the waveform attenuation method, a method of detecting a foreign object based on the coupling state between the power transmission antenna and the power receiving antenna, or a method of detecting a foreign object based on the temperature of the TX 100 or the RX 200.

A case where the foreign object detection method is the power loss method will be described. When the TX 100 and the RX 200 operate in fast charging mode, the RX 200 increases the transmission frequency of RP0 transmitted to the TX 100 compared to when the TX 100 and the RX 200 operate in accordance with BPP or EPP. In other words, the RX 200 transmits RP0 while narrowing the transmission interval of RP0 transmitted to the TX 100.

A case where the foreign object detection method is the quality factor measurement method will be described. When the TX 100 and the RX 200 operate in fast charging mode, the TX 100 increases the measurement frequency of the quality factor concerned with the power transmission antenna 105 compared to when the TX 100 and the RX 200 operate in accordance with BPP or EPP. In other words, the RX 200 measures the quality factor concerned with the power transmission antenna 105 multiple times before the negotiation phase or in advance of the negotiation phase.

A case where the foreign object detection method is the waveform attenuation method will be described. When the TX 100 and the RX 200 operate in fast charging mode, the RX 200 increases the transmission frequency of foreign object detection execution request (packet, command) transmitted to the TX 100 compared to when the TX 100 and the RX 200 operate in accordance with BPP or EPP. In other words, the RX 200 transmits a foreign object detection execution request (packet, command) while narrowing the transmission interval of the foreign object detection execution request (packet, command) transmitted to the TX 100. As a modification, when the TX 100 and the RX 200 operate in fast charging mode, the TX 100 and the RX 200 are controlled such that at least any one of the following periods is shorter than those when the TX 100 and the RX 200 operate in accordance with BPP or EPP. In other words, targeted control periods include the communication prohibition period, the power transmission period, the preparation period, and the transmission power control period. A method of setting each period is as described above.

A case where the foreign object detection method is "a method of detecting a foreign objects based on the coupling state between the power transmission antenna and the power receiving antenna" will be described. When the TX 100 and the RX 200 operate in fast charging mode, the TX 100 or the RX 200 increases the frequency of measuring the coupling state index compared to when the TX 100 and the RX 200 operate in accordance with BPP or EPP. A method of measuring the coupling state index is as described above.

A case where the foreign object detection method is "a method of detecting a foreign object based on the temperature of the TX 100 or the RX 200" will be described. When the TX 100 and the RX 200 operate in fast charging mode, the TX 100 increases the frequency of acquiring the detection values of the temperature sensors of the TX 100 compared to when the TX 100 and the RX 200 operate in accordance with BPP or EPP. Alternatively, the RX 200 increases the transmission frequency of a predetermined packet to the TX 100, and the predetermined packet determines the timing for the TX 100 to acquire the detection values of the temperature sensors of the TX 100. In other words, the RX 200 transmits the predetermined packet to the TX 100 with reduced transmission intervals. Alternatively, when the TX 100 and the RX 200 operate in fast charging mode, the RX 100 increases the frequency of acquiring the detection values of the temperature sensors of the RX 200 compared to when the TX 100 and the RX 200 operate in accordance with BPP or EPP. Alternatively, the TX 100 increases the transmission frequency of a predetermined packet to the RX 200, and the predetermined packet determines the timing for the RX 200 to acquire the detection values of the temperature sensors of the RX 200. In other words, the TX 100 transmits a predetermined packet while narrowing the transmission interval of the predetermined packet transmitted to the RX 200.

[Third Embodiment]

In the present embodiment, an operation for switching to charging with a low power when a predetermined condition is satisfied while the TX 100 is charging the battery of the RX 200 in fast charging mode by using the method described in the first embodiment will be described. Here, "charging with a low power" refers to that the TX 100 charges the RX 200 in accordance with a baseline power profile (BPP) or an extended power profile (EPP). Hereinafter, the operation of the TX 100 and the RX 200 to stop charging the battery of the RX 200 in fast charging mode and to perform charging with a low power of 15 watts or less when a predetermined condition is satisfied will be described with reference to the drawings.

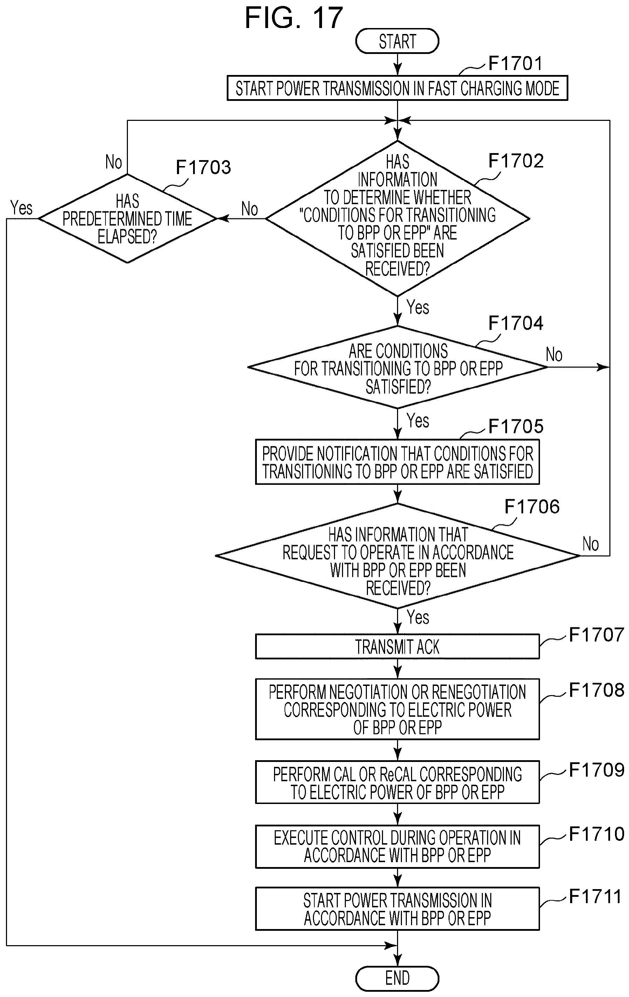

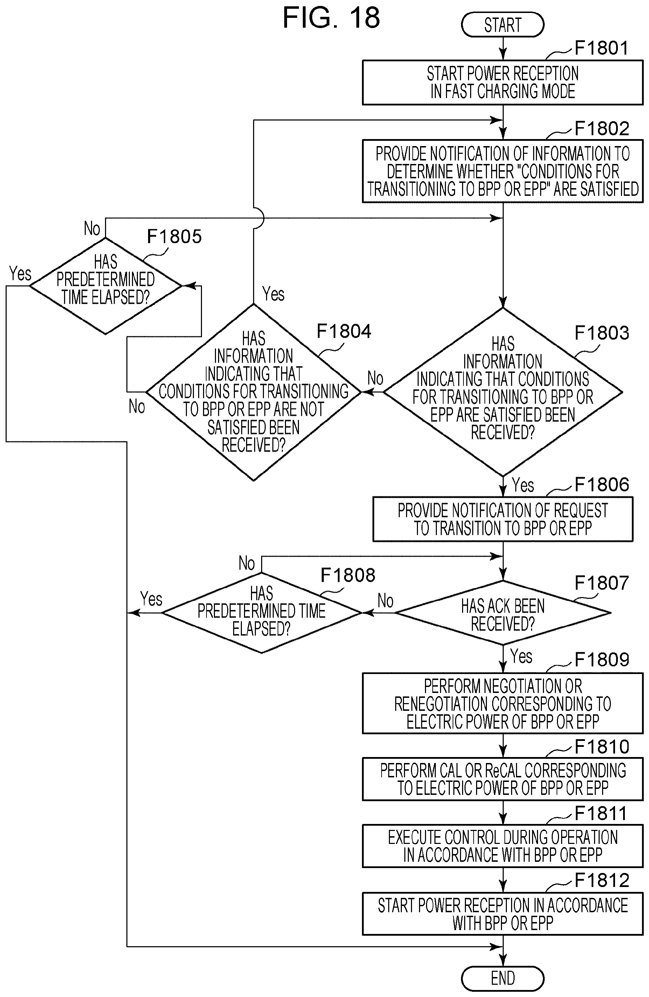

Fig. 17 is a flowchart of the power transmission apparatus, and Fig. 18 is a flowchart of the power receiving apparatus. Hereinafter, an operation after the TX 100 and the RX 200 start charging the battery of the RX 200 in fast charging mode by using the method described in the first embodiment will be described. Initially, the TX 100 starts power transmission to the RX 200 in fast charging mode (F1701). The RX 200 starts power reception from the TX 100 in fast charging mode (F1801). Subsequently, the RX 200 transmits, to the TX 100, a packet containing "information to determine whether the conditions for transitioning to BPP or EPP are satisfied" (F1802). A received power data packet (mode0) may be used as the packet. Another packet may be used instead of the received power data packet (mode0) as long as the packet is used during the power transfer phase.

Here, "the conditions for transitioning to BPP or EPP" will be described. The conditions may be all of a plurality of conditions listed below, a combination of some of them, or any one of them.

[First Condition]

The first condition is to detect that the TX 100 and the RX 200 are not fixed by a method (device) of fixing the TX 100 and the RX 200 in a predetermined position with high accuracy. Alternatively, the first condition is to detect that the TX 100 and the RX 200 are not fixed by a method (device) of fixing the power transmission antenna of the TX 100 and the power receiving antenna of the RX 200 in a predetermined position with high accuracy. For the TX 100 and the RX 200, a method of accurately fixing the TX 100 and the RX 200 in a predetermined position or a method (alignment method) of accurately fixing the power transmission antenna of the TX 100 and the power receiving antenna of the RX 200 in a predetermined position is as described in the first embodiment. In other words, <First Alignment Method>, <Second Alignment Method>, and <Third Alignment Method> can be listed. When the TX 100 and the RX 200 support the above-described methods, the TX 100 and the RX 200 are controlled so as to operate in fast charging mode. However, when it is detected that the TX 100 or the RX 200 is not actually fixed by the "method (alignment method) of fixing in a predetermined position" or that there is a misalignment, the TX 100 or the RX 200 is controlled so as to transition to BPP or EPP.

As described above, the higher the positional accuracy with which the power transmission antenna of the TX 100 and the power receiving antenna of the RX 200 face each other, the higher the transmission efficiency of electric power, which is desirable. In other words, when the TX 100 and the RX 200 are not fixed by "a method (alignment method) of fixing in a predetermined position" or are misaligned, the power transfer efficiency decreases. Accordingly, the amount of occurrence of noise also increases and is also undesirable for environments. In such cases, the TX 100 and the RX 200 are controlled so as to transition to BPP or EPP, and are controlled so as to perform power transfer with a lower power than the fast charging mode.

One example of a method of detecting that the TX 100 and the RX 200 are not fixed by "a method (alignment method) of fixing in a predetermined position" or that there is a misalignment is as follows. The RX 200 includes sensors, switches, and image processing devices to detect that the TX 100 and the RX 200 are not fixed in a predetermined position or are misaligned, and performs detection with those components. Alternatively, the RX 200 includes sensors, switches, and image processing devices to detect that the power transmission antenna of the TX 100 and the power receiving antenna of the RX 200 are not fixed in a predetermined position or are misaligned, and performs detection with those components. When the RX 200 detects that the TX 100 and the RX 200 are not fixed in a predetermined position or that there is a misalignment between the TX 100 and the RX 200, the RX 200 notifies the TX 100 of this situation. Alternatively, when the RX 200 detects that the power transmission antenna of the TX 100 and the power receiving antenna of the RX 200 are not fixed in a predetermined position, the RX 200 notifies the TX 100 of this situation. Alternatively, when the RX 200 detects that there is a misalignment between the power transmission antenna of the TX 100 and the power receiving antenna of the RX 200, the RX 200 notifies the TX 100 of this situation.

[Second Condition]

The second condition is that the coupling state index between the power transmission antenna of the TX 100 and the power receiving antenna of the RX 200 is less than or equal to a predetermined value, or less than a predetermined value. A method of measuring the coupling state index between the power transmission antenna of the TX 100 and the power receiving antenna of the RX 200 or a method of setting a threshold to determine whether the coupling state index is good is as described above.

When the power transmission antenna of the TX 100 and the power receiving antenna of the RX 200 are not facing each other, the value of the coupling state index is also a poor value (in the case of the coupling coefficient, a small value), so the power transfer efficiency decreases, noise emitted to the surrounding area increases, which is undesirable. Therefore, when the measured coupling state index between the TX 100 and the RX 200 is less than or equal to a set threshold or less than a set threshold, the TX 100 and the RX 200 are controlled so as to stop the operation in fast charging mode and transition to and operate in accordance with BPP or EPP.

In F1802, the RX 200 transmits, to the TX 100, a packet containing "information used by the TX to calculate the coupling state index between the power transmission antenna and the power receiving antenna". The information received from the RX 200, which is necessary for the TX 100 to calculate the coupling state index between the power transmission antenna and the power receiving antenna is as described in the description of the above-described coupling state index measurement method.

The above description has been made based on a method of measuring the coupling state index between the power transmission antenna of the TX 100 and the power receiving antenna of the RX 200, or a method of setting a threshold of the coupling state index as a method of determining the coupling state index between the power transmission antenna of the TX 100 and the power receiving antenna of the RX 200. Hereinafter, as another method of obtaining the coupling state index between the power transmission antenna of the TX 100 and the power receiving antenna of the RX 200, <Another Method of Obtaining Coupling State Index between Power Transmission Antenna of TX 100 and Power Receiving Antenna of RX 200> described in the first embodiment is applicable.

[Third Condition]

The third condition is that, when a foreign object is detected by using the above-described foreign object detection methods, or when the presence probability of a foreign object determined in the above-described foreign object detection methods is greater than or equal to a predetermined value or greater than a predetermined value. The foreign object detection methods are the power loss method, the quality factor measurement method, and the waveform attenuation method. The detailed operations for performing each foreign object detection method and the method of setting a threshold for determining the presence or absence of a foreign object or the presence probability of a foreign object are as described above.

It is undesirable to perform wireless power transfer in the presence of a foreign object near the power transmission antenna of the TX 100 and the power receiving antenna of the RX 200 because heat generation and the like occur in the foreign object. Particularly, as the electric power transmitted from the TX 100 to the RX 200 increases, the amount of heat generated may also increase, which is undesirable. Therefore, when a foreign object is detected or the presence probability of a foreign object is higher than or equal to a predetermined value or exceeds a predetermined value by using a foreign object detection method, the TX 100 and the RX 200 are controlled so as to stop the operation in fast charging mode and transition to and operate in accordance with BPP or EPP.

In F1802, the RX 200 transmits, to the TX 100, a packet containing "information used by the TX 100 to perform a foreign object detection method". The information received from the RX 200, necessary for the TX 100 to perform a foreign object detection method is as described above. The information also includes information used to determine a threshold to be set for performing a foreign object detection method.

A foreign object detection method may be performed, and a specific BPP/EPP transition determination threshold for determining whether the conditions for transitioning to BPP or EPP are satisfied may be set as a threshold for determining the presence or absence of a foreign object or the presence probability of a foreign object. In other words, the threshold for the foreign object detection method used during operation in accordance with EPP for power transmission at 15 watts or less and the BPP/EPP transition determination threshold are set so as to be different from each other. For example, the BPP/EPP transition determination threshold is set to a stricter value than the threshold for the foreign object detection method used during operation in accordance with EPP for power transmission at 15 watts or less. A threshold is set by adding a predetermined margin to a reference value; however, the BPP/EPP transition determination threshold is set with a smaller margin against the threshold for the foreign object detection method used during operation in accordance with EPP for power transmission at 15 watts or less. Alternatively, the threshold for the foreign object detection method used during operation in fast charging mode and the BPP/EPP transition determination threshold are set so as to be different from each other. For example, the BPP/EPP transition determination threshold is set to a stricter value than the threshold for the foreign object detection method used during operation in fast charging mode. A threshold is set by adding a predetermined margin to a reference value; however, the BPP/EPP transition determination threshold is set with a smaller margin against the threshold for the foreign object detection method used during operation in fast charging mode.

Thus, it is possible to further early detect the possibility of the presence of a foreign object during operation in fast charging mode for high-power transfer, and to further safely transition from fast charging mode to BPP or EPP.

[Fourth Condition]

The fourth condition is that the temperature at a predetermined point in the TX 100 or the RX 200 is higher than or equal to a predetermined value or exceeds a predetermined value. When high-power transfer is performed in fast charging mode, the components (such as the power transmission antenna, the power receiving antenna, and the battery) of the TX 100 or the RX 200 generate more heat compared to low-power transfer. Thus, when continuing fast charging mode in a state where the temperature of the TX 100 or the RX 200 is high and high-power transfer is performed, this may lead to a breakage of the TX 100 or the RX 200. Therefore, when the temperature of the TX 100 or the RX 200 is higher than or equal to a predetermined value or exceeds a predetermined value, the TX 100 and the RX 200 are controlled so as to stop the operation in fast charging mode and transition to and operate in accordance with BPP or EPP.

Here, a control method based on the temperature of the TX 100 will be described. It is assumed that each of the TX 100 and the RX 200 has a plurality of temperature sensors. Particularly, temperature sensors are placed at a higher density on the power transmission antenna 105, the charging base 300, and the power receiving antenna 205 compared to other locations. In F1802, the RX 200 transmits, to the TX 100, a packet containing "timing information to determine the timing at which the TX 100 acquires temperature information from the temperature sensors of the TX 100". The information may include information used to determine a threshold for temperature to be set.

The first to fourth conditions have been described as "the conditions for transitioning to BPP or EPP". The "conditions for transitioning to BPP or EPP" may be established by combining the above-described first to fourth conditions as the "conditions for transitioning to BPP or EPP". For example, the case where both the above-described first condition and second condition are satisfied may be set as "the conditions for transitioning to BPP or EPP". Not only a combination of two of the first to fourth conditions but also a combination of three or all of the first to fourth conditions may be set as "the conditions for transitioning to BPP or EPP".

Subsequently, the TX 100 determines whether the TX 100 has received, from the RX 200, a packet containing "information to determine whether the conditions for transitioning to BPP or EPP are satisfied" (F1702). When the TX 100 has not received the packet, the TX 100 regularly or irregularly makes a determination of F1702 until a predetermined time elapses (No in F1702, No in F1703). When the TX 100 has not received a packet containing "information to determine whether the conditions for transitioning to BPP or EPP are satisfied" after a lapse of the predetermined time (No in F1702, Yes in F1703), the TX 100 ends the process. In other words, the TX 100 stops power transmission and transitions to the selection phase.

When the TX 100 has received a packet containing "information to determine whether the conditions for transitioning to BPP or EPP are satisfied" (Yes in F1702), the TX 100 determines based on the information whether the conditions for transitioning to BPP or EPP are satisfied (F1704). When it is determined that "the conditions for transitioning to BPP or EPP are satisfied" (Yes in F1704), the process proceed to F1705. When it is determined that "the conditions for transitioning to BPP or EPP are not satisfied" (No in F1704), the process proceed to F1702.

Here, the determination process related to the above-described conditions will be described.

[When First Condition Is Included as Conditions for Transitioning to BPP or EPP]

When the TX 100 has received a packet containing information indicating that "it is detected that the TX 100 and the RX 200 are not fixed in a predetermined position or there is a misalignment between the TX 100 and the RX 200", the TX 100 makes the following determination. In other words, the TX 100 determines that the conditions for transitioning to BPP or EPP are satisfied. Alternatively, when the TX 100 has received a packet containing information indicating that "it is detected that the power transmission antenna and the power receiving antenna are not fixed in a predetermined position or there is a misalignment between the power transmission antenna and the power receiving antenna", the TX 100 makes the following determination. In other words, the TX 100 determines that the conditions for transitioning to BPP or EPP are satisfied.

In other words, the process proceeds to F1705. On the other hand, when the TX 100 has received a packet containing information indicating that "it is detected that the TX 100 and the RX 200 are not fixed in a predetermined position or there is a misalignment between the TX 100 and the RX 200", the TX 100 performs as follows. In other words, the TX 100 determines that the conditions for transitioning to BPP or EPP are not satisfied, and the process proceeds to F1702. Alternatively, the same applies when the TX 100 has received a packet not containing information indicating that "it is detected that the power transmission antenna and the power receiving antenna are not fixed in a predetermined position or there is a misalignment between the power transmission antenna and the power receiving antenna". In other words, the TX 100 determines that the conditions for transitioning to BPP or EPP are not satisfied, and the process proceeds to F1702. Alternatively, when the TX 100 has received a packet containing information indicating that "it is detected that the TX 100 and the RX 200 are fixed in a predetermined position or there is no misalignment between the TX 100 and the RX 200", the TX 100 performs as follows. In other words, the TX 100 determines that the conditions for transitioning to BPP or EPP are not satisfied, and the process proceeds to F1702. Alternatively, the same applies when the TX 100 has received a packet containing information indicating that "it is detected that the power transmission antenna and the power receiving antenna are fixed in a predetermined position or there is no misalignment between the power transmission antenna and the power receiving antenna".

In other words, the TX 100 determines that the conditions for transitioning to BPP or EPP are not satisfied, and the process proceeds to F1702.

In other words, when the TX 100 detects that the TX 100 and the RX 200 are not fixed in a predetermined position or there is a misalignment between the TX 100 and the RX 200", the TX 100 stops the operation in fast charging mode. Then, the TX 100 is controlled so as to transition to and operate in accordance with BPP or EPP.

[When Second Condition Is Included as Conditions for Transitioning to BPP or EPP]

The TX 100 calculates the coupling state index by using "information used for the TX 100 to calculate the coupling state index between the power transmission antenna and the power receiving antenna". When the coupling state index satisfies a predetermined condition, the TX 100 determines that the conditions for transitioning to BPP or EPP are satisfied, and the process proceeds to F1705. Here, "satisfying a predetermined condition" refers to that the coupling state index is less than or equal to a predetermined threshold or less than a predetermined threshold. On the other hand, when the coupling state index does not satisfy the predetermined condition, the TX 100 determines that the conditions for transitioning to BPP or EPP are not satisfied, and the process proceeds to F1702.

[When Third Condition Is Included as Conditions for Transitioning to BPP or EPP]

The TX 100 performs a foreign object detection method by using "information used for the TX 100 to perform a foreign object detection method" received from the RX 200. When the result obtained through the foreign object detection method satisfies a predetermined condition, the TX 100 determines that the conditions for transitioning to BPP or EPP are satisfied, and the process proceeds to F1705. Here, "satisfying a predetermined condition" refers to that the result of foreign object detection by using a foreign object detection method indicates that a foreign object is present, or that the presence probability of a foreign object is higher than or equal to a predetermined value or exceeds a predetermined value. When the result of foreign object detection by using a foreign object detection method does not satisfy a predetermined condition, the TX 100 determines that the conditions for transitioning to BPP or EPP are not satisfied, and the process proceeds to F1702.

[When Fourth Condition Is Included as Conditions for Transitioning to BPP or EPP]

When the TX 100 has received, from the RX 200, a packet containing "timing information to determine the timing for the TX 100 to acquire temperature information from the temperature sensors of the TX 100", the TX 100 acquires the values from the temperature sensors of the TX 100 at the timing at which the TX 100 receives the packet. Then, the TX 100 determines whether the conditions for transitioning to BPP or EPP are satisfied. When the values of the temperature sensors of the TX 100 satisfy a predetermined condition, the TX 100 determines that the conditions for transitioning to BPP or EPP are satisfied, and the process proceeds to F1705. Here, "satisfying a predetermined condition" refers to that the values of the temperature sensors are greater than or equal to a predetermined value or exceed a predetermined value. "Not satisfying a predetermined condition" refers to that the values of the temperature sensors are less than or equal to a predetermined value or less than a predetermined value.

In the above-described example, it is assumed that the TX 100 acquires, from the RX 200, the values of the temperature sensors of the TX 100 at the timing at which the TX 100 receives "timing information that determines the timing for the TX 100 to acquire the temperature information from the temperature sensors of the TX 100". However, the configuration is not limited thereto. For example, the TX 100 may acquire the temperature information from the temperature sensors of the TX 100 at the timing determined by the TX 100 at predetermined intervals.

The TX 100 is not limited to determining whether to transition to BPP or EPP based on the acquired values of the temperature sensors. For example, the TX 100 may calculate the rate of increase in temperature based on a plurality of temperature detection values acquired at predetermined timing. In this case, when the rate of increase in temperature is higher than or equal to a predetermined threshold or exceeds a predetermined threshold, the TX 100 may determine that "the conditions for transitioning to BPP or EPP are satisfied". Then, when the rate of increase in temperature is lower than or equal to the predetermined threshold or lower than the predetermined threshold, the TX 100 may determine that "the conditions for transitioning to BPP or EPP are not satisfied".

The RX 200 may acquire the values of the temperature sensors of the RX 200 and transmit, to the TX 100, a packet containing "temperature information from the temperature sensors of the RX 200". The information may include information used to determine a threshold for temperature to be set. In this case, when the received values of the temperature sensors of the RX 200 satisfy a predetermined condition, the TX 100 determines that the conditions for transitioning to BPP or EPP are satisfied, and the process proceeds to F1705. Here, "satisfying a predetermined condition" refers to that the values of the temperature sensors of the RX 200 are greater than or equal to a predetermined value or exceed a predetermined value. When the values of the temperature sensors of the RX 200 do not satisfy the predetermined condition, the TX 100 determines that the conditions for transitioning to BPP or EPP are not satisfied, and the process proceeds to F1702. Here, "not satisfying a predetermined condition" refers to that the values of the temperature sensors of the RX 200 are less than or equal to the predetermined value or less than the predetermined value.

The TX 100 may calculate the rate of increase in temperature based on the values of the plurality of temperature sensors acquired from the RX 200, and, when the rate of increase in temperature is higher than or equal to a predetermined threshold or exceeds a predetermined threshold, may determine that "the conditions for transitioning to BPP or EPP are satisfied". Then, when the rate of increase in temperature is lower than or equal to the predetermined threshold or lower than the predetermined threshold, the TX 100 may determine that "the conditions for transitioning to BPP or EPP are not satisfied".

With the above-described methods, the TX 100 determines in F1704 whether the conditions for transitioning to BPP or EPP are satisfied. Hereinafter, the flow from F1705 will be described. In F1705, the TX 100 transmits, to the RX 200, a packet containing information indicating that "the conditions for transitioning to BPP or EPP are satisfied". NAK that is a negative acknowledge is used as the packet. The RX 200 determines whether the RX 200 has received, from the TX 100, a packet containing information indicating that "the conditions for transitioning to BPP or EPP are satisfied" (F1803). When the RX 200 has not received the packet from the TX 100 (No in F1803), the RX 200 determines whether the RX 200 has received a packet containing information indicating that "the conditions for transitioning to BPP or EPP are not satisfied" (F1804).

When the RX 200 has received a packet containing information indicating that "the conditions for transitioning to BPP or EPP are not satisfied" (for example, when the RX 200 has received ACK that is an acknowledge) in F1804, the process proceeds to F1802.

When the RX 200 has not received a packet containing information indicating that "the conditions for transitioning to BPP or EPP are satisfied" and has not received a packet containing information indicating that "the conditions for transitioning to BPP or EPP are not satisfied", the RX 200 performs the following operation. In other words, the RX 200 regularly or regularly makes determinations of F1803 and F1804 until a predetermined period of time has elapsed (No in F1803, No in F1804, No in F1805). The RX 200 regularly or irregularly makes determinations of F1803 and F1804 within a predetermined time, and, when the determination is negative, the RX 200 ends the process (Yes in F1805). In other words, the RX 200 stops power reception and returns to the selection phase.

When the determination is affirmative in F1803, the RX 200 transmits, to the TX 100, a packet containing information indicating a request to transition to BPP or EPP (F1806). The TX 100 determines whether the TX 100 has received, from the RX 200, a packet containing information indicating "a request to transition to BPP or EPP" (F1706). RP0, RP1, or RP2 is used as the packet. The packet includes a one-bit field indicating whether to request a transition to BPP or EPP.

When the RX 200 requests that the TX 100 transition to BPP or EPP, the RX 200 stores "1" (or "0") in the field; whereas, when the RX 200 does not request that the TX 100 transition to BPP or EPP, the RX 200 stores "0" (or "1") in the relevant field. Another packet may be used instead of RP0, RP1, or RP2 as long as the packet is used during the power transfer phase.

Alternatively, the packet includes a one-bit field indicating which to transition to, BPP or EPP. When the RX 200 requests that the TX 100 transition to BPP, the RX 200 stores "1" (or "0") in the relevant field; whereas, when the RX 200 requests that the TX 100 transition to EPP, the RX 200 stores "0" (or "1") in the relevant field. Another packet may be used instead of RP0, RP1, or RP2 as long as the packet is used during the power transfer phase.

When the TX 100 has not received a packet containing information indicating a request to transition to BPP or EPP (No in F1706), the process proceeds to F1702.

When the TX 100 has received the packet (Yes in F1706), the TX 100 transmits ACK that is an acknowledge to the RX 200 (F1707). Then, the TX 100 proceeds to F1708. The RX 200 determines whether the RX 200 has received ACK from the TX 100 (F1807). When the RX 200 has not received ACK from the TX 100, the RX 200 regularly or irregularly makes a determination of F1807 until a predetermined time elapses (No in F1807, No in F1808). When the RX 200 has not received ACK after a lapse of the predetermined time (No in F1807, Yes in F1808), the RX 200 ends the process. In other words, the RX 200 stops power reception and returns to the selection phase. When the RX 200 has received ACK from the TX 100 (Yes in F1807), the process proceeds to F1809.

Next, the operation of the TX 100 in accordance with BPP or EPP from F1708 will be described. In F1708, the TX 100 performs negotiation or renegotiation corresponding to the electric power of BPP or EPP. Specifically, the TX 100 limits the negotiable load power to 15 watts or less. Alternatively, the TX 100 limits the negotiable load power to five watts or less. Alternatively, the TX 100 limits the negotiable load power to less than five watts. More specifically, the TX 100 sets the negotiable load power to a value lower than a potential load power. The potential load power is the highest level of GP for which the TX 100 can negotiate. Thus, it is possible to set the GP to 15 watts or less, or five watts or less or less than five watts. Negotiation or renegotiation is an operation performed during the above-described negotiation phase or renegotiation phase. Through the above-described control, the TX 100 and the RX 200 agree on GP through negotiation.

Then, the process proceeds to F1709, and a CAL process or ReCAL process corresponding to the electric power of BPP or EPP is executed. A CAL process or ReCAL process is an operation executed during the above-described calibration phase. In the present embodiment, when the above-described first condition, second condition, third condition, and fourth condition are satisfied, the TX 100 and the RX 200 are controlled so as to stop the operation in fast charging mode and transition to and operate in accordance with BPP or EPP. There is a possibility that calibration points created in the CAL process or ReCAL process vary between when the first condition is satisfied and when the first condition is not satisfied. This is because the power transfer efficiency varies depending on the placement relationship between the TX 100 and the RX 200. Alternatively, this is because the power transfer efficiency varies depending on the placement relationship between the power transmission antenna of the TX 100 and the power receiving antenna of the RX 200. There is a possibility that calibration points created in the CAL process or ReCAL process vary between when the second condition is satisfied and when the second condition is not satisfied. This is because the power transfer efficiency varies according to the coupling state index between the power transmission antenna of the TX 100 and the power receiving antenna of the RX 200. There is a possibility that calibration points created in the CAL process or ReCAL process vary between when the third condition is satisfied and when the third condition is not satisfied. This is because the power transfer efficiency varies depending on the presence or absence of a foreign object. There is a possibility that calibration points created in the CAL process or ReCAL process vary between when the fourth condition is satisfied and when the fourth condition is not satisfied. This is because the measurement results of calibration points are affected by the temperature. In other words, when the above-described first condition, second condition, third condition, and fourth condition are satisfied, there is a possibility that the previously measured calibration points are not accurate, so calibration points are created again in F1709.

When the GP is set to 15 watts or less, or five watts or less, Pt2 in Fig. 4 is 15 watts or less, or five watts or less. The straight line 1002 in Fig. 4 is created so as to cover the transmission power and receiving power of BPP or EPP. The straight line 1002 in Fig. 4 is created in consideration of the GP of BPP or EPP. Calibration points created during the CAL process or ReCAL process in the case of BPP or EPP may be less than calibration points created during the CAL process or ReCAL process in the case of operation in fast charging mode. The number of calibration points created during the CAL process or ReCAL process in the case of BPP or EPP may be determined according to the value of GP. For example, the number of calibration points is "one" when the GP is five watts, the number of calibration points is "two" when the GP is 10 watt, and the number of calibration points is "three" when the GP is 15 watts. The above-described method of determining the number of calibration points can be applied to the "calibration process of the power loss method", "CAL process of the waveform attenuation method", and "CAL process of the coupling state index measurement method".

Calibration points may be controlled so as to create calibration points corresponding to the following electric powers.

- · Guaranteed load power
- ·Requested load power
- ·Negotiable load power
- ·Potential load power
- ·Maximum power value or reference power

The above-described method of creating calibration points can be applied to the "calibration process of the power loss method", "CAL process of the waveform attenuation method", and "CAL process of the coupling state index measurement method".

Subsequently, the TX 100 proceeds to F1710. The operation that the TX 100 executes in F1710 is to stop the control described in the second embodiment or to return to the state before the control described in the second embodiment is executed. The control described in the second embodiment is "control that is executed during operation in fast charging mode and is not executed in accordance with BPP or EPP". F1710 is at the stage where the TX 100 and the RX 200 are controlled so as to stop operation in fast charging mode and transition to and operate in accordance with BPP or EPP, so the TX 100 performs the above-described operation.

Subsequently, the TX 100 proceeds to F1711 and starts power transmission to the RX 200 in accordance with BPP or EPP. In other words, the TX 100 starts power transmission at less than five watts or five watts or less to the RX 200. Alternatively, the TX 100 starts power transmission at 15 watts or less to the RX 200. The order of the processes of F1710 and F1711 may be reversed. The order of the processes of F1709 and F1710 may be reversed. The operations from F1708 to F1711 have been described above.

Next, the operation of the RX 200 in accordance with BPP or EPP from F1809 will be described. In F1809, the RX 200 performs negotiation or renegotiation corresponding to the electric power of the fast charging mode. Specifically, the RX 200 is set to a requested load power of 15 watts or less. Thus, it is possible to set the GP to 15 watts or less. Alternatively, the RX 200 sets the requested load power to five watts or less. Thus, it is possible to set the GP to five watts or less. Alternatively, the RX 200 sets the requested load power to less than five watts. Thus, it is possible to set the GP to less than five watts.

Through the above-described control, the TX 100 and the RX 200 agree on GP through negotiation.

Then, the RX 200 proceeds to F1810 and executes a CAL process or ReCAL process corresponding to the electric power of the fast charging mode. The description of the process is omitted because it has been described in the above-described F1709.

Subsequently, the RX 200 proceeds to F1811. The operation that the TX 100 executes in F1811 is to stop the control described in the second embodiment or to return to the state before the control described in the second embodiment is executed. The control described in the second embodiment is "control that is executed during operation in fast charging mode and is not executed in accordance with BPP or EPP". F1811 is at the stage where the TX 100 and the RX 200 are controlled so as to stop operation in fast charging mode and transition to and operate in accordance with BPP or EPP, so the RX 200 performs the above-described operation.

Subsequently, the RX 200 proceeds to F1812 and start power reception in accordance with BPP or EPP from the TX 100. In other words, the RX 200 starts power reception of less than five watts or five watts or less from the TX 100. Alternatively, the RX 200 starts power transmission at 15 watts or less from the TX 100. The order of the processes of F1811 and F1812 may be reversed. The order of the processes of F1810 and F1811 may be reversed. The operations from F1809 to F1812 have been described above.

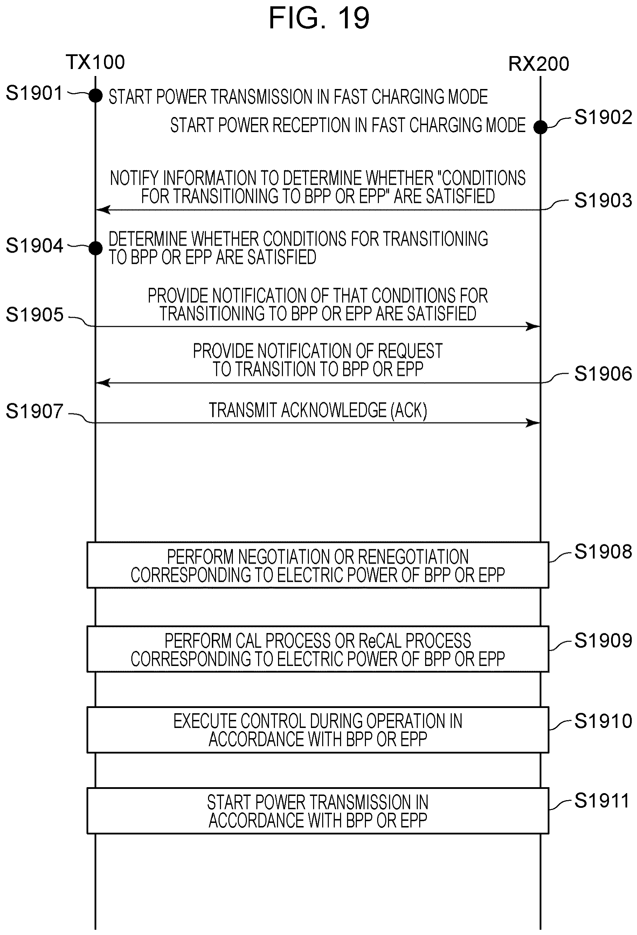

Fig. 19 is a sequence diagram in a case where, after the TX 100 starts power transmission to the RX 200 in fast power receiving mode, the TX 100 transmits electric power in accordance with BPP or EPP to the RX 200. Initially, the TX 100 starts power transmission to the RX 200 in fast charging mode (S1901). The RX 200 starts power reception from the TX 100 in fast charging mode (S1902). The RX 200 provides a notification of information to determine whether "the conditions for transitioning to BPP or EPP" are satisfied (S1903). Based on the information, the TX 100 determines whether the conditions for transitioning to BPP or EPP are satisfied (S1904). Then, the conditions for transitioning to BPP or EPP are satisfied, so the TX 100 provides a notification that the conditions for transitioning to BPP or EPP are satisfied (S1905). Subsequently, the RX 200 provides a notification to request to transition to BPP or EPP (S1906). Then, the TX 100 transmits an acknowledge (ACK) (S1907). After that, the TX 100 and the RX 200 perform negotiation or renegotiation corresponding to the electric power of BPP or EPP (S1908). Subsequently, the TX 100 and the RX 200 execute a CAL process or ReCAL process corresponding to the electric power of BPP or EPP (S1909). Subsequently, the TX 100 and the RX 200 execute "control during operation in accordance with BPP or EPP" (S1910). Then, the TX 100 and the RX 200 start power transmission in accordance with BPP or EPP (S1911).

The order of S1910 and S1911 may be reversed. The order of S1909 and S1910 may be reversed.

<Various Modifications>

The roles of the controls described in F1702 to F1705 of Fig. 17 and F1802 to F1803 of Fig. 18 may be interchanged as follows. For example, the TX 100 may notify the RX 200 through a predetermined packet of information to determine whether "the conditions for transitioning to BPP or EPP" are satisfied. A power transmitter capabilities (CAP) data packet may be used as the packet. Alternatively, a power transmitter identification (ID) data packet may be used as the packet. However, these packets may be provided as responses to a general request (GRQ) data packet from the RX 200. Specifically, initially, the RX 200 may use a GRQ data packet to request that the TX 100 transmit information to determine whether the "conditions for transitioning to BPP or EPP" are satisfied. Then, in response to the request, the TX 100 may transmit information to determine whether "the conditions for transitioning to BPP or EPP" are satisfied.

The RX 200 may determine that "the conditions for transitioning to BPP or EPP" are satisfied and notifies the TX 100 of the determination result through a predetermined packet. The packet may be ACK that is an acknowledge.

The RX 200 may request to transition to "BPP or EPP" by using a predetermined packet. RP0, RP1, or RP2 may be used as the packet.

The information to determine whether the "conditions for transitioning to BPP or EPP" are satisfied is, for example, the following information. In other words, the information is information indicating that "the TX 100 has detected that the TX 100 and the RX 200 are not fixed in a predetermined position, or that there is a misalignment between the TX 100 and the RX 200". Alternatively, the information is information indicating that "the TX 100 has detected that the power transmission antenna of the TX 100 and the power receiving antenna of the RX 200 are not fixed in a predetermined position, or that there is a misalignment between the power transmission antenna of the TX 100 and the power receiving antenna of the RX 200". In this case, the TX 100 includes sensors, switches, and image processing devices to detect that the TX 100 and the RX 200 are not fixed in a predetermined position or are misaligned, and performs detection with those components. Alternatively, the TX 100 includes sensors, switches, and image processing devices to detect that the power transmission antenna of the TX 100 and the power receiving antenna of the RX 200 are not fixed in a predetermined position or are misaligned, and performs detection with those components.

Alternatively, as described in the description of the coupling state index measurement method, the above-described information is information on the TX 100, needed for the RX 200 to calculate the coupling state index. The above-described information may be a packet containing information indicating the timing for the RX 200 to acquire the values of the temperature sensors of the RX 200. Alternatively, the above-described information may be a packet containing information on the values of the temperature sensors of the TX 100.

Alternatively, the following configuration may be adopted as another modification. In other words, initially, the RX 200 notifies the TX 100 of information to execute "a foreign object detection process" or "calculation of the coupling state index". Then, the TX 100 executes "a foreign object detection process" or "calculation of the coupling state index" based on the information received from the RX 200. After that, the TX 100 notifies the RX 200 of the result of "the foreign object detection process" or "the calculation of the coupling state index". In other words, the TX 100 notifies the RX 200 of the value of the coupling state index, the presence or absence of a foreign object, or the presence probability of a foreign object. Then, the RX 200 compares the results of the "foreign object detection process" or "calculation of the coupling state index" received from the TX 100 with the threshold held by the RX 200 to determine whether "the conditions for transitioning to BPP or EPP" are satisfied. Based on the determination result, the RX 200 requests to transition to "BPP or EPP". In this case as well, when a combination of a plurality of conditions among the first to fourth conditions is satisfied, the RX 200 may be controlled so as to determine that "the conditions for transitioning to EPP or BPP are satisfied".

In the above-described third embodiment, the TX 100 executes control to transition to BPP or EPP (from F1708) when the RX 200 has received a packet containing information indicating to request a transition to "BPP or EPP" (Yes in F1706). Instead, when the TX 100 determines that the "conditions for transitioning to BPP or EPP" are satisfied (Yes in F1704), the TX 100 may execute control to transition to BPP or EPP (from F1708). Alternatively, when the determination is affirmative in F1704 and the determination is negative in F1706, the TX 100 may execute control to transition to BPP or EPP (from F1708). In other words, when the TX 100 determines that the "conditions for transitioning to BPP or EPP" are satisfied, the TX 100 transitions to BPP or EPP and limits electric power to be transmitted to the RX 200 to a predetermined value or less, even without a request from the RX 200. For example, with the above-described method, the TX 100 is controlled so as to set the GP to 15 watts or less, or five watts or less, or less than five watts.

In the third embodiment, when the TX 100 determines that "the conditions for transitioning to BPP or EPP are satisfied" (Yes in F1704), the TX 100 notifies the RX 200 that "the conditions for transitioning to BPP or EPP are satisfied" (F1705). Instead, when the TX 100 determines that "the conditions for transitioning to BPP or EPP are satisfied" (Yes in F1704), the TX 100 may be controlled so as to stop and reset power transmission to the RX 200 and returns to the selection phase.

Instead of the RX 200 notifying the TX 100 of "a request to transition to BPP or EPP", the RX 200 may transmit an "end power transfer data packet". As a result, the TX 100 stops and resets power transmission to the RX 200, and the TX 100 and the RX 200 return to the selection phase. In other words, when the RX 200 recognizes that the TX 100 satisfies the first, second, third, and fourth conditions, the RX 200 is controlled so as to transmit an EPT packet to the TX 100 to stop power transmission.

In the third embodiment, the first condition, the second condition, the third condition, and the fourth condition have been described as the conditions for the TX 100 to determine that "the conditions for transitioning to BPP or EPP are satisfied". Instead, the first condition, the second condition, the third condition, and the fourth condition may be applied as the conditions for the TX 100 to determine that "the conditions for transitioning to MPP that is not the fast charging mode are satisfied". Then, when the TX 100 determines that "the conditions for transitioning to MPP that is not the fast charging mode are satisfied", the TX 100 and the RX 200 may be controlled so as to stop operation in fast charging mode and transition to and operate in accordance with MPP that is not the fast charging mode. In this case, control is executed while the "BPP or EPP" described in the above-described embodiments is read as "MPP that is not the fast charging mode".

Here, "MPP that is not the fast charging mode" refers to a mode in which, in accordance with MPP having a function of accurately fixing the TX 100 and the RX 200 in a predetermined position, the TX 100 transmits electric power of 15 watts or less, or five watts or less, or less than five watts to the RX 200. Alternatively, "MPP that is not the fast charging mode" refers to a mode in which, in accordance with MPP having a function of accurately fixing the TX 100 and the RX 200 in a predetermined position, the RX 200 receives electric power of 15 watts or less, or five watts or less, or less than five watts from the TX 100.

[Other Embodiments]

Part (or all in some cases) of the components in the above-described embodiments may be replaced with other components that have similar functions or omitted, and additional components may also be added. The configuration is not limited to the WPC standard and is applicable to various standards.

Each of the power transmission apparatus and the power receiving apparatus may be, for example, an image input apparatus, such as an image capturing apparatus (such as a still camera and a video camera) and a scanner, or may be an image output apparatus, such as a printer, a copying machine, and a projector. Each of the power transmission apparatus and the power receiving apparatus may be a storage device, such as a hard disk drive and a memory device, or may be an information processing apparatus, such as a personal computer (PC), a smartphone, and a tablet device.

The power receiving apparatus of the present disclosure may be an information terminal device. For example, an information terminal device has a display portion (display) that shows information to a user. The display portion (display) is supplied with electric power received from a power receiving antenna. The electric power received from the power receiving antenna is stored in an electrical storage unit (battery), and electric power is supplied from the battery to the display portion. In this case, the power receiving apparatus may have a communication unit that communicates with another apparatus different from the power transmission apparatus. The communication unit may support communication standards, such as NFC communication and 5th generation mobile communication system (5G).

The power receiving apparatus of the present disclosure may be a vehicle, such as an automobile. For example, an automobile that is a power receiving apparatus may receive electric power from a charger (power transmission apparatus) via a power transmission antenna installed in a parking lot. An automobile that is a power receiving apparatus may receive electric power from a charger (power transmission apparatus) via a power transmission antenna embedded in a road. Such an automobile supplies received electric power to a battery. Electric power from the battery may be supplied to an actuation unit (a motor or an electrically driven unit) that drives a wheel, may be used to drive a sensor used to assist in driving, or may be used to drive the communication unit that communicates with an external apparatus. In other words, in this case, the power receiving apparatus may have a communication unit that communicates with not only the wheel but also the battery, the motor and the sensor that are actuated by using electric power received, and an apparatus other than the power transmission apparatus. Furthermore, the power receiving apparatus may have an accommodating portion that accommodates a human. Examples of the sensor include a sensor used to measure an inter-vehicle distance and a distance to another obstacle. The communication unit may support, for example, the Global Positioning System (Global Positioning Satellites or GPS). The communication unit may support a communication standard, such as 5th generation mobile communication system (5G). The vehicle may be a bicycle or a motorcycle.

The power receiving apparatus of the present disclosure may be an electric tool, a home appliance, or the like. Each of these devices, which are power receiving apparatuses, may have a battery and a motor that is actuated by electric power received and stored in the battery. Each of these devices may have a notification unit that notifies the remaining amount of the battery.

Each of these devices may have a communication unit that communicates with another apparatus different from the power transmission apparatus.

The communication unit may support communication standards, such as NFC and 5th generation mobile communication system (5G).

The power transmission apparatus of the present disclosure may be an in-vehicle charger that supplies electric power to portable information terminal devices, such as smartphones and tablets, that support wireless power transfer within a cabin of an automobile.

Such an in-vehicle charger may be installed anywhere inside an automobile. For example, an in-vehicle charger may be installed in the console of an automobile, or may be installed in the instrument panel (dashboard), at a position between passenger seats, on the ceiling, or on the door. However, an in-vehicle charger should not be installed at a location to interfere with driving operation. While the power transmission apparatus has been described using an in-vehicle charger in an example, such chargers are not limited to those placed in vehicles. Such chargers may be installed in transport vehicles, such as trains, airplanes, and ships. In this case, the charger may be installed at a position between passenger seats, on the ceiling, or on the door.

A vehicle, such as an automobile, equipped with an in-vehicle charger may be a power transmission apparatus. In this case, the power transmission apparatus includes wheels and a battery, and supplies electric power to a power receiving apparatus through a power transmission circuit portion and a power transmission antenna using electric power of the battery.

The present disclosure can be implemented by a process of supplying a program for implementing one or more functions of the above-described embodiments to a system or apparatus via a network or storage medium, and causing one or more processors in a computer of the system or apparatus to read and execute the program. Alternatively, the present disclosure may be implemented by a circuit (for example, ASIC) that implements one or more functions.

One or some of the processes described with reference to the flowcharts in the present disclosure may be implemented by hardware. For example, by using a predetermined compiler, it is sufficient to automatically generate a dedicated circuit on an FPGA from a program for implementing steps. A Gate Array circuit may be formed similarly to an FPGA and implemented as hardware.

<<Others>>

The disclosure of the above-described embodiments includes the following configurations, methods, and program.

(Configuration 1)

A power receiving apparatus includes a first transmission unit configured to transmit first information indicating whether a fast charging mode is supported, and a second transmission unit configured to transmit second information, the second information being used by a power transmission apparatus, which performs wireless power transfer, to determine whether wireless power transfer in the fast charging mode is possible, the second information including information indicating whether it is allowed to align the power transmission apparatus and the power receiving apparatus by using a magnet.

(Configuration 2)

In the power receiving apparatus according to Configuration 1, the fast charging mode is a mode that enables wireless power transfer over 15 watts.

(Configuration 3)

The power receiving apparatus according to Configuration 1 or 2 further includes a request unit configured to request that the power transmission apparatus transmit information.

(Configuration 4)

In the power receiving apparatus according to Configuration 3, the first transmission unit is configured to, when information transmitted from the power transmission apparatus in response to the request includes information indicating that the power transmission apparatus supports the fast charging mode, transmit the first information.

(Configuration 5)

The power receiving apparatus according to any one of Configurations 1 to 4 includes a request unit configured to, when information indicating that it is allowed to perform wireless power transfer in the fast charging mode has been received from the power transmission apparatus, request wireless power transfer in the fast charging mode.

(Configuration 6)

The power receiving apparatus according to any one of Configurations 1 to 5 includes a transmission unit configured to transmit, to the power transmission apparatus, information for the power transmission apparatus to determine whether it is allowed to continue wireless power transfer in the fast charging mode.

(Configuration 7)

The power receiving apparatus according to Configuration 6 includes a request unit configured to, when information indicating that it is not allowed to perform wireless power transfer in the fast charging mode has been received from the power transmission apparatus, request wireless power transfer in a mode other than the fast charging mode.

(Configuration 8)

A power transmission apparatus includes a first receiving unit configured to receive first information indicating whether a power receiving apparatus, which is a target of wireless power transfer, supports a fast charging mode, and a second receiving unit configured to receive second information, the second information being used by the power transmission apparatus to determine whether wireless power transfer in the fast charging mode is possible, the second information including information indicating whether it is allowed to align the power transmission apparatus and the power receiving apparatus by using a magnet.

(Method 1)

A communication method for a power receiving apparatus includes a first transmission step of transmitting first information indicating whether a fast charging mode is supported, and a second transmission step of transmitting second information, the second information being used by a power transmission apparatus, which performs wireless power transfer, to determine whether wireless power transfer in the fast charging mode is possible, the second information including information indicating whether it is allowed to align the power transmission apparatus and the power receiving apparatus by using a magnet.

(Method 2)

A communication method for a power transmission apparatus includes a first receiving step of receiving first information indicating whether a power receiving apparatus, which is a target of wireless power transfer, supports a fast charging mode, and a second receiving step of receiving second information, the second information being used by the power transmission apparatus to determine whether wireless power transfer in the fast charging mode is possible, the second information including information indicating whether it is allowed to align the power transmission apparatus and the power receiving apparatus by using a magnet.

(Program)

A program for causing a computer to execute the steps of the communication method according to Method 1 or 2.
The present invention is not limited to the above-described embodiments. Various changes and modifications are applicable without departing from the spirit and scope of the present invention. Therefore, the following claims are attached to show the scope of the present invention.

This application claims the benefit of Japanese Patent Application No. 2023-019402 filed February 10, 2023 and No. 2023-120683 filed July 25, 2023, which are hereby incorporated by reference herein in their entirety.
100    power transmission apparatus
200    power receiving apparatus

**Claims**

1.  A power receiving apparatus comprising:

    a power receiving unit configured to wirelessly receive electric power from a power transmission apparatus; and
    a transmission unit configured to transmit an identification data packet and an extended identification data packet to the power transmission apparatus, the identification data packet containing information that identifies the power receiving apparatus, the extended identification data packet containing information that indicates a power profile.

2.  The power receiving apparatus according to claim 1, wherein the transmission unit is configured to transmit the identification data packet and the extended identification data packet during a configuration phase.

3.  The power receiving apparatus according to claim 1, wherein the information that indicates a power profile includes information related to a magnetic power profile, MPP.

4.  The power receiving apparatus according to claim 3, wherein the magnetic power profile, MPP, has a function of accurately aligning a power transmission coil of the power transmission apparatus and a power receiving coil of the power receiving apparatus by using a magnet of the power transmission apparatus and a magnet of the power receiving apparatus.

5.  A communication method performed by a power receiving apparatus that wirelessly receives electric power from a power transmission apparatus, the communication method comprising:

    transmitting an identification data packet to the power transmission apparatus, the identification data packet containing information that identifies the power receiving apparatus; and
    transmitting an extended identification data packet containing information that indicates a power profile.

6.  The communication method according to claim 5, wherein the identification data packet and the extended identification data packet are transmitted during a configuration phase.

7.  The communication method according to claim 5, wherein the information that indicates a power profile includes information related to a magnetic power profile, MPP.

8.  The communication method according to claim 7, wherein the magnetic power profile, MPP has a function of accurately aligning a power transmission coil of the power transmission apparatus and a power receiving coil of the power receiving apparatus by using a magnet of the power transmission apparatus and a magnet of the power receiving apparatus.

9.  A program for causing a computer to execute the communication method according to claim 5.

# FIG. 1

POWER RECEIVING
APPARATUS — 400

— 200

CHARGING BASE — 300

POWER TRANSMISSION
APPARATUS — 100

# FIG. 2

100

POWER TRANSMISSION APPARATUS

102
POWER SUPPLY UNIT

103
POWER TRANSMISSION UNIT

107

105

106
MEMORY

101
CONTROL UNIT

108

104
FIRST COMMUNICATION UNIT

110
UI UNIT

109
SECOND COMMUNICATION UNIT

# FIG. 3

POWER RECEIVING APPARATUS — 200

- 205
- 213
- 211
- 203 POWER RECEIVING UNIT
- 206 CHARGING UNIT
- 209
- 207 BATTERY
- 210
- 201 CONTROL UNIT
- 208 MEMORY
- 202 UI UNIT
- 212 SECOND COMMUNICATION UNIT
- 204 FIRST COMMUNICATION UNIT

EP 4 664 725 A1

# FIG. 4

## FIG. 5A

## FIG. 5B

# FIG. 6

101

| | |
|---|---|
| **301**<br>COMMUNICATION CONTROL SECTION | **303**<br>MEASURING SECTION |
| **302**<br>POWER TRANSMISSION CONTROL SECTION | **304**<br>SETTING SECTION |
| | **305**<br>STATE DETECTION SECTION |

# FIG. 7

```
                    ┌─────────────┐
                    │    START    │
                    └─────────────┘
                           │
                           ▼
        ┌──────────────────────────────────┐
        │   WAIT FOR POWER RECEIVING        │ ～ S1201
        │     APPARATUS TO BE PLACED        │
        │  (SELECTION PHASE, PING PHASE)    │
        └──────────────────────────────────┘
                           │
                           ▼
        ┌──────────────────────────────────┐
        │  ACQUIRE (RECEIVE) IDENTIFICATION │ ～ S1202
        │    INFORMATION FROM POWER         │
        │       RECEIVING APPARATUS         │
        │          (I&C PHASE)              │
        └──────────────────────────────────┘
                           │
                           ▼
        ┌──────────────────────────────────┐
        │ NEGOTIATE WITH POWER RECEIVING    │ ～ S1203
        │ APPARATUS TO DETERMINE GP         │
        │      (NEGOTIATION PHASE)          │
        └──────────────────────────────────┘
                           │
                           ▼
        ┌──────────────────────────────────┐
        │     PERFORM CALIBRATION           │ ～ S1204
        │      (CALIBRATION PHASE)          │
        └──────────────────────────────────┘
                           │
                           ▼
        ┌──────────────────────────────────┐
        │   TRANSMIT ELECTRIC POWER         │ ～ S1205
        │     UNTIL FULLY CHARGED           │
        │    (POWER TRANSFER PHASE)         │
        └──────────────────────────────────┘
                           │
                           ▼
                    ┌─────────────┐
                    │     END     │
                    └─────────────┘
```

# FIG. 8

START

↓

WAIT FOR POWER TRANSMISSION
APPARATUS TO BE PLACED
(SELECTION PHASE, PING PHASE) — S1301

↓

TRANSMIT IDENTIFICATION
INFORMATION TO POWER
TRANSMISSION APPARATUS
(I&C PHASE) — S1302

↓

NEGOTIATE WITH POWER
TRANSMISSION APPARATUS
TO DETERMINE GP
(NEGOTIATION PHASE) — S1303

↓

PERFORM CALIBRATION
(CALIBRATION PHASE) — S1304

↓

RECEIVE ELECTRIC POWER
UNTIL FULLY CHARGED
(POWER TRANSFER PHASE) — S1305

↓

END

# FIG. 9

FIG. 10

# FIG. 11

# FIG. 12A

r1

r2

V1    L1

L2    V2

# FIG. 12B

r1

r2

I1 or I2

V6 or V7    L1

L2

Open
or
Short

# FIG. 13

# FIG. 14

START

F1401
RECEIVE REQUEST FOR INFORMATION INDICATING
WHETHER FAST CHARGING MODE IS SUPPORTED

F1402
PROVIDE NOTIFICATION THAT FAST CHARGING MODE IS SUPPORTED

F1403
HAS INFORMATION
INDICATING THAT POWER RECEIVING APPARATUS
SUPPORTS FAST CHARGING MODE BEEN
RECEIVED?
No

F1418
HAS
PREDETERMINED TIME
ELAPSED?
No → Yes

Yes

F1404
HAS INFORMATION
TO DETERMINE WHETHER "CONDITIONS FOR
TRANSITIONING TO FAST CHARGING MODE" ARE
SATISFIED BEEN RECEIVED?
No

F1419
HAS
PREDETERMINED TIME
ELAPSED?
No → Yes

Yes

F1405
ARE CONDITIONS
FOR TRANSITIONING TO FAST CHARGING MODE
SATISFIED?
No

Yes

F1406
PROVIDE NOTIFICATION THAT CONDITIONS FOR
TRANSITIONING TO FAST CHARGING MODE ARE SATISFIED

F1407
HAS INFORMATION
THAT REQUESTS TO OPERATE IN FAST CHARGING MODE
BEEN RECEIVED?
No

Yes

F1415
PERFORM NEGOTIATION
OR RENEGOTIATION
CORRESPONDING TO
ELECTRIC POWER
OF BPP OR EPP

F1416
PERFORM CAL OR
ReCAL CORRESPONDING
TO ELECTRIC POWER
OF BPP OR EPP

F1417
START POWER TRANSMISSION
IN ACCORDANCE WITH
BPP OR EPP

F1408
TRANSMIT ACK

F1409
PERFORM NEGOTIATION OR RENEGOTIATION CORRESPONDING
TO ELECTRIC POWER OF FAST CHARGING MODE

F1410
PERFORM CAL OR ReCAL CORRESPONDING TO
ELECTRIC POWER OF FAST CHARGING MODE

F1411
START POWER TRANSMISSION AT LOW LEVEL TO POWER RECEIVING APPARATUS

F1412
IS AUTHENTICATION SUCCESSFUL?
No

Yes

F1413
EXECUTE CONTROL DURING OPERATION IN FAST CHARGING MODE

F1414
START POWER TRANSMISSION IN FAST CHARGING MODE

END

## FIG. 15

# FIG. 16

TX100                                                                 RX200

S1602 — | ← REQUEST INFORMATION INDICATING WHETHER FAST CHARGING MODE IS SUPPORTED — S1601

S1603 — | → PROVIDE NOTIFICATION THAT FAST CHARGING MODE IS SUPPORTED

PROVIDE NOTIFICATION THAT FAST CHARGING MODE IS SUPPORTED ← — S1604

PROVIDE NOTIFICATION OF INFORMATION TO DETERMINE WHETHER "CONDITIONS FOR TRANSITIONING TO FAST CHARGING MODE" ARE SATISFIED ← — S1605

S1606 — ● DETERMINE WHETHER CONDITIONS FOR TRANSITIONING TO FAST CHARGING MODE ARE SATISFIED

S1607 — | → PROVIDE NOTIFICATION THAT CONDITIONS FOR TRANSITIONING TO FAST CHARGING MODE ARE SATISFIED

PROVIDE NOTIFICATION OF REQUEST TO TRANSITION TO FAST CHARGING MODE ← — S1608

S1609 — | → TRANSMIT ACKNOWLEDGE (ACK)

PERFORM NEGOTIATION OR RENEGOTIATION CORRESPONDING TO ELECTRIC POWER OF FAST CHARGING MODE — S1610

PERFORM CAL PROCESS OR ReCAL PROCESS CORRESPONDING TO ELECTRIC POWER OF FAST CHARGING MODE — S1611

PERFORM AUTHENTICATION — S1612

AUTHENTICATION IS SUCCESSFUL ● — S1613

EXECUTE "CONTROL DURING OPERATION IN FAST CHARGING MODE" — S1614

START POWER TRANSMISSION IN FAST CHARGING MODE — S1615

# FIG. 17

START

F1701
START POWER TRANSMISSION IN FAST CHARGING MODE

F1702
HAS INFORMATION TO DETERMINE WHETHER "CONDITIONS FOR TRANSITIONING TO BPP OR EPP" ARE SATISFIED BEEN RECEIVED?

No →

F1703
HAS PREDETERMINED TIME ELAPSED?

No

Yes

Yes

F1704
ARE CONDITIONS FOR TRANSITIONING TO BPP OR EPP SATISFIED?

No →

Yes

F1705
PROVIDE NOTIFICATION THAT CONDITIONS FOR TRANSITIONING TO BPP OR EPP ARE SATISFIED

F1706
HAS INFORMATION THAT REQUEST TO OPERATE IN ACCORDANCE WITH BPP OR EPP BEEN RECEIVED?

No →

Yes

F1707
TRANSMIT ACK

F1708
PERFORM NEGOTIATION OR RENEGOTIATION CORRESPONDING TO ELECTRIC POWER OF BPP OR EPP

F1709
PERFORM CAL OR ReCAL CORRESPONDING TO ELECTRIC POWER OF BPP OR EPP

F1710
EXECUTE CONTROL DURING OPERATION IN ACCORDANCE WITH BPP OR EPP

F1711
START POWER TRANSMISSION IN ACCORDANCE WITH BPP OR EPP

END

# FIG. 18

```
                                    ( START )
                                        │
                                        ▼        ⌐F1801
                            ┌──────────────────────────┐
                            │    START POWER RECEPTION  │
                            │     IN FAST CHARGING MODE │
                            └──────────────────────────┘
                                        │
                                        ▼        ⌐F1802
                            ┌──────────────────────────────────┐
                            │ PROVIDE NOTIFICATION OF INFORMATION TO │
                            │ DETERMINE WHETHER "CONDITIONS FOR      │
                            │ TRANSITIONING TO BPP OR EPP" ARE SATISFIED │
                            └──────────────────────────────────┘
```

No    F1805                              Yes                           F1803
HAS
PREDETERMINED          F1804                                    HAS
Yes   TIME ELAPSED?        HAS                              INFORMATION
                        INFORMATION                No    INDICATING THAT CONDITIONS
                    INDICATING THAT                      FOR TRANSITIONING TO BPP OR
              No  CONDITIONS FOR TRANSITIONING            EPP ARE SATISFIED BEEN
                  TO BPP OR EPP ARE NOT                        RECEIVED?
                      SATISFIED BEEN
                        RECEIVED?                                 │
                                                            Yes  ⌐F1806
                                            ┌──────────────────────────┐
                                            │ PROVIDE NOTIFICATION OF REQUEST │
                                            │   TO TRANSITION TO BPP OR EPP  │
                                            └──────────────────────────┘

No                   F1808                                        F1807
        HAS                                                HAS ACK BEEN
Yes  PREDETERMINED TIME      No                              RECEIVED?
        ELAPSED?                                                  │
                                                            Yes  ⌐F1809
                                            ┌──────────────────────────────┐
                                            │  PERFORM NEGOTIATION OR       │
                                            │ RENEGOTIATION CORRESPONDING TO │
                                            │ ELECTRIC POWER OF BPP OR EPP   │
                                            └──────────────────────────────┘
                                                        │        ⌐F1810
                                            ┌──────────────────────────────┐
                                            │ PERFORM CAL OR ReCAL CORRESPONDING │
                                            │   TO ELECTRIC POWER OF BPP OR EPP  │
                                            └──────────────────────────────┘
                                                        │        ⌐F1811
                                            ┌──────────────────────────────┐
                                            │ EXECUTE CONTROL DURING OPERATION │
                                            │   IN ACCORDANCE WITH BPP OR EPP  │
                                            └──────────────────────────────┘
                                                        │        ⌐F1812
                                            ┌──────────────────────────────┐
                                            │ START POWER RECEPTION IN ACCORDANCE │
                                            │       WITH BPP OR EPP           │
                                            └──────────────────────────────┘
                                                        │
                                                        ▼
                                                    (  END  )

84

# FIG. 19

TX100                                          RX200

S1901 — START POWER TRANSMISSION IN FAST CHARGING MODE

START POWER RECEPTION IN FAST CHARGING MODE — S1902

NOTIFY INFORMATION TO DETERMINE WHETHER "CONDITIONS
FOR TRANSITIONING TO BPP OR EPP" ARE SATISFIED — S1903

S1904 — DETERMINE WHETHER CONDITIONS FOR TRANSITIONING
TO BPP OR EPP ARE SATISFIED

PROVIDE NOTIFICATION OF THAT CONDITIONS FOR
TRANSITIONING TO BPP OR EPP ARE SATISFIED
S1905

PROVIDE NOTIFICATION OF REQUEST
TO TRANSITION TO BPP OR EPP — S1906

S1907 — TRANSMIT ACKNOWLEDGE (ACK)

| PERFORM NEGOTIATION OR RENEGOTIATION CORRESPONDING TO ELECTRIC POWER OF BPP OR EPP | S1908 |

| PERFORM CAL PROCESS OR ReCAL PROCESS CORRESPONDING TO ELECTRIC POWER OF BPP OR EPP | S1909 |

| EXECUTE CONTROL DURING OPERATION IN ACCORDANCE WITH BPP OR EPP | S1910 |

| START POWER TRANSMISSION IN ACCORDANCE WITH BPP OR EPP | S1911 |

## INTERNATIONAL SEARCH REPORT

| International application No. |
| --- |
| **PCT/JP2024/002620** |

**A.    CLASSIFICATION OF SUBJECT MATTER**

*H02J 50/80*(2016.01)i; *H02J 7/00*(2006.01)i; *H02J 50/10*(2016.01)i; *H02J 50/60*(2016.01)i; *H02J 50/90*(2016.01)i
FI:    H02J50/80; H02J50/10; H02J50/60; H02J7/00 301D; H02J50/90

According to International Patent Classification (IPC) or to both national classification and IPC

**B.    FIELDS SEARCHED**

Minimum documentation searched (classification system followed by classification symbols)

H02J50/80; H02J7/00; H02J50/10; H02J50/60; H02J50/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021/246803 A1 (LG ELECTRONICS INC.) 09 December 2021 (2021-12-09) paragraphs [338]-[390], fig. 11-15 | 1-9 |
| A | WO 2022/264760 A1 (CANON KABUSHIKI KAISHA) 22 December 2022 (2022-12-22) entire text, all drawings | 1-9 |
| P, A | WO 2023/249085 A1 (PANASONIC INTELLECTUAL PROPERTY MANAGEMENT CO., LTD.) 28 December 2023 (2023-12-28) paragraph [0015] | 1-9 |

☐ Further documents are listed in the continuation of Box C.    ☑ See patent family annex.

| | | |
| --- | --- | --- |
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
| --- | --- |
| **12 March 2024** | **26 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/002620**

| Patent document cited in search report | | | Publication date (day/month/year) | Patent family member(s) | | | Publication date (day/month/year) |
|---|---|---|---|---|---|---|---|
| WO | 2021/246803 | A1 | 09 December 2021 | US paragraphs [0335]-[0387], fig. 11-15 | 2023/0246484 | A1 | |
| | | | | EP | 4164089 | A1 | |
| | | | | KR 10-2023-0019844 | | A | |
| WO | 2022/264760 | A1 | 22 December 2022 | JP | 2022-191155 | A | |
| WO | 2023/249085 | A1 | 28 December 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018108014 A
- JP 2023019402 A
- JP 2023120683 A